# EUROPÄISCHE PATENTSCHRIFT

(11) **EP 3 695 051 B1**
(45) Veröffentlichungstag und Bekanntmachung des Hinweises auf die Patenterteilung: **19.06.2024**
(21) Anmeldenummer: 18785540.8
(22) Anmeldetag: 01.10.2018
(51) Int. Cl.: D21H 17/34, D21H 17/37, D21H 17/42, D21H 17/45, D21H 21/18, D21H 21/10, D21H 17/55

(54) **VERFAHREN ZUR HERSTELLUNG VON PAPIER ODER KARTON**
METHOD FOR FORMING PAPER OR CARDBOARD
PROCÉDÉ DE FABRICATION À PARTIR DU PAPIER OU DU CARTON

(30) Priorität: 11.10.2017 EP 17196027
(43) Veröffentlichungstag der Anmeldung: 19.08.2020
(73) Patentinhaber: Solenis Technologies Cayman, L.P., KY1-1104, Cayman (KY)
(72) Erfinder: HAMERS, Christoph, 67056 Ludwigshafen (DE); HAEHNLE, Hans-Joachim, 67056 Ludwigshafen (DE); PAHNKE, Kai, 67056 Ludwigshafen (DE); ESSER, Anton, 67056 Ludwigshafen (DE)
(74) Vertreter: LKGlobal UK Ltd.
(86) Internationale Anmeldenummer: PCT/EP2018/076672
(87) Internationale Veröffentlichungsnummer: WO 2019/072616

(56) Entgegenhaltungen:
- EP-A2- 0 216 387
- WO-A1-2009/004078
- WO-A1-2017/021483
- US-A1- 2008 156 448

## Beschreibung

Die Erfindung betrifft ein Verfahren zur Herstellung von Papier oder Karton umfassend das Zugeben eines Polymer P zu einer wässrigen Faserstoffsuspension, das Entwässern dieser wässrigen Faserstoffsuspension enthaltend Polymer P auf einer wasserdurchlässigen Unterlage zu einem nassen Papiergefüge mit einem Trockengehalt zwischen 18,5 Gew.-% und 25 Gew.-% und das weitere Entwässern des nassen Papiergefüges zu einem Papier oder Karton. Das erhaltene Papier oder Karton besitzt eine gute Trockenfestigkeit. Weitere Gegenstände der Erfindung sind ein nach diesem Verfahren erhältliches Papier oder Karton sowie das Polymer P.

Die nachfolgenden Trends in der heutigen Papierindustrie haben einen zum Teil stark negativen Einfluss auf die Trockenfestigkeit eines Papiers oder Kartons. Die Recyclingraten von Altpapier steigen weiter an. Damit einher gehen kürzere Cellulosefasern und generell ist der Einsatz von billigen Rohstoffen attraktiv. Die Reduktion des Flächengewichts eines Papiers oder Kartons zur Rohstoffeinsparung ist ein beständiges Thema. Die Wasserkreisläufe in den Papiermaschinen werden fortschreitend geschlossen. Verfahren zur Herstellung von Papier oder Karton, die für eine gute Trockenfestigkeit des erhaltenen Papiers oder Kartons sorgen, sind daher interessant.

DE 19815946 A1 zeigt Polymere, die durch radikalisch initiierte Polymerisation von N-Vinylamiden und optional monoethylenisch ungesättigten Carbonsäuren mit 3 bis 8 C Atomen, zum Beispiel Acrylsäure oder Maleinanhyrid, sowie optional sonstiger copolymerisierbarer Comonomere, z.B. Styrol, und anschliessendem Hydrolysierens der einpolymerisierten Amidgruppen durch Natronlauge erhalten werden. Die Anwendung dieser Polymere erfolgt in einer Nachgerbung von Chromleder zu Schuhoberleder.

DE 3506832 A1 zeigt in den Beispielen Papierblattherstellung durch Entwässerung von wässrigen Faserstoffsuspensionen ohne Zusatzstoff, durch Entwässerung von wässrigen Faserstoffsuspensionen unter vorheriger Zugabe von kationischen Polymeren und die Entwässerung von wässrigen Faserstoffsuspensionen, denen zuvor ein kationisches Polymer und ein anionisches Polymer mit Carbonsäuregruppen zugesetzt wurde. Die kationischen Polymere sind dabei Polyethylenimin, Poly(dimethyldiallylammoniumchlorid), ein mit Epichlorhydrin vernetztes Kondensat aus Adipinsäure und Diethylentriamin, ein Poly(N-vinylimidazol) und ein Polyvinylamin. Die erfinderische Lehre ist die Erhöhung der Trockenfestigkeit durch die Zugabe einer Kombination eines kationischen Polymers und eines anionischen Polymers mit Carbonsäuregruppen.

WO 2004/061235 A1 zeigt als erfinderische Lehre die Erhöhung von Papierfestigkeitswerten von hergestellten Papierblättern, bei deren Herstellung der wässrigen Faserstoffsuspension vor dem Entwässren ein teilweise hydrolysiertes Poly(N-vinylformamid) und ein zweites Polymer zugegeben wird. Das zweite Polymer ist ein kationisches glyoxyliertes Polyacrylamid oder eine anionische Carboxymethylcellulose.

DE 10 2004 056551 A1 zeigt als erfinderische Lehre die Erhöhung der Trockenfestigkeit von hergestellten Papierblättern, bei denen einer Faserstoffsuspension vor dem Entwässern ein zumindest teilweise hydrolysiertes Poly(N-vinylformamid) und ein anionisches Copolymer enthaltend zugegeben wird. Das anionische Copolymer ist dabei erhalten durch Copolymerisation von 30% Acrylsäure und 70% N-Vinylformamid.

US 2008/0196851 A1 zeigt als erfinderische Lehre die Erhöhung der Trockenfestigkeit von hergestellten Papierblättern, bei denen einer Faserstoffsuspension vor dem Entwässern sowohl ein vinylaminenthaltendes Copolymer, das durch Hofmann-Abbau eines Acrylamidcopolymers erhalten wird, als auch ein anionisches Polymer zugesetzt wird.

Die WO 2017021483 A1 beschreibt ein Verfahren zur Herstellung von Papier und Karton mit den Schritten Bereitstellen einer wässrigen Suspension enthaltend Füllstoff, mindestens ein wasserlösliches amphoteres Polymer und Mikropartikel; Zugeben der wässrigen Suspension zu einem Papiermaterial, Entwässern des erhaltenen Papiermaterials, wodurch Blätter in der Siebpartie gebildet werden, bis der Trockenmassegehalt des Papierblatts mindestens 18 Gew.-% beträgt; und anschließendes Pressen und Trocknen des Papierblatts.

Die EP 0216387 A2 beschreibt ein Verfahren zur Herstellung von Vinylamin-Einheiten einpolymerisiert enthaltenden wasserlöslichen Copolymerisaten durch Copolymerisieren von a) 95 bis 10 Mol-% N-Vinylformamid und (b) 5 bis 90 Mol-% eines ethylenisch ungesättigten Monomeren aus der Gruppe Vinylacetat, Vinylpropionat, C1- bis C4-Alkylvinylether, der Ester, Nitrile und Amide von Acrylsäure und Methacrylsäure und N-Vinylpyrrolidon und anschließendes Abspalten von 30 bis 100 Mol-% der Formylgruppen aus dem Copolymerisat. Die Copolymerisate werden bei der Herstellung von Papier zur Erhöhung der Trocken- und Naßfestigkeit des Papiers verwendet.

Die WO 2009004078 A1 beschreibt wässrige Suspensionen feinteiliger Füllstoffe, die zumindest teilweise mit einer Zusammensetzung aus mindestens einem wasserlöslichen amphoteren Copolymer und mindestens einer gequollenen Stärke beschichtet sind.

Die US 2008156448 A1 beschreibt ein Verfahren zur Herstellung eines Bogens aus Papier und/oder Pappe und dergleichen umfasst vor dem Formen des Bogens das Hinzufügen von mindestens drei Trockenfestmitteln zur Fasersuspension, getrennt oder gemischt, in beliebiger Reihenfolge der Einführung in einen oder mehrere Einspritzpunkte: ein erstes Mittel, das einem (Co)polymer mit einer kationischen Füllstoffdichte von mehr als 1 meq/g entspricht und primäre Aminfunktionen aufweist; ein zweites Mittel, das einem synthetischen organischen (Co)polymer mit einer kationischen Füllstoffdichte von mehr als 0,1 meq/g entspricht; und ein drittes Mittel, das einem (Co)polymer mit einer anionischen Füllstoffdichte von mehr als 0,1 meq/g entspricht.

Es besteht Bedarf an weiteren Verfahren zur Herstellung von Papier oder Karton, deren erhaltenes Papier oder Karton eine gute Trockenfestigkeit aufweist.

Gefunden wurde ein Verfahren zur Herstellung von Papier oder Karton, enthaltend die Schritte
(A) Zugeben von einem wasserlöslichen Polymer P zu einer ersten wässrigen Faserstoffsuspension, die einen Trockengehalt zwischen 0, 1 Gew.-% und 6 Gew.-% aufweist, wodurch eine zweite wässrige Faserstoffsuspension enthaltend Polymer P entsteht, wobei das Polymer P erhältlich ist durch
   - radikalisches Polymerisieren zu einem Polymer V von
      (i) 33 bis 83 mol% eines Monomers der Formel I 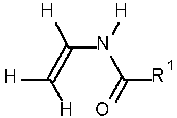 in der R¹= H oder C₁-C₆-Alkyl bedeutet,
      (ii) 6 bis 56 mol% Diallyldimethylammoniumchlorid, Diallyldiethylammonium- chlorid oder einer Salzform eines monoethylenisch ungesättigten Monomers mit einem quaternierten Stickstoff als einziger ladungstragender Gruppe bei einem pH-Wert von 7,
      (iii) 11 bis 61 mol% einer monoethylenisch ungesättigten Carbonsäure, einer monoethylenisch ungesättigten Sulfonsäure oder einer monoethylenisch ungesättigten Phosphonsäure, oder deren Salzformen,
      (iv) 0 bis 50 mol% eines oder mehrerer ethylenisch ungesättigter Monomere, die von einem Monomer (i), (ii) und (iii) verschieden sind,
      wobei die Gesamtmenge aller Monomere (i), (ii), (iii) und (iv) 100 mol% beträgt, und
   - Hydrolysieren der N-C(=O)R¹-Gruppen der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I,
(B) Entwässern der zweiten wässrigen Faserstoffsuspension enthaltend Polymer P auf einer wasserdurchlässigen Unterlage zu einem nassen Papiergefüge, das einen Trockengehalt zwischen 18,5 Gew.% und 25 Gew.-% aufweist,
(C) Entwässern des nassen Papiergefüges, wodurch das Papier oder der Karton entsteht.

Unter Trockengehalt wird hierin das Verhältnis der Masse einer Probe nach Trocknung zu der Masse der Probe vor Trocknung ausgedrückt in Gewichtsprozentwerten verstanden. Bevorzugt wird der Trockengehalt bestimmt durch Trocknung bei 105°C bis zur Massenkontanz. Dazu erfolgt die Trocknung bei 105°C (± 2°C) in einem Trockenschrank, bis Massenkonstanz erreicht ist. Massenkonstanz ist hierin erreicht, wenn sich bei Trockengehalten von 1 bis 100% die gerundete erste Kommastelle des Prozentwertes nicht mehr ändert und bei Trockengehalten von 0 bis unter 1% die gerundete zweite Kommastelle des Prozentwertes sich nicht mehr ändert. Die Trocknung erfolgt bei Umgebungsdruck, gegebenenfalls 101,32 KPa, ohne dass eine Korrektur für eine Abweichung, die sich durch Wetter und Meereshöhe ergibt, vorgenommen wird. Im Beispielsteil finden sich unter Trockengehaltsbestimmung noch Hinweise zur praktischen Durchführung.

Im Schritt (A) wird unter erster wässriger Faserstoffsuspension eine Zusammensetzung enthaltend (a-a) Wasser und (a-b) Faserstoff, der Cellulosefasern enthält, verstanden. Eine alternative Bezeichnung für Faserstoffsuspension ist Papierbrei.

Zum Erhalt der ersten wässrigen Faserstoffsuspension können mechanische und/oder chemische Verfahren angewandt werden. Beispielsweise ist das Mahlen einer wässrigen Faserstoffsuspension ein mechanisches Verfahren zum Kürzen von Fasern und im Falle von Cellulosefasern auch zum Defibrillieren der Fasern. Die Entwässerungsfähigkeit der wässrigen Faserstoffsuspension wird durch den erzielten Mahlgrad mitbestimmt. Eine Methode zur Messung des Mahlgrads einer Faserstoffsuspension ist die Bestimmung der Entwässerungskinetik nach Schopper Riegler in Einheiten Grad Schopper Riegler (°SR).

Als Faserstoff können native und/oder zurückgewonnene Fasern eingesetzt werden. Verwendung finden können alle in der Papierindustrie üblicherweise eingesetzten Fasern aus Holz oder aus Einjahrespflanzen. Geeignete Einjahrespflanzen zur Herstellung von Faserstoffen sind beispielsweise Reis, Weizen, Zuckerrohr und Kenaf. Zu Holzstoff, z. B. aus Nadel- oder Laubhölzern, gehören beispielsweise Holzschliff, thermomechanischer Stoff (TMP), chemo-thermomechanischer Stoff (CTMP), Druckschliff, Halbzellstoff, Hochausbeute-Zellstoff und Refiner Mechanical Pulp (RMP). Grobschliff-Holzstoff hat typischerweise einen Mahlgrad von 40-60 °SR gegenüber Normalschliff-Holzstoff mit 60-75 °SR und Feinschliff-Holzstoff mit 70-80 °SR. Zu Zellstoffen, z. B. aus Nadel- oder Laubhölzern, gehören die chemisch aufgeschlossen Sulfat-, Sulfit- oder Natronzellstoffe. Zellstoff kann weiterhin gebleicht oder ungebleicht sein. Bevorzugt wird ungebleichter Zellstoff, der auch als ungebleichter Kraftzellstoff bezeichnet wird. Ungemahlener Zellstoff hat typischerweise 13-17 °SR gegenüber niedrig oder mittel gemahlenen Zellstoff mit 20-40 °SR und hoch gemahlenem Zellstoff mit 50-60 °SR. Zurückgewonnene Fasern können beispielsweise aus Altpapier stammen. Das Altpapier kann dabei optional zuvor noch einem Deinking-Prozess unterworfen sein. Gemischtes Altpapier kann typischerweise ungefähr 40 °SR aufweisen gegenüber Altpapier aus einem Deinking-Prozess mit rund 60 °SR. Zurückgewonnene Fasern aus Altpapier können alleine oder in Mischung mit anderen, insbesondere nativen Fasern eingesetzt werden.

Bevorzugt ist ein Verfahren, in dem die erste wässerige Faserstoffsuspension eine Entwässerungskinetik nach Schopper Riegler zwischen 13 und 70 °SR aufweist, sehr bevorzugt zwischen 20 und 60°SR und besonders bevorzugt zwischen 30 und 50 °SR.

Die erste wässrige Faserstoffsuspension kann beispielsweise durch das Recycling von bestehendem Papier oder Karton erhalten werden, indem beispielsweise Altpapier in einem Pulper zusammen mit Wasser solange mechanisch behandelt wird, bis die wässrige Faserstoffsuspension die gewünschte Konsistenz hat. Ein anderes Beispiel für die Kombination zweier Faserquellen ist das Mischen einer primären Faserstoffsuspension mit zurückgeführtem Ausschuss eines gestrichenen Papiers, das unter Einsatz der primären Faserstoffsuspension hergestellt wird.

Die erste wässrige Faserstoffsuspension kann neben Wasser (a-a) und Faserstoff (a-b) weitere Bestandteile enthalten, die ihr gegebenenfalls bewusst zugegeben werden oder gegebenenfalls durch Einsatz von Altpapier oder bestehendem Papier vorhanden sind.

Bei einem Trockengehalt von mehr als 1,5 Gew.-% bis 6 Gew.-% bezogen auf die erste wässrige Faserstoffsuspension (entspricht in etwa einer Faserstoffkonzentration von mehr als 15 bis 60 g/L sofern fast ausschliesslich Faserstoff zugegen ist), bevorzugt von 2,0 Gew.-% bis 4,0 Gew.%, wird hierin von Dickstoff gesprochen. Unterschieden wird hierin ein üblicherweise als Dünnstoff bezeichneter Trockengehalt von 0,1 Gew.-% bis 1,5 Gew.-% bezogen auf die wässrige Faserstoffsuspension (entspricht in etwa einer Faserstoffkonzentration von 1 bis 15 g/L sofern fast ausschliesslich Faserstoff zugegen ist), insbesondere 0,3 Gew.-% bis 1,4 Gew.-%. Der Trockengehalt bzw. das Trockengewicht einer wässrigen Faserstoffsuspension umfasst alle Bestandteile, die nicht flüchtig sind bzw. bevorzugt bei der Trockengehaltsbestimmung durch Trocknung bei 105°C bis zur Massenkonstanz nicht flüchtig sind.

Der Trockengehalt der ersten wässrigen Faserstoffsuspension liegt bevorzugt zwischen 0,11 Gew.-% und 5 Gew.-%, sehr bevorzugt zwischen 0,12 Gew.-% und 4 Gew.-%, besonders bevorzugt zwischen 0,13 Gew.-% und 3 Gew.-%, 2 Gew.-%, 1 Gew.-%, 0,6 Gew.-% oder 0,35 Gew.-% als Obergrenze und ganz besonders bevorzugt zwischen 0,14 Gew.-% und 0,30 Gew.-%.

Bevorzugt wird das Polymer P im Schritt (A) zu einer ersten Faserstoffsuspension, deren Trockengehalt grösser als 1,5 Gew.-% und bis zu 6,0 Gew.-% ist, zugegeben. Sehr bevorzugt wird die entstandene zweite Faserstoffsuspension enthaltend Polymer P danach auf einen Trockengehalt von zwischen 0,1 Gew.-% und bis zu 1,5 Gew.-% verdünnt. Bevorzugt wird das Polymer P im Schritt (A) zu einer ersten Faserstoffsuspension, deren Trockengehalt zwischen 0,1 Gew.-% und bis zu 1,5 Gew.-% ist, zugegeben.

Nach dem Zugeben des Polymer P zur ersten wässrigen Faserstoffsuspension wird mit dem Entwässern im Schritt (B) bevorzugt 0,5 Sekunden bis 2 Stunden gewartet, sehr bevorzugt 1,0 Sekunden bis 15 Minuten und besonders bevorzugt 2 bis 20 Sekunden. Somit ist eine Einwirkzeit des Polymer P gewährleistet.

Bevorzugt ist ein Verfahren, bei dem die Menge an zugegebenem Polymer P 0,01 bis 6,0 Gew.-% bezogen auf den Trockengehalt der ersten wässrigen Faserstoffsuspension beträgt. Die Menge an Polymer ist dabei der Festgehalt an Polymer. Sehr bevorzugt ist eine Menge von 0,02 bis 5,0 Gew.-%, besonders bevorzugt 0,03 bis 1,0 Gew.-%, ganz besonders bevorzugt 0,04 bis 0,8 Gew.-%, speziell bevorzugt 0,06 bis 0,6 Gew.-% und ganz speziell bevorzugt 0,1 bis 0,5 Gew.-%.

Wasserlöslich ist ein Polymer P, wenn seine Löslichkeit in Wasser unter Normalbedingungen (20 °C, 1013 mbar) und pH 7,0 mindestens 5 Gew.-%, vorzugsweise mindestens 10 Gew.-%. beträgt. Die Gewichtsprozente beziehen sich dabei auf Festgehalt an Polymer P. Der Festgehalt an Polymer P wird nach dessen Herstellung als wässrige Polymerlösung bestimmt. Eine Probe der Polymerlösung in einem Blechdeckel wird dabei in einem Umlufttrockenschrank bei 140°C für 120 Minuten getrocknet. Die Trocknung erfolgt bei Umgebungsdruck, gegebenenfalls 101,32 KPa, ohne dass eine Korrektur für eine Abweichung, die sich durch Wetter und Meereshöhe ergibt, vorgenommen wird.

Die Vorstufe des Polymers P ist das nichthydrolysierte Polymer V, das durch radikalisches Polymerisation der Monomere (i), (ii), (iii) und optional (iv) erhältlich ist.

Für das Polymerisieren der Monomere (i), (ii), (iii) und optional (iv) zum Polymer V stehen Lösungs-, Fällungs-, Suspensions- oder Emulsionspolymerisation zur Verfügung. Bevorzugt ist die Lösungspolymerisation in wässrigen Medien. Geeignete wässrige Medien sind Wasser und Gemische aus Wasser und mindestens einem wassermischbaren Lösungsmittel, z.B. einem Alkohol. Beispiele für einen Alkohol sind Methanol, Ethanol, n-Propanol, Ethylenglycol oder Propylenglycol. Die Polymerisation erfolgt radikalisch, beispielsweise durch Verwendung radikalischer Polymerisationsinitiatoren, zum Beispiel von Peroxiden, Hydroperoxiden, sogenannter Redoxkatalysatoren oder von in Radikale zerfallenden Azoverbindungen. Beispiel für Peroxide sind Alkali- oder Ammoniumperoxidisulfate, Diacetylperoxid, Dibenzoylperoxid, Succinylperoxid, Di-tert.-butylperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)-peroxid, Didecanoylperoxid, Dioctanoylperoxid, Dilauroylperoxid, tert.-Butylperisobutyrat, tert-Butylperacetat oder Di-tert-Amylperoxid. Ein Beispiel für Hydroperoxid ist tert-Butylhydroperoxid. Beispiele für in Radikale zerfallende Azoverbindungen sind Azo-bis-isobutyronitril, Azo-bis-(2-amidonopropan)dihydrochlorid oder 2-2'-Azo-bis-(2-methyl-butyronitril). Beispiele für sogenannte Redoxkatalysatoren sind Ascorbinsäure / Eisen(II)sulfat / Natriumperoxodisulfat, tert-Butylhydroperoxid / Natriumdisulfit, tert.-Butylhydroperoxid / Natriumhydroxymethansulfinat oder H₂O₂ / Cul.

Das Polymerisieren wird beispielsweise in Wasser oder einem wasserhaltigen Gemisch als Lösungsmittel in einem Temperaturbereich von 30 bis 150°C, bevorzugt 40 bis 110°C durchgeführt, wobei unter Umgebungsdruck, vermindertem oder erhöhtem Druck gearbeitet werden kann. Für die Lösungspolymerisation wird ein in Wasser löslicher Polymerisationsinitiator gewählt, beispielsweise 2,2'-Azobis(2-methylpropionamidin)dihydrochlorid.

Bei dem Polymerisieren der Monomere (i), (ii), (iii) und optional (iv) zum Polymer V können Polymerisationsregler der Reaktion zugesetzt werden. Eingesetzt werden typischerweise 0,001 bis 5 Mol-% bezogen auf die Gesamtmenge aller Monomere (i), (ii), (iii) und (iv). Polymerisationsregler sind literaturbekannt und beispielsweise Schwefelverbindungen, Natriumhypophosphit, Ameisensäure oder Tribromchlormethan. Einzelne Beispiele für Schwefelverbindungen sind Mercaptoethanol, 2-Ethylhexyl-thioglycolat, Thioglycolsäure und Dodecylmercaptan.

Bevorzugt hat das Polymer V ein gewichtsmittleres Molekulargewicht Mw zwischen 75000 und 5000000 Dalton. Sehr bevorzugt hat das Polymer P ein gewichtsmittleres Molekulargewicht Mw zwischen 100000 und 4500000 Dalton, besonders bevorzugt zwischen 180000 und 2500000 Dalton und speziell bevorzugt zwischen 210000 und 1500000 Dalton. Das gewichtsmittlere Molekulargewicht kann mit statischer Lichtstreuung bestimmt werden, beispielsweise bei einem pH-Wert von 9,0 in einer 1000 millimolaren Kochsalzlösung.

Beispiele für Monomere (i) der Formel I sind N-Vinylformamid (R¹ = H), N-Vinylacetamid (R¹ = C₁-Alkyl), N-Vinylpropionamid (R¹ = C₂-Alkyl) und N-Vinylbutyramid (R¹ = C₃-Alkyl). Die C₃-C₆-Alkyle können linear oder verzweigt sein. Ein Beispiel für C₁-C₆-Alkyl ist Methyl, Ethyl, n-Propyl, 1-Methylethyl, n-Butyl, 2-Methylpropyl, 3-Methylpropyl, 1,1-Dimethylethyl, n-Pentyl, 2-Methylbutyl, 3-Methylbutyl, 2,2-Dimethylpropyl oder n-Hexyl. R¹ ist bevorzugt H oder C₁-C₄-Alkyl, sehr bevorzugt H oder C₁-C₂-Alkyl, besonders bevorzugt H oder C₁-Alkyl und ganz besonders bevorzugt H, d.h. das Monomer (i) ist N-Vinylformamid. Mit einem Monomer der Formel I in Einzahl ist hierein auch ein Gemisch an verschiedenen Monomeren der Formel I als Monomer (i) umfasst. Bevorzugt liegt der zahlenmässige Anteil des Monomers mit R¹ = H an der Gesamtzahl aller Monomeren (i) der Formel I bei 85 bis 100 %, sehr bevorzugt bei 90 bis 100%, besonders bevorzugt bei 95 bis 100% und ganz besonders bevorzugt bei 99 bis 100%.

Die Gesamtmenge aller Monomere (i) ist bevorzugt 33 bis 65 mol% bezogen auf alle zum Erhalt des Polymer V polymerisierten Monomere, d.h. alle Monomere (i), (ii), (iii) und optional (iv), sehr bevorzugt 34 bis 63 mol%, besonders bevorzugt 35 bis 61 mol% und ganz besonders 37 bis 55 mol%. Bei einer Untergrenze von 34 mol% für das Monomer (i) reduziert sich die Obergrenze für das Monomer (ii) auf 55 mol% und die Obergrenze für das Monomer (iii) auf 60 mol%. Bei einer Untergrenze von 35 mol% bzw. 37 mol% für das Monomer (i) reduziert sich die Obergrenze für das Monomer (ii) auf 54 mol% bzw. 52 mol% und die Obergrenze für das Monomer (iii) auf 59 mol% bzw. 57 mol%. Dieses Prinzip der Anpassung der Obergrenzen der anderen Monomere im Falle einer Erhöhung der Untergrenze eines Monomeren findet hierein auch entsprechend für die Monomere (ii), (iii) und (iv) Anwendung, um die Bedingung zu erfüllen, dass die Summe aller Monomeren (i), (ii), (iii) und optional (iv) nicht 100 mol% übersteigen kann.

Ein ethylenisch ungesättigtes Monomer ist hierin ein Monomer, das mindestens eine C₂-Einheit enthält, deren zwei Kohlenstoffatome durch eine Kohlenstoff-Kohlenstoff-Doppelbindung verbunden sind. Im Falle von Wasserstoffatomen als einzigen Substituenten ist dies Ethylen. Im Falle der Substitution mit 3 Wasserstoffatomen liegt ein Vinylderivat vor. Im Falle der Substitution mit zwei Wasserstoffatomen liegt ein E/Z-Isomer oder ein Ethen-1,1-diyl-Derivat vor. Monoethylenisch ungesättigtes Monomer bedeutet hierin, dass genau eine C₂-Einheit im Monomer vorhanden ist.

Salzform bedeutet im Falle einer kationisch geladenen Gruppe eines angegebenen Moleküls oder einer Molekülklasse, dass ein entsprechendes Anion für die Ladungsneutralität sorgt. Solche Anionen sind beispielsweise Chlorid, Bromid, Hydrogensulfat, Sulfat, Hydrogenphosphat, Methylsulfat, Acetat oder Formiat. Bevorzugt ist Chlorid und Hydrogensulfat, besonders bevorzugt Chlorid. Im Falle einer anionisch geladenen Gruppe einer angegebenen Verbindung oder Verbindungsklasse bedeutet Salzform, dass ein entsprechendes Kation für die Ladungsneutralität sorgt. Solche Kationen sind beispielsweise Kationen der Alkalimetalle, Erdalkalimetalle, Ammoniak, Alkylamine oder Alkanolamine. Bevorzugt sind Li⁺, Na⁺, K⁺, Rb⁺, Cs⁺, Mg²⁺, Ca²⁺, Sr²⁺, Ba²⁺ oder NH₄⁺. Sehr bevorzugt sind Li⁺, Na⁺, K⁺, Mg²⁺, Ca²⁺ oder NH₄⁺, besonderes bevorzugt Na⁺, K⁺, Ca²⁺ oder NH₄⁺, ganz besonders bevorzugt Na⁺, K⁺ oder NH₄⁺, speziell bevorzugt Na⁺ oder K⁺ und ganz speziell bevorzugt Na⁺.

Das Monomer (ii) umfasst auch ein Gemisch von unter das Monomer (ii) fallender Einzelmonomere.

Beispiele für ein Monomer (ii), das eine Salzform eines monoethylenisch ungesättigten Monomers mit einem quaternierten Stickstoff als einziger ladungstragender Gruppe bei einem pH-Wert von 7 ist, sind eine Salzform eines N-Alkyl-N'-vinylimidazoliums, eine Salzform eines N-alkylierten Vinylpyridiniums, eine Salzform eines Acrylamidoalkyltrialkylammoniums oder eine Salzform eines Methacrylamidoalkyltrialkylammoniums. Eine Salzform eines N-Alkyl-N'-vinylimidazoliums ist beispielsweise 1-Methyl-3-vinyl-imidazol-1-iumchlorid, 1-Methyl-3-vinyl-imidazol-1-iummethylsulfat oder 1-Ethyl-3-vinyl-imidazol-1-iumchlorid. Eine Salzform eines N-alkylierten Vinylpyridiniums ist beispielsweise 1-Methyl-4-vinyl-pyridin-1-iumchlorid, 1-Methyl-3-vinylpyridin-1-iumchlorid, 1-Methyl-2-vinyl-pyridin-1-iumchlorid oder 1-Ethyl-4-vinyl-pyridin-1-iumchlorid. Eine Salzform eines Acrylamidoalkyltrialkylammoniums ist beispielsweise Acrylamidoethyltrimethylammoniumchlorid (Trimethyl-[2-(prop-2-enoylamino)ethyl]ammoniumchlorid), Acrylamidoethyldiethylmethylammoniumchlorid (Diethyl-methyl-[3-(prop-2-enoylamino)ethyl]ammoniumchlorid), Acrylamidopropyltrimethylammoniumchlorid (Trimethyl-[3-(prop-2-enoylamino)propyl]ammoniumchlorid) oder Acrylamidopropyldiethylmethylammoniumchlorid (Diethylmethyl-[3-(prop-2-enoylamino)propyl]ammoniumchlorid). Eine Salzform eines Methacrylamidoalkyltrialkylammoniums ist beispielsweise Methacrylamidoethyltrimethylammoniumchlorid (Trimethyl-[2-(2-methylprop-2-enoylamino)ethyl]ammoniumchlorid), Methacrylamidoethyldiethylmethylammoniumchlorid (Diethyl-methyl-[3-(2-methylprop-2-enoylamino)ethyl]ammoniumchlorid), Methacrylamidopropyltrimethylammoniumchlorid (Trimethyl-[3-(2-methylprop-2-enoylamino)propyl]ammoniumchlorid) oder Methacrylamidopropyldiethylmethylammoniumchlorid (Diethyl-methyl-[3-(2-methylprop-2-enoylamino)propyl]ammoniumchlorid).

Die Salzform eines monoethylenisch ungesättigten Monomers mit einem quaternierten Stickstoff als einziger ladungstragender Gruppe bei einem pH-Wert von 7 hat ihren quaternierten Stickstoff bevorzugt durch Reaktion mit einem Quaternisierungmittel erhalten, wobei das Quaternierungsmittel Dimethylsulfat, Diethylsulfat, Methylchlorid, Ethylchlorid oder Benzylchlorid ist. Besonders bevorzugt ist Methylchlorid.

Das Monomer (ii) ist bevorzugt Diallyldimethylammoniumchlorid, Diallyldiethylammoniumchlorid, eine Salzform eines N-Alkyl-N'-vinylimidazoliums, eine Salzform eines N-alkylierten Vinylpyridiniums, eine Salzform eines Acrylamidoalkyltrialkylammoniums oder eine Salzform eines Methacrylamidoalkyltrialkylammoniums. Sehr bevorzugt ist Diallyldimethylammoniumchlorid, Diallyldiethylammoniumchlorid, eine Salzform eines N-Alkyl-N'-vinylimidazoliums, eine Salzform eines Acrylamidoalkyltrialkylammoniums oder eine Salzform eines Methacrylamidoalkyltrialkylammoniums. Besonders bevorzugt ist Diallyldimethylammoniumchlorid, Diallyldiethylammoniumchlorid, eine Salzform eines N-Alkyl-N'-vinylimidazoliums, Acrylamidoethyltrimethylammoniumchlorid oder Acrylamidopropyltrimethylammoniumchlorid. Ganz besonders bevorzugt ist Diallyldimethylammoniumchlorid, Diallyldiethylammoniumchlorid, Acrylamidoethyltrimethylammoniumchlorid oder Acrylamidopropyltrimethylammoniumchlorid. Speziell bevorzugt ist Diallyldimethylammoniumchlorid.

Die Gesamtmenge aller Monomere (ii) ist bevorzugt 6 bis 45 mol% bezogen auf alle zum Erhalt des Polymer V polymerisierten Monomere, d.h. alle Monomere (i), (ii), (iii) und optional (iv), sehr bevorzugt 8 bis 42 mol% und besonders bevorzugt 10 bis 40 mol%. Ganz besonders bevorzugt ist 10 bis 35 mol%. Bei einer Untergrenze von 8 mol% bzw. 10 mol% für das Monomer (ii) reduziert sich die Obergrenze für das Monomer (i) auf 81 mol% bzw. 79 mol% und die Obergrenze für das Monomer (iii) auf 59 mol% bzw. 57 mol%.

Das Monomer (iii) umfasst auch ein Gemisch von unter das Monomer (iii) fallender Einzelmonomere.

Beispiele für ein Monomer (iii), das eine monoethylenisch ungesättigte Carbonsäure oder deren Salzform ist, sind monoethylenisch ungesättigte C₃ bis Cs Mono- oder Dicarbonsäuren oder deren Salzform. Beispiele sind Acrylsäure, Natriumacrylat, Methacrylsäure, Natriummethacrylat, Dimethacrylsäure, Ethacrylsäure, Maleinsäure, Fumarsäure, Itaconsäure, Mesaconsäure, Citraconsäure, Methylenmalonsäure, Allylessigsäure, Vinylessigsäure oder Crotonsäure.

Beispiele für ein Monomer (iii), das eine monoethylenisch ungesättigte Sulfonsäure oder deren Salzform ist, sind Vinylsulfonsäure, Acrylamido-2-methyl-propansulfonsäure, Methacrylamido-2-methyl-propansulfonsäure, Allylsulfonsäure, Methallysulfonsäure, Sulfoethylacrylat, Sulfoethylmethacrylat, Sulfopropylacrylat, Sulfopropylmethacrylat, 2-Hydroxy-3-methacryloxypropylsulfonsäure oder Styrolsulfonsäure.

Beispiele für ein Monomer (iii), das eine monoethylenisch ungesättigte Phosphonsäure oder deren Salzform ist, sind Vinylphosphonsäure Vinylphosphonsäuremonomethylester, Allylphosphonsäure, Allylphosphonsäuremonomethylester, Acrylamidomethylpropylphosphonsäure oder Acrylamidomethylenphosphonsäure.

Das Monomer (iii) ist bevorzugt eine monoethylenisch ungesättigte C₃ bis Cs Mono- oder Dicarbonsäure, eine monoethylenisch ungesättigte Sulfonsäure oder Vinylphoshonsäure oder deren Salzform. Sehr bevorzugt ist das Monomer (iii) eine monoethylenisch ungesättigte C₃ bis Cs Mono- oder Dicarbonsäure, Acrylamido-2-methyl-propansulfonsäure, Methacrylamido-2-methylpropansulfonsäure oder Vinylphosphonsäure oder deren Salzform. Besonders bevorzugt ist eine monoethylenisch ungesättigte C₃ bis Cs Mono- oder Dicarbonsäure oder deren Salzform. Besonders bevorzugt ist Acrylsäure, Methacrylsäure, Acrylamido-2-methyl-propansulfonsäure oder Vinylphosphonsäure oder deren Salzform. Speziell bevorzugt ist Acrylsäure oder Methacrylsäure oder deren Salzform. Ganz speziell bevorzugt ist Acrylsäure, Natriumacrylat, Methacrylsäure oder Natriummethacrylat.

Die Gesamtmenge aller Monomere (iii) ist bevorzugt 11 bis 40 mol% bezogen auf alle zum Erhalt des Polymer V polymerisierten Monomere, d.h. alle Monomere (i), (ii), (iii) und optional (iv), sehr bevorzugt 15 bis 35 mol%, besonders bevorzugt 18 bis 33 mol% und ganz bevorzugt 20 bis 30 mol%. Bei einer Untergrenze von 15 mol%, 18 mol% bzw. 20 mol% für das Monomer (iii) reduziert sich die Obergrenze für das Monomer (i) auf 79 mol%, 76 mol% bzw. 74 mol% und die Obergrenze für das Monomer (ii) auf 52 mol%, 49 mol% bzw. 47 mol%.

Das Monomer (iv) umfasst auch ein Gemisch von unter das Monomer (iv) fallender Einzelmonomere.

Die Gesamtmenge aller Monomere (iv) ist bevorzugt 0 bis 30 mol% bezogen auf alle zum Erhalt des Polymer V polymerisierten Monomere, d.h. alle Monomere (i), (ii), (iii) und optional (iv), sehr bevorzugt 0 bis 20 mol%, besonders bevorzugt 0,001 bis 15 mol%, ganz besonders bevorzugt 0,01 bis 10 mol% und speziell bevorzugt 0,015 bis 5 mol%.

Die Monomere (iv) sind ethylenisch ungesättigt, von den Monomeren (i), (ii) und (iii) verschieden und bevorzugt ausgewählt aus
(iv-1) einem monoethylenisch ungesättigten Monomer, das bei pH 7 keine Ladung trägt, oder einem ethylenisch ungesättigten Monomer, das bei pH 7 keine Ladung trägt und dessen genau zwei ethylenische Doppelbindungen konjugiert sind,
(iv-2) einem monoethylenisch ungesättigten Monomer, das mindestens eine sekundäre oder tertiäre Aminogruppe trägt und dessen mindestens eine sekundäre oder tertiäre Aminogruppe bei pH 7 protoniert ist, das aber keine Gruppe trägt, die bei pH 7 deprotoniert ist, oder ein diallylsubstituiertes Amin, das genau zwei ethylenische Doppelbindungen aufweist und quaternisiert oder bei pH 7 protoniert ist, oder deren Salzform,
(iv-3) 0 bis 2 mol% eines Monomers, das mindestens zwei ethylenisch ungesättigte Doppelbindungen, die nicht konjugiert sind, aufweist, und das von einem diallylsubstituierten Amin, das genau zwei ethylenische Doppelbindungen aufweist, verschieden ist,
(iv-4) eines ethylenisch ungesättigten Monomers, das auch von den Monomeren (iv-1), (iv-2) und (iv-3) verschieden ist,
wobei die Gesamtmenge aller Monomere (i), (ii), (iii) und (iv-1) bis (iv-4) 100 mol% beträgt und mol% sich auf die Gesamtmenge aller Monomere (i), (ii), (iii) und (iv-1) bis (iv-4) bezieht.

Das Monomer (iv-1) umfasst auch ein Gemisch von unter das Monomer (iv-1) fallender Einzelmonomere.

Beispiele für die Monomere (iv-1) sind Monoester von α,β-ethylenisch ungesättigten Monocarbonsäuren mit C₁-C₃₀-Alkanolen, Monoester von α,β-ethylenisch ungesättigten Monocarbonsäuren mit C₂-C₃₀-Alkandiolen, Diester von α,β-ethylenisch ungesättigten Dicarbonsäuren mit C₁-C₃₀-Alkanolen oder C₂-C₃₀-Alkandiolen, primäre Amide von α,β-ethylenisch ungesättigten Monocarbonsäuren, N-Alkylamide von α,β-ethylenisch ungesättigten Monocarbonsäuren, N,N-Dialkylamide von α,β-ethylenisch ungesättigten Monocarbonsäuren, Nitrile von α,β-ethylenisch ungesättigten Monocarbonsäuren, Dinitrile von α,β-ethylenisch ungesättigten Dicarbonsäuren, Ester von Vinylalkohol mit C₁-C₃₀-Monocarbonsäuren, Ester von Allylalkohol mit C₁-C₃₀-Monocarbonsäuren, N-Vinyllactame, stickstofffreie Heterocyclen mit einer α,β-ethylenisch ungesättigten Doppelbindung, Vinylaromaten, Vinylhalogenide, Vinylidenhalogenide, C₂-C₈-Monoolefine oder C₄-C₁₀-Olefine mit genau zwei Doppelbindungen, die konjugiert sind.

Monoester von α,β-ethylenisch ungesättigten Monocarbonsäuren mit C₁-C₃₀-Alkanolen sind beispielsweise Methylacrylat, Methylmethacrylat, Methylethacrylat (= Methyl-2-ethylacrylat), Ethylacrylat, Ethylmethacrylat, Ethylethacrylat (= Ethyl-2-ethylacrylat), n-Butylacrylat, n-Butylmethacrylat, Isobutylacrylat, Isobutylmethacrylat, tert.-Butylacrylat, tert.-Butylmethacrylat, tert.-Butylethacrylat, n-Octylacrylat, n-Octytmethacrylat, 1,1,3,3-Tetramethylbutylacrylat, 1,1,3,3-Tetramethylbutylmethacrylat oder 2-Ethylhexylacrylat.

Monoester von α,β-ethylenisch ungesättigten Monocarbonsäuren mit C₂-C₃₀-Alkandiolen sind beispielsweise 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat oder 6-Hydroxyhexylmethacrylat.

Primäre Amide von α,β-ethylenisch ungesättigten Monocarbonsäuren sind beispielsweise Acrylsäureamid oder Methacrylsäureamid.

N-Alkyl-Amide von α,β-ethylenisch ungesättigten Monocarbonsäuren sind beispielsweise N-Methylacrylamid, N-Methylmethacrylamid, N-Isopropylacrylamid, N-Isopropylmethacrylamid, N-Ethylacrylamid, N-Ethylmethacrylamid, N-(n-Propyl)acrylamid, N-(n-Propyl)methacrylamid, N-(n-Butylacrylamid, N-(n-Butyl)methacrylamid, N-(tert.-Butyl)acrylamid, N-(tert.-Butyl)methacrylamid, N-(n-Octyl)acrylamid, N-(n-Octyl)methacrylamid, N-(1,1,3,3-Tetramethylbutyl)acrylamid, N-(1,1,3,3-Tetramethylbutyl)methacrylamid, N-(2-Ethylhexyl)acrylamid oder N-(2-Ethylhexylmethacrylamid.

N,N-Dialkylamide von α,β-ethylenisch ungesättigten Monocarbonsäuren sind beispielsweise N,N-Dimethylacrylamid oder N,N-Dimethylmethacrylamid.

Nitrile von α,β-ethylenisch ungesättigten Monocarbonsäuren sind beispielsweise Acrylnitril und Methacrylnitril.

Ester von Vinylalkohol mit C₁-C₃₀-Monocarbonsäuren sind beispielsweise Vinylformiat, Vinylacetat oder Vinylpropionat.

N-Vinyllactame sind beispielsweise N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam oder N-Vinyl-7-ethyl-2-caprolactam.

Vinylaromaten sind beispielsweise Styrol oder Methylstyrol. Vinylhalogenide sind beispielsweise Vinylchlorid oder Vinylfluorid. Vinylidenhalogenide sind beispielsweise Vinylidenchlorid oder Vinylidenfluorid. C₂-C₈-Monoolefine sind beispielsweise Ethylen, Propylen, Isobutylen, 1-Buten, 1-Hexen oder 1-Octen. C₄-C₁₀-Olefine mit genau zwei Doppelbindungen, die konjugiert sind, sind beispielsweise Butadien oder Isopren.

Das Monomer (iv-1) ist bevorzugt Acrylnitril, Methacrylnitril, N-Vinylpyrrolidon oder Vinylacetat, sehr bevorzugt Acrylnitril, N-Vinylpyrrolidon oder Vinylacetat.

Die Gesamtmenge der Monomere (iv-1) ist bevorzugt 0 bis 30 mol% bezogen auf alle zum Erhalt des Polymer V polymerisierten Monomere, d.h. alle Monomere (i), (ii), (iii), (iv-1), (iv-2), (iv-3) und (iv-4), sehr bevorzugt 0 bis 20 mol%, besonders bevorzugt 0,001 bis 15 mol%, ganz besonders bevorzugt 0,01 bis 10 mol% und speziell bevorzugt 0,015 bis 5 mol%.

Das Monomer (iv-2) umfasst auch ein Gemisch von unter das Monomer (iv-2) fallender Einzelmonomere.

Beispiele für ein Monomer (iv-2), das ein monoethylenisch ungesättigtes Monomer ist, das mindestens eine sekundäre oder tertiäre Aminogruppe trägt und dessen mindestens eine sekundäre oder tertiäre Aminogruppe bei pH 7 protoniert ist, das aber keine Gruppe trägt, die bei pH 7 deprotoniert ist, oder dessen Salzform, sind Ester von α,β-ethylenisch ungesättigten Monocarbonsäuren mit Aminoalkoholen, Mono- und Diester von α,β-ethylenisch ungesättigten Dicarbonsäuren mit Aminoalkoholen, Amide von α,β-ethylenisch ungesättigten Monocarbonsäuren mit dialkylierten Diaminen, N-Vinylimidazol oder Vinylpyridin.

Bei den Estern von α,β-ethylenisch ungesättigten Monocarbonsäuren mit Aminoalkoholen ist die Säurekomponente bevorzugt Acrylsäure oder Methacrylsäure. Die Aminoalkohole, vorzugsweise C₂-C₁₂ Aminoalkohole, können am Aminstickstoff C₁-C₈-mono- oder C₁-C₈-dialkyliert sein. Beispiele sind Dialkylaminoethylacrylate, Dialkylaminoethylmethacrylate, Dialkylaminopropylacrylate oder Dialkylaminopropylmethacrylate. Einzelne Beispiele sind N-Methylaminoethylacrylat, N-Methylaminoethylmethacrylat, N,N-Dimethylaminoethylacrylat, N,N-Dimethylaminoethylmethacrylat, N,N-Diethylaminoethylacrylat, N,N-Diethylaminoethylmethacrylat, N,N-Dimethylaminopropylacrylat, N,N-Dimethylaminopropylmethacrylat, N,N-Diethylaminopropyl-acrylat, N,N-Diethylaminopropylmethacrylat, N,N-Dimethylaminocyclohexylacrylat oder N,N-Dimethylaminocyclohexylmethacrylat.

Bei den Mono- und Diester von α,β-ethylenisch ungesättigten Dicarbonsäuren mit Aminoalkoholen ist die Säurekomponente bevorzugt Fumarsäure, Maleinsäure, Monobutylmaleat, Itaconsäure oder Crotonsäure. Die Aminoalkohole, vorzugsweise C₂-C₁₂ Aminoalkohole, können am Aminstickstoff C₁-C₈-mono- oder C₁-C₈-dialkyliert sein.

Amide von α,β-ethylenisch ungesättigten Monocarbonsäuren mit dialkylierten Diaminen sind beispielsweise Dialkylaminoethylacrylamide, Dialkylaminoethylmethacrylamide, Dialkylaminopropylacrylamide oder Dialkylaminopropylacrylamide. Einzelne Beispiele sind N-[2-(Dimethylamino)ethyl]acrylamid, N-[2-(Dimethylamino)ethyl]methacrylamid, N-[3-(Dimethylamino)propyl]-acrylamid, N-[3-(Dimethylamino)propyl]methacrylamid, N-[4-(Di-methylamino)butyl]acrylamid, N-[4-(Dimethylamino)butyl]methacrylamid, N-[2-(Diethylamino)-ethyl]acrylamid oder N-[2-(Diethylamino)ethyl]methacrylamid.

Beispiele für ein Monomer (iv-2), das ein diallylsubstituiertes Amin, das genau zwei ethylenische Doppelbindungen aufweist und quaternisiert oder bei pH 7 protoniert ist, oder dessen Salzform sind Diallylamin, Methyldiallylamin, Diallyldipropylammoniumchlorid oder Diallyldibutylammoniumchlorid.

Das Monomer (iv-2) ist bevorzugt N-Vinylimidazol.

Die Gesamtmenge der Monomere (iv-2) ist bevorzugt 0 bis 30 mol% bezogen auf alle zum Erhalt des Polymer V polymerisierten Monomere, d.h. alle Monomere (i), (ii), (iii), (iv-1), (iv-2), (iv-3) und (iv-4), sehr bevorzugt 0 bis 20 mol%, besonders bevorzugt 0,001 bis 15 mol%, ganz besonders bevorzugt 0,01 bis 10 mol% und speziell bevorzugt 0,015 bis 5 mol%.

Das Monomer (iv-3) umfasst auch ein Gemisch von unter das Monomer (iv-3) fallender Einzelmonomere.

Beispiele für die Monomere (iv-3) sind Tetraallylammoniumchlorid, Triallylamin, Methylenbisacrylamid, Glykoldiacrylat, Glykoldimethacrylat, Glycerintriacrylat, Pentaerythrittriallylether, N,N-Divinylethylenharnstoff, Tetraallylammoniumchlorid, mindestens zweifach mit Acrylsäure und/oder Methacrylsäure veresterte Polyalkylenglykole oder Polyole wie Pentaerythrit, Sorbit und Glukose.

Das Monomer (iv-3) ist bevorzugt Tetraallylammoniumchlorid.

Das Monomer (iv-4) umfasst auch ein Gemisch von unter das Monomer (iv-3) fallender Einzelmonomere.

Die Monomere (iv-3) wirken als Vernetzer. Eine eingesetzte Menge beträgt bevorzugt 0,001 bis 1 mol% bezogen auf alle zum Erhalt des Polymer V polymerisierten Monomere, d.h. alle Monomere (i), (ii), (iii), (iv-1), (iv-2), (iv-3) und (iv-4), sehr bevorzugt 0,01 bis 0,5 mol% und besonders bevorzugt 0,015 bis 0,1 mol%.

Beispiele für ein Monomer (iv-4) sind das Sulfobetain 3-(Dimethyl(methacryloylethyl)ammonium)propansulfonat, das Sulfobetain 3-(2-methyl-5-vinylpyridinium)propansulfonat, das Carboxybetain N-3-Methacrylamidopropyl-N,N-dimetyl-beta-ammonium-propionat, das Carboxybetain N-2-Acrylamidoethyl-N,N-dimethyl-beta-ammonium-propionat, 3-Vinylimidazol-N-oxid, 2-Vinylpyridin-N-oxid oder 4-Vinylpyridin-N-oxid.

Die Gesamtmenge der Monomere (iv-4) ist bevorzugt 0 bis 30 mol% bezogen auf alle zum Erhalt des Polymer V polymerisierten Monomere, d.h. alle Monomere (i), (ii), (iii), (iv-1), (iv-2), (iv-3) und (iv-4), sehr bevorzugt 0 bis 20 mol%, besonders bevorzugt 0,001 bis 15 mol%, ganz besonders bevorzugt 0,01 bis 10 mol% und speziell bevorzugt 0,015 bis 5 mol%.

Das Monomer (iv) ist bevorzugt Acrylnitril, Vinylacetat, N-Vinylpyrrolidon oder N-Vinylimidazol.

Bevorzugt hat das Polymer V ein gewichtsmittleres Molekulargewicht Mw zwischen 10000 und 10000000 Dalton. Sehr bevorzugt hat das Polymer P ein gewichtsmittleres Molekulargewicht Mw zwischen 20000 bis 5000000 Dalton, besonders bevorzugt zwischen 100000 und 4500000 Dalton, ganz besonders bevorzugt zwischen 180000 und 2400000 Dalton und speziell bevorzugt zwischen 210000 und 1500000 Dalton. Das gewichtsmittlere Molekulargewicht kann mit statischer Lichtstreuung bestimmt werden, beispielsweise bei einem pH-Wert von 9,0 in einer 1000 millimolaren Kochsalzlösung.

Bevorzugt ist ein Polymer V, das erhältlich ist durch
- radikalisches Polymerisieren von
   (i) 33 bis 83 mol% eines Monomers der Formel I 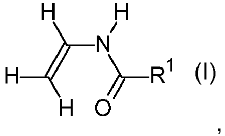 in der R¹ = H oder C₁-C₆ Alkyl bedeutet,
   (ii) 6 bis 56 mol% Diallyldimethylammoniumchlorid, Diallyldiethylammoniumchlorid, einer Salzform eines N-Alkyl-N'-vinylimidazoliums, einer Salzform eines N-alkylierten Vinylpyridiniums, einer Salzform eines Acrylamidoalkyltrialkylammoniums oder einer Salzform eines Methacrylamidoalkyltrialkylammoniums,
   (iii) 11 bis 61 mol% einer monoethylenisch ungesättigten Carbonsäure, einer monoethylenisch ungesättigten Sulfonsäure, oder deren Salzformen,
   (iv) 0 bis 50 mol% eines oder mehrerer ethylenisch ungesättigter Monomere, die von einem Monomer (i), (ii) und (iii) verschieden sind,
   wobei die Gesamtmenge aller Monomere (i), (ii), (iii) und (iv) 100 mol% beträgt.

Bevorzugt ist ein Polymer V, das erhältlich ist durch
- radikalisches Polymerisieren von
   (i) 33 bis 83 mol% eines Monomers der Formel I 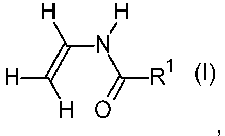 in der R¹ = H bedeutet,
   (ii) 6 bis 56 mol% Diallyldimethylammoniumchlorid, einer Salzform eines N-Alkyl-N'-vinylimidazoliums, einer Salzform eines Acrylamidoalkyltrialkylammoniums oder einer Salzform eines Methacrylamidoalkyltrialkylammoniums,
   (iii) 11 bis 61 mol% Acrylsäure, Methacrylsäure, Acrylamido-2-methyl-propansulfonsäure oder deren Salzformen,
   (iv) 0 bis 50 mol% eines oder mehrerer ethylenisch ungesättigter Monomere, die von einem Monomer (i), (ii) und (iii) verschieden sind,
   wobei die Gesamtmenge aller Monomere (i), (ii), (iii) und (iv) 100 mol% beträgt.

Bevorzugt ist ein Polymer V, das erhältlich ist durch
- radikalisches Polymerisieren von
   (i) 33 bis 83 mol% eines Monomers der Formel I 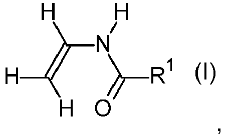 in der R¹ = H bedeutet,
   (ii) 6 bis 56 mol% Diallyldimethylammoniumchlorid, einer Salzform eines N-Alkyl-N'-vinylimidazoliums, einer Salzform eines Acrylamidoalkyltrialkylammoniums oder einer Salzform eines Methacrylamidoalkyltrialkylammoniums,
   (iii) 11 bis 61 mol% Acrylsäure, Methacrylsäure, Acrylamido-2-methyl-propansulfonsäure oder deren Salzformen,
   (iv) 0 bis 50 mol% Acrylnitril, Vinylacetat, N-Vinylpyrrolidon oder N-Vinylimidazol,
   wobei die Gesamtmenge aller Monomere (i), (ii), (iii) und (iv) 100 mol% beträgt.

Bevorzugt ist ein Polymer V, das erhältlich ist durch
- radikalisches Polymerisieren von
   (i) 33 bis 83 mol% eines Monomers der Formel I 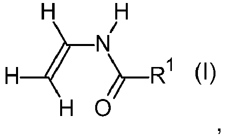 in der R¹ = H bedeutet,
   (ii) 6 bis 56 mol% Diallyldimethylammoniumchlorid, einer Salzform eines N-Alkyl-N'-vinylimidazoliums oder Acrylamidopropyltrimethylammoniumchlorid,
   (iii) 11 bis 61 mol% Acrylsäure, Methacrylsäure, Acrylamido-2-methyl-propansulfonsäure oder deren Salzformen,
   (iv) 0 bis 50 mol% eines oder mehrerer ethylenisch ungesättigter Monomere, die von einem Monomer (i), (ii) und (iii) verschieden sind,
   wobei die Gesamtmenge aller Monomere (i), (ii), (iii) und (iv) 100 mol% beträgt.

Bevorzugt ist ein Polymer V, das erhältlich ist durch
- radikalisches Polymerisieren von
   (i) 33 bis 83 mol% eines Monomers der Formel I 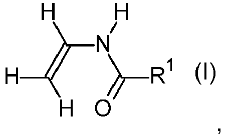 in der R¹ = H bedeutet,
   (ii) 6 bis 56 mol% Diallyldimethylammoniumchlorid, einer Salzform eines N-Alkyl-N'-vinylimidazoliums oder Acrylamidopropyltrimethylammoniumchlorid,
   (iii) 11 bis 61 mol% Acrylsäure, Methacrylsäure, Acrylamido-2-methyl-propansulfonsäure oder deren Salzformen,
   (iv) 0 bis 50 mol% Acrylnitril, Vinylacetat, N-Vinylpyrrolidon oder N-Vinylimidazol,
   wobei die Gesamtmenge aller Monomere (i), (ii), (iii) und (iv) 100 mol% beträgt.

Bevorzugt ist ein Polymer V, das erhältlich ist durch
- radikalisches Polymerisieren von
   (i) 33 bis 83 mol% eines Monomers der Formel I 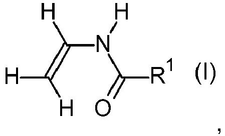 in der R¹ = H bedeutet,
   (ii) 6 bis 56 mol% Diallyldimethylammoniumchlorid,
   (iii) 11 bis 61 mol% Acrylsäure oder Methacrylsäure oder deren Salzform,
   (iv) 0 bis 50 mol% eines oder mehrerer ethylenisch ungesättigter Monomere, die von einem Monomer (i), (ii) und (iii) verschieden sind,
   wobei die Gesamtmenge aller Monomere (i), (ii), (iii) und (iv) 100 mol% beträgt.

Bevorzugt ist ein Polymer V, das erhältlich ist durch
- radikalisches Polymerisieren von
   (i) 33 bis 83 mol% eines Monomers der Formel I 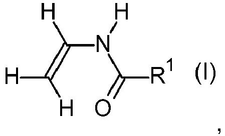 in der R¹ = H bedeutet,
   (ii) 6 bis 35 mol% Diallyldimethylammoniumchlorid,
   (iii) 11 bis 61 mol% Acrylsäure oder Methacrylsäure oder deren Salzform,
   (iv) 0 bis 50 mol% eines oder mehrerer ethylenisch ungesättigter Monomere, die von einem Monomer (i), (ii) und (iii) verschieden sind,
   wobei die Gesamtmenge aller Monomere (i), (ii), (iii) und (iv) 100 mol% beträgt.

Bevorzugt ist ein Polymer V, das erhältlich ist durch
- radikalisches Polymerisieren von
   (i) 33 bis 55 mol% eines Monomers der Formel I 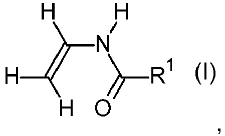 in der R¹ = H bedeutet,
   (ii) 10 bis 40 mol% Diallyldimethylammoniumchlorid,
   (iii) 11 bis 40 mol% Acrylsäure oder Methacrylsäure oder deren Salzform,
   wobei die Gesamtmenge aller Monomere (i), (ii) und (iii) 100 mol% beträgt.

Durch Polymerisation von Monomeren der Formel I enthält das Polymer V einpolymerisierte Einheiten mit entsprechenden Amidgruppen der Formel I. Im Falle von N-Vinylformamid, d.h. Formel I mit R¹ = H, ist dies die Formamidgruppe -NH-C(=O)H.

Das Polymer P entsteht durch teilweises oder vollständiges Hydrolysieren des Polymer V. Bekannterweise, so z.B. in EP 0438744 A1, Seite 8 / Zeilen 26 bis 34, lässt sich die Amidgruppe sauer oder basisch hydrolysieren unter Abspaltung der Carbonsäure und dem Entstehen einer primären Aminogruppe. Bevorzugt ist eine basische Hydrolyse der Amidgruppe. Werden nicht alle Amidgruppen hydrolysiert, ist bekannterweise durch Kondensation der primären Aminogruppe mit einer benachbarten Amidgruppe die Ausbildung eines zyklischen, sechsgliedrigen Amidins möglich. Insofern führt die Hydrolyse einer Amidgruppe zum Entstehen von einer primären Aminogruppe oder einer Amidingruppe am Polymer P entsprechend nachfolgendem Reaktionsschema.

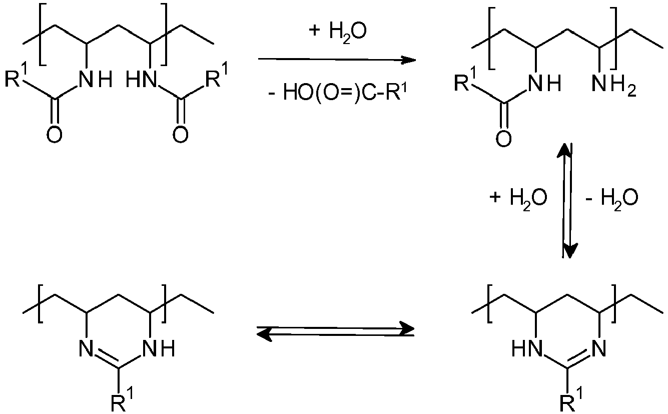

Im Falle der Polymerisation von direkt an der Ethylenfunktion mit Cyan substituierten Ethylenderivaten, z.B. Acrylnitril, enthält das Polymer V zusätzlich Cyangruppen. Die durch Hydrolyse entstandene primäre Aminogruppe im Polymer P kann bekannterweise mit einer dieser Cyangruppen unter Ausbildung eines zyklischen, 5-gliedrigen Amidins reagieren. Insofern führt die Hydrolyse einer Amidgruppe in diesem Fall zu einer Amidingruppe am Polymer P entsprechend nachfolgendem Reaktionsschema. Das mit Cyan substituierte Ethylenderivat ist im nachfolgenden Reaktionsschema dabei einpolymerisiertes Acrylnitril.

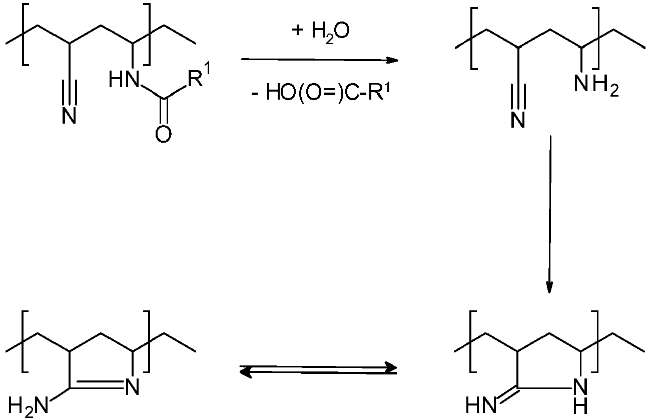

In beiden dargestellten Fällen führt die Hydrolyse einer Amidgruppe, die aus einem Monomer der Formel I stammt, zu einer primären Aminogruppe oder einer Amidingruppe. Eine primäre Aminogruppe oder eine Amidingruppe ist bei pH = 7 positiv geladen und entspricht einer kationischen Ladung im Polymer P.

Die Bedingungen zur Hydrolyse der Amidgruppen im Polymer P, die von Monomeren der Formel I herrühren, können auch zur Hydrolyse von unter diesen Bedingungen hydrolyseempfindlichen anderen Gruppen im Polymer V führen. Bekannterweise, so z.B. in EP 0216387 A2, Spalte 6 / Zeilen 7 bis 43, oder in WO 2016/001016 A1, Seite 17 / Zeilen 1 bis 8, hydrolysieren Acetatgruppen im Polymer V, die von Vinylacetat als einpolymerisertem Monomer (iv-1) herrühren. Entsprechend entsteht im Polymer P eine sekundäre Hydroxygruppe wie nachfolgend dargestellt.

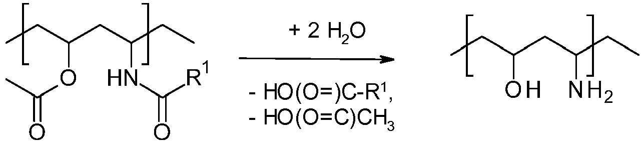

Die Anzahl der in das Polymer V einpolymerisierten Einheiten der Monomere der Formel (I), die im Polymer P hydrolysiert sind, kann experimentell durch quantitativen Nachweis der aus den Gruppen N-C(=O)R¹ abgespaltenen Carbonsäuren HOC(=O)R¹ bestimmt werden. Die Anzahl der hydrolysierten N-C(=O)R¹ Gruppen aus den einpolymerisierten Einheiten der Formel I bezogen auf alle einpolymerisierten Einheiten der Formel I ergibt mit 100% multipliziert den Hydrolysegrad.

Bevorzugt werden mindestens 87% bis 100% der N-C(=O)R¹ Gruppen der in das Polymer V einpolymerisierten Einheiten der Monomere der Formel (I) hydrolysiert bezogen auf die Anzahl aller in das Polymer V einpolymerisierten Einheiten der Monomere der Formel I. Sehr bevorzugt ist 88% bis 100%, besonders bevorzugt 90% bis 99%, ganz besonders bevorzugt 93% bis 98% und speziell bevorzugt 94% bis 97%.

Bevorzugt ist das Polymer P amphoter-kationisch. Das Polymer P ist amphoter, da es Polymereinheiten mit einer funktionalen Gruppe, die zumindest bei einem pH-Wert von 7 eine positive Ladung trägt, z.B. einpolymerisierte Monomere (ii) und hydrolysierte einpolymerisierte Monomere (i), sowie Polymereinheiten mit einer funktionalen Gruppe, die zumindest bei einem pH-Wert von 7 eine negative Ladung trägt, z.B. einpolymerisierte Monomere (iii), besitzt. Wenn die Anzahl aller funktionalen Gruppen mit positiver Ladungen höher ist als die Anzahl aller funktionalen Gruppen mit negativer Ladungen, und dabei sich die Anzahl der positiven Ladungen von jener Anzahl der negativen Ladungen um gleich oder mehr als 7 mol%-Einheiten unterscheiden, wobei 100 mol%-Einheiten die Anzahl aller polymerisierten Monomere zur Herstellung des Polymer V sind, dann ist das Polymer P amphoter-kationisch. Beispielsweise ist ein Polymer P amphoter-kationisch, bei dem 50 mol% N-Vinylformamid, 7 mol% DADMAC und 43 Natriumacrylat polymerisiert sind und der Hydrolysegrad der einpolymerisierten N-Vinylformamid-Einheiten 90% beträgt. Die Zahl der positiven Ladungen ist hierbei 52 mol%, die Zahl der negativen Ladungen 43 mol% und die Differenz 9 mol%. Sehr bevorzugt ist ein Polymer P amphoter-kationisch und die Anzahl an positiver Ladungen in mol% abzüglich der Anzahl an negativer Ladungen in mol% bezogen auf die Gesamtzahl an polymerisierten Monomeren des Polymer V ist zwischen 20 mol% und 89 mol%. Besonders bevorzugt ist 30 mol% bis 70 mol% und ganz besonders bevorzugt ist 35 mol% bis 60 mol%.

Bevorzugt hat das Polymer P ein gewichtsmittleres Molekulargewicht Mw zwischen 8000 und 8000000 Dalton. Sehr bevorzugt hat das Polymer P ein gewichtsmittleres Molekulargewicht Mw zwischen 16000 bis 4000000 Dalton, besonders bevorzugt zwischen 80000 und 3600000 Dalton, ganz besonders bevorzugt zwischen 150000 und 2000000 Dalton und speziell bevorzugt zwischen 170000 und 1200000 Dalton. Das gewichtsmittlere Molekulargewicht kann mit statischer Lichtstreuung bestimmt werden, beispielsweise bei einem pH-Wert von 9,0 in einer 1000 millimolaren Kochsalzlösung.

Bevorzugt ist ein Polymer P, das erhältlich ist durch
- radikalisches Polymerisieren zu einem Polymer V von
   (i) 33 bis 83 mol% eines Monomers der Formel I 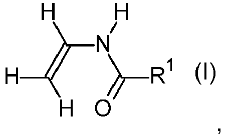 in der R¹ = H oder C₁-C₆ Alkyl bedeutet,
   (ii) 6 bis 56 mol% Diallyldimethylammoniumchlorid, Diallyldiethylammoniumchlorid, einer Salzform eines N-Alkyl-N'-vinylimidazoliums, einer Salzform eines N-alkylierten Vinylpyridiniums, einer Salzform eines Acrylamidoalkyltrialkylammoniums oder einer Salzform eines Methacrylamidoalkyltrialkylammoniums,
   (iii) 11 bis 61 mol% einer monoethylenisch ungesättigten Carbonsäure, einer monoethylenisch ungesättigten Sulfonsäure, oder deren Salzformen,
   (iv) 0 bis 50 mol% eines oder mehrerer ethylenisch ungesättigter Monomere, die von einem Monomer (i), (ii) und (iii) verschieden sind,
   wobei die Gesamtmenge aller Monomere (i), (ii), (iii) und (iv) 100 mol% beträgt, und
- Hydrolysieren der N-C(=O)R¹-Gruppen der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I.

Bevorzugt ist ein Polymer P, das erhältlich ist durch
- radikalisches Polymerisieren zu einem Polymer V von
   (i) 33 bis 83 mol% eines Monomers der Formel I 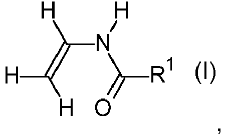 in der R¹ = H bedeutet,
   (ii) 6 bis 56 mol% Diallyldimethylammoniumchlorid, einer Salzform eines N-Alkyl-N'-vinylimidazoliums, einer Salzform eines Acrylamidoalkyltrialkylammoniums oder einer Salzform eines Methacrylamidoalkyltrialkylammoniums,
   (iii) 11 bis 61 mol% Acrylsäure, Methacrylsäure, Acrylamido-2-methyl-propansulfonsäure oder deren Salzformen,
   (iv) 0 bis 50 mol% eines oder mehrerer ethylenisch ungesättigter Monomere, die von einem Monomer (i), (ii) und (iii) verschieden sind,
   wobei die Gesamtmenge aller Monomere (i), (ii), (iii) und (iv) 100 mol% beträgt, und
- Hydrolysieren der N-C(=O)R¹-Gruppen der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I.

Bevorzugt ist ein Polymer P, das erhältlich ist durch
- radikalisches Polymerisieren zu einem Polymer V von
   (i) 33 bis 83 mol% eines Monomers der Formel I 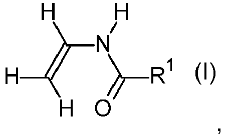 in der R¹ = H bedeutet,
   (ii) 6 bis 56 mol% Diallyldimethylammoniumchlorid, einer Salzform eines N-Alkyl-N'-vinylimidazoliums, einer Salzform eines Acrylamidoalkyltrialkylammoniums oder einer Salzform eines Methacrylamidoalkyltrialkylammoniums,
   (iii) 11 bis 61 mol% Acrylsäure, Methacrylsäure, Acrylamido-2-methyl-propansulfonsäure oder deren Salzformen,
   (iv) 0 bis 50 mol% Acrylnitril, Vinylacetat, N-Vinylpyrrolidon oder N-Vinylimidazol,
   wobei die Gesamtmenge aller Monomere (i), (ii), (iii) und (iv) 100 mol% beträgt, und
- Hydrolysieren der N-C(=O)R¹-Gruppen der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I.

Bevorzugt ist ein Polymer P, das erhältlich ist durch
- radikalisches Polymerisieren zu einem Polymer V von
   (i) 33 bis 83 mol% eines Monomers der Formel I 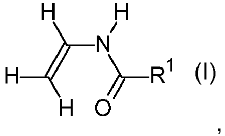 in der R¹ = H bedeutet,
   (ii) 6 bis 56 mol% Diallyldimethylammoniumchlorid, einer Salzform eines N-Alkyl-N'-vinylimidazoliums oder Acrylamidopropyltrimethylammoniumchlorid,
   (iii) 11 bis 61 mol% Acrylsäure, Methacrylsäure, Acrylamido-2-methyl-propansulfonsäure oder deren Salzformen,
   (iv) 0 bis 50 mol% eines oder mehrerer ethylenisch ungesättigter Monomere, die von einem Monomer (i), (ii) und (iii) verschieden sind,
   wobei die Gesamtmenge aller Monomere (i), (ii), (iii) und (iv) 100 mol% beträgt, und
- Hydrolysieren der N-C(=O)R¹-Gruppen der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I.

Bevorzugt ist ein Polymer P, das erhältlich ist durch
- radikalisches Polymerisieren zu einem Polymer V von
   (i) 33 bis 83 mol% eines Monomers der Formel I 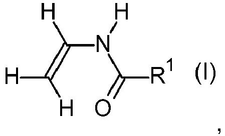 in der R¹ = H bedeutet,
   (ii) 6 bis 56 mol% Diallyldimethylammoniumchlorid, einer Salzform eines N-Alkyl-N'-vinylimidazoliums oder Acrylamidopropyltrimethylammoniumchlorid,
   (iii) 11 bis 61 mol% Acrylsäure, Methacrylsäure, Acrylamido-2-methyl-propansulfonsäure oder deren Salzformen,
   (iv) 0 bis 50 mol% Acrylnitril, Vinylacetat, N-Vinylpyrrolidon oder N-Vinylimidazol,
   wobei die Gesamtmenge aller Monomere (i), (ii), (iii) und (iv) 100 mol% beträgt, und
- Hydrolysieren der N-C(=O)R¹-Gruppen der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I.

Bevorzugt ist ein Polymer P, das erhältlich ist durch
- radikalisches Polymerisieren zu einem Polymer V von
   (i) 33 bis 83 mol% eines Monomers der Formel I 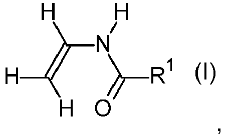 in der R¹ = H bedeutet,
   (ii) 6 bis 56 mol% Diallyldimethylammoniumchlorid,
   (iii) 11 bis 61 mol% Acrylsäure oder Methacrylsäure oder deren Salzform,
   (iv) 0 bis 50 mol% eines oder mehrerer ethylenisch ungesättigter Monomere, die von einem Monomer (i), (ii) und (iii) verschieden sind,
   wobei die Gesamtmenge aller Monomere (i), (ii), (iii) und (iv) 100 mol% beträgt, und
- Hydrolysieren der N-C(=O)R¹-Gruppen der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I.

Bevorzugt ist ein Polymer P, das erhältlich ist durch
- radikalisches Polymerisieren zu einem Polymer V von
   (i) 33 bis 83 mol% eines Monomers der Formel I 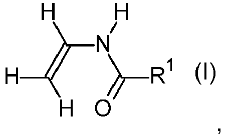 in der R¹ = H bedeutet,
   (ii) 6 bis 35 mol% Diallyldimethylammoniumchlorid,
   (iii) 11 bis 61 mol% Acrylsäure oder Methacrylsäure oder deren Salzform,
   (iv) 0 bis 50 mol% eines oder mehrerer ethylenisch ungesättigter Monomere, die von einem Monomer (i), (ii) und (iii) verschieden sind,
   wobei die Gesamtmenge aller Monomere (i), (ii), (iii) und (iv) 100 mol% beträgt, und
- Hydrolysieren der N-C(=O)R¹-Gruppen der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I.

Bevorzugt ist ein Polymer P, das erhältlich ist durch
- radikalisches Polymerisieren zu einem Polymer V von
   (i) 33 bis 55 mol% eines Monomers der Formel I 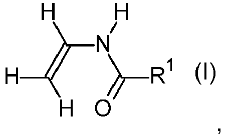 in der R¹ = H bedeutet,
   (ii) 10 bis 40 mol% Diallyldimethylammoniumchlorid,
   (iii) 11 bis 40 mol% Acrylsäure oder Methacrylsäure oder deren Salzform,
   wobei die Gesamtmenge aller Monomere (i), (ii) und (iii) 100 mol% beträgt, und
- Hydrolysieren der N-C(=O)R¹-Gruppen der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I.

Die zweite wässrige Faserstoffsuspension enthaltend Polymer P enthält
(a-a) Wasser
(a-b) Faserstoff
(a-c) Polymer P.

Ein möglicher weiterer Bestandteil der zweiten wässrigen Faserstoffsuspension ist (a-d) ein organisches Polymer, das von einem Faserstoff und Polymer P verschieden ist. Das organische Polymer (a-d) kann neutral, kationisch oder anionisch sein.

Ein neutrales organisches Polymer (a-d) kann ungeladen-neutral sein, weil es keine Polymereinheiten mit einer funktionalen Gruppe, die zumindest bei einem pH-Wert von 7 eine Ladung trägt, enthält. Unter einer funktionalen Gruppe, die zumindest bei einem pH-Wert von 7 eine Ladung trägt, wird hierin ein Atom oder eine verbundene Gruppe von Atomen verstanden, die kovalent an den Rest der Polymereinheit gebunden ist. Die funktionale Gruppe trägt permanent eine Ladung oder wirkt für sich alleine genommen, d.h. unabhängig von anderen Bestandteilen der Polymereinheit oder anderen Polymereinheiten, in ihrer ungeladenen Form in reinem Wasser als Säure oder als Base. Die Säurewirkung führt zum Entstehen einer negativen Ladung an der entsprechenden funktionalen Gruppe der Polymereinheit, wenn mit einer Base deprotoniert wird. Dies kann beispielsweise mit NaOH, KOH oder NH₃ geschehen, die typischerweise in wässriger Lösung eingesetzt werden, und zu den entsprechenden Natrium-, Kalium- oder Ammoniumsalzen führen. Die Basenwirkung führt zum Entstehen einer positiven Ladung an der entsprechenden funktionalen Gruppe der Polymereinheit, wenn mit einer Säure protoniert wird. Dies kann beispielweise mit HCl, H₂SO₄, H₃PO₄, HCOOH oder H₃CCOOH geschehen, die typischerweise in wässriger Lösung eingesetzt werden, und zu den entsprechenden Chlorid-, Hydrogensulfat/Sulfat-, Dihydrogenphosphat / Hydrogenphosphat / Phosphat-, Formiat oder Acetat-Salzen führen. Ein Beispiel für eine funktionale Gruppe mit permanenter positiver Ladung ist -(CH₂)₄-N⁺ (ein tetraalkylierter Stickstoff) wie beispielsweise jener in Diallyldimethylammonium oder in 2-(N,N,N-trimethylammonium)ethylacrylat. Beispiele für eine funktionale Gruppe, die zum Entstehen von negativen Ladungen in der Polymereinheit führt, sind - COOH (eine Carbonsäure), -SO₂OH (eine Sulfonsäure), -PO(OH)₂ (eine Phosphonsäure), -O-SO₂OH (eine monoveresterte Schwefelsäure) oder -O-PO(OH)₂ (eine monoveresterte Phosphorsäure). Beispiele für eine funktionale Gruppe, die zum Entstehen von positiven Ladungen in der Polymereinheit führen, sind -CH₂-CH(NH₂)- oder -CH₂-NH₂ (eine primäre und basische Aminogruppe), (-CH₂-)₂NH (eine sekundäre und basische Aminogruppe), (-CH₂-)₃N (eine tertäre und basische Aminogruppe) oder (-)₂CH-N=CH-NH-CH(-)₂ (eine basische Amidingruppe, insbesondere auch in Form eines zyklischen Amidins).

Beispiele für ein neutrales organisches Polymer (a-d), das keine Polymereinheiten mit einer funktionalen Gruppe, die zumindest bei einem pH-Wert von 7 eine Ladung trägt, enthält, sind Polyacrylamid, Poly(acrylamid-co-acrylnitril), Poly(vinylalkohol) oder Poly(vinylalkohol-co-vinylacetat).

Ein neutrales organisches Polymer (a-d) kann auch amphoter-neutral sein, weil es Polymereinheiten mit einer funktionalen Gruppe, die zumindest bei einem pH-Wert von 7 eine negative Ladung trägt, enthält, sowie Polymereinheiten mit einer funktionalen Gruppe, die zumindest bei einem pH-Wert von 7 eine positive Ladung trägt, enthält, und weiterhin sich die Anzahl aller negativen Ladungen und die Anzahl aller positiven Ladungen der funktionalen Gruppen ausgleichen. Als amphoter-neutral wird hierin auch ein organisches Polymer angesehen, bei dem sich die Anzahl der positiven Ladungen von jener Anzahl der negativen Ladungen um weniger als 7 Mol%-Einheiten unterscheiden, wobei 100 mol%-Einheiten die Anzahl aller polymerisierten Monomere zur Herstellung des organischen Polymers sind. Beispielsweise wird ein organisches Polymer, das durch Polymerisation von 30 mol% Acrylsäure und 70 Mol% N-Vinylformamid entstanden ist und bei dem weiterhin die Hälfte der einpolymerisierten N-Vinylforamideinheiten hydrolysiert sind, mit 5 mol%-Einheiten Unterschied zwischen den funktionalen Gruppen - COOH und -CH₂-CH(NH₂)- als amphoter-neutral angesehen. Im Falle von der Polymerisation von 10 mol% Itaconsäure (HOOC-CH₂-C(=CH₂)-COOH), 10 mol% Acrylsäure und 80 mol% N-Vinylforamid zu einem organischen Polymer, bei dem dann 44% der einpolymerisierten N-Vinylformamid-Einheiten hydrolysiert sind, wird das Polymer bei 5 mol%-Einheiten Unterschied zwischen den funktionalen Gruppen -COOH und -CH₂-CH(NH₂)- als amphoter-neutral angesehen.

Ein kationisches organisches Polymer (a-d) kann rein-kationisch sein, d.h. es enthält Polymereinheiten mit einer funktionalen Gruppe, die zumindest bei einem pH-Wert von 7 eine positive Ladung trägt, aber es enthält keine Polymereinheiten mit einer funktionalen Gruppe, die zumindest bei einem pH-Wert von 7 eine negative Ladung trägt. Beispiele für ein rein-kationisches organisches Polymer (a-d) sind Poly(allylamin), Poly(diallylamin), Poly(diallyldimethylammoniumchlorid), Poly(acrylamid-co-diallyldimethylammoniumchlorid) oder Poly(acrylamid-co-2-(N,N,N-trimethylammonium)ethylacrylatchlorid).

Ein kationisches organisches Polymer (a-d) kann auch amphoter-kationisch sein, d.h. es enthält Polymereinheiten mit einer funktionalen Gruppe, die zumindest bei einem pH-Wert von 7 eine positive Ladung trägt, sowie Polymereinheiten mit einer funktionalen Gruppe, die zumindest bei einem pH-Wert von 7 eine negative Ladung trägt, und die Anzahl aller positiven Ladungen ist höher als die Anzahl aller negativen Ladungen der funktionalen Gruppen. Als amphoter-kationisch wird hierin ein organisches Polymer angesehen, bei dem sich die Anzahl der positiven Ladungen von jener Anzahl der negativen Ladungen um gleich oder mehr als 7 mol%-Einheiten unterscheiden, wobei 100 mol%-Einheiten die Anzahl aller polymerisierten Monomere zur Herstellung des organischen Polymers sind. Beispielsweise wird ein organisches Polymer, das durch Polymerisation von 30 mol% Acrylsäure und 70 mol% N-Vinylformamid entstanden ist und bei dem weiterhin 57% der einpolymerisierten N-Vinylforamideinheiten hydrolysiert sind, mit 10 mol%-Einheiten Unterschied zwischen den funktionalen Gruppen -COOH und -CH₂-CH(NH₂)- als amphoter-kationisch angesehen.

Ein anionisches organisches Polymer (a-d) kann rein-anionisch sein, d.h. es enthält Polymereinheiten mit einer funktionalen Gruppe, die zumindest bei einem pH-Wert von 7 eine negative Ladung trägt, aber es enthält keine Polymereinheiten mit einer funktionalen Gruppe, die zumindest bei einem pH-Wert von 7 eine positive Ladung trägt. Beispiele für ein rein-anionisches organisches Polymer (a-d) sind Poly(acrylsäure), Poly(styrol-co-n-butylacrylat-co-acrylsäure) oder Poly(acrylamid-co-acrylnitril-co-acrylsäure).

Ein anionisches organisches Polymer (a-d) kann auch amphoter-anionisch sein, d.h. es enthält Polymereinheiten mit einer funktionalen Gruppe, die zumindest bei einem pH-Wert von 7 eine negative Ladung trägt, sowie Polymereinheiten mit einer funktionalen Gruppe, die zumindest bei einem pH-Wert von 7 eine positive Ladung trägt, und die Anzahl aller negativen Ladungen ist höher als die Anzahl aller positiven Ladungen der funktionalen Gruppen. Als amphoter-anionisch wird hierin ein organisches Polymer angesehen, bei dem sich die Anzahl der negativen Ladungen von jener Anzahl der positiven Ladungen um gleich oder mehr als 7 mol%-Einheiten unterscheiden, wobei 100 mol%-Einheiten die Anzahl aller polymerisierten Monomere zur Herstellung des organischen Polymers sind. Beispielsweise wird ein organisches Polymer, das durch Polymerisation von 30 mol% Acrylsäure und 70 mol% N-Vinylformamid entstanden ist und bei dem weiterhin 29% der einpolymerisierten N-Vinylforamideinheiten hydrolysiert sind, mit 10 mol%-Einheiten Unterschied zwischen den funktionalen Gruppen -COOH und -CH₂-CH(NH₂)- als amphoter-anionisch angesehen.

Das organische Polymer (a-d) kann zudem auch nach linear, verzweigt oder vernetzt (crosslinked) unterschieden werden. Eine Vernetzung kann beispielsweise durch Zugabe eines Vernetzers bereits während der Polymerisation der Ausgangsmonomere erfolgen oder durch Zugabe eines Vernetzers nach der erfolgten Polymerisation, insbesondere auch erst kurz vor der Zugabe des organischen Polymers (a-d) zur zweiten wässrigen Faserstoffsuspension. Beispielsweise kann Polyacrylamid durch Zugabe des Vernetzers Methylenbisacrylamid zu Acrylamid bereits während der Polymerisation vernetzt werden oder erst nach der Polymerisation mit einem Vernetzer wie Glyoxal versetzt werden. Gegebenenfalls sind auch beide Vernetzungsarten kombinierbar. Besonders zu erwähnen ist hierbei ein vernetztes organisches Polymer, das durch einen hohen Vernetzungsgrad, typischerweise bereits während der Monomerpolymerisation aufweist. Es liegt in der zweiten wässrigen Faserstoffsuspension enthaltend Polymer P als Partikel, insbesondere als sogenannter organischer Mikropartikel, vor.

Das organische Polymer (a-d) kann zudem auch nach natürlich, modifiziert-natürlich oder synthetisch unterschieden werden. Ein natürliches organisches Polymer ist üblicherweise aus der Natur gewonnen, wobei gegebenenfalls entsprechende Isolierungsschritte angewandt werden aber keine gezielte chemisch-synthetische Modifizierung. Ein Beispiel für ein natürliches organisches Polymer (a-d) ist unmodifizierte Stärke. Kein Beispiel für ein natürliches organisches Polymer (a-d) ist Cellulose - diese ist hierin ein Faserstoff (a-b). Ein modifiziert-natürliches organisches Polymer ist durch einen chemisch-synthetischen Verfahrensschritt modifiziert. Ein Beispiel für ein modifiziert-natürliches organisches Polymer (a-d) ist kationische Stärke. Ein synthetisches organisches Polymer (a-d) wird chemisch-synthetisch aus einzelnen Monomeren erhalten. Ein Beispiel für ein synthetisches organisches Polymer (a-d) ist Polyacrylamid.

Bevorzugt ist ein Verfahren, bei dem im Schritt (A) der ersten Faserstoffsuspension oder der zweiten Faserstoffsuspension enthaltend Polymer P ein organisches Polymer (a-d) zugesetzt wird. Sehr bevorzugt wird ein organisches Polymer (a-d), das ein modifiziert-natürliches organisches Polymer ist, zugesetzt. Besonders bevorzugt ist das organische Polmyer (a-d) kationische Stärke. Ganz besonders bevorzugt ist kationische Stärke das einzige organische Polymer (a-d), das im Schritt (A) der ersten Faserstoffsuspension zusätzlich zu Polymer P oder der zweiten Faserstoffsuspension enthaltend Polymer P zugesetzt wird.

Ein möglicher weiterer Bestandteil einer wässrigen Faserstoffsuspension enthaltend Polymer P ist (a-e) ein Füllstoff. Ein Füllstoff (a-e) ist ein anorganisches Partikel, insbesondere ein anorganisches Pigment. Als anorganische Pigmente kommen alle üblicherweise in der Papierindustrie einsetzbaren Pigmente auf Basis von Metalloxiden, Silikaten und/oder Carbonaten in Frage, insbesondere von Pigmenten aus der Gruppe bestehend aus Calciumcarbonat, das in Form von gemahlenen Kalk, Kreide, Marmor (GCC) oder präzipitiertem Calciumcarbonat (PCC) eingesetzt werden kann, Talkum, Kaolin, Bentonit, Satinweiß, Calciumsulfat, Bariumsulfat und Titandioxid. Ein anorganisches Partikel ist auch eine kolloidale Lösung von Polykieselsäuren, in denen die Kieselsäurepartikel typischerweise einen Teilchengrösse zwischen 5 und 150 nm besitzen.

Ein Füllstoff (a-e) umfasst hierin auch zwei oder mehr unterschiedliche Füllstoffe. Entsprechend teilt sich Füllstoff (a-e) als möglicher weiterer Bestandteil einer wässrigen Faserstoffsuspension in einen ersten Füllstoff (a-e-1), einen zweiten Füllstoff (a-e-2), ... etc. auf.

Bevorzugt werden anorganische Pigmente mit einer mit einer mittleren Teilchengröße (Volumen-Mittel) ≤10 µm, bevorzugt von 0,3 bis 5 µm, insbesondere von bis 0,5 bis 2 µm eingesetzt.

Die Bestimmung der mittleren Teilchengröße (Volumen-Mittel) der anorganischen Pigmente sowie der Teilchen der Pulverzusammensetzung erfolgt im Rahmen dieser Schrift generell nach der Methode der quasielastischen Lichtstreuung (DIN-ISO 13320-1) beispielsweise mit einem Mastersizer 2000 der Fa. Malvern Instruments Ltd..

Bevorzugt ist ein Verfahren, bei dem im Schritt (A) der ersten Faserstoffsuspension oder der zweiten Faserstoffsuspension enthaltend Polymer P ein Füllstoff (a-e) zugesetzt wird.

Die Gesamtmenge an Füllstoff (a-e) ist bevorzugt 0 bis 40 Gew.-% bezogen auf das entstehende Papier oder Karton und basierend auf einem Trockengehalt von 100 Gew.-% des Füllstoffs (a-e) und einem Trockengehalt des Papiers oder Kartons von 100 Gew.-%. Sehr bevorzugt ist die Gesamtmenge an Füllstoff (a-e) 5 bis 30 Gew.-%, besonders bevorzugt 15 bis 25 Gew.% und ganz besonders bevorzugt 15 bis 20 Gew.-%.

Bevorzugt enthält das entstehende Papier oder Karton eine Gesamtmenge von Füllstoff (a-e) von 5 bis 30 Gew.-%. Derartige Papiere sind beispielsweise holzfreie Papiere. Bevorzugt enthält das entstehende Papier oder Karton eine Gesamtmenge an Füllstoff (a-e) von 5 bis 20 Gew.-%. Derartige Papiere werden vor allem als Verpackungspapiere eingesetzt. Bevorzugt enthält das entstehende Papier oder Karton eine Gesamtmenge von Füllstoff (a-e) an 5 bis 15 Gew.-%. Derartige Papiere werden vor allem für den Zeitungsdruck eingesetzt. Bevorzugt enthält das entstehende Papier oder Karton eine Gesamtmenge an Füllstoff (a-e) von 25 bis 40 Gew.-%. Derartige Papiere sind beispielsweise SC-Papiere (Super Calandered).

Im Schritt (A) erfolgt das Zugeben des Polymer P zur ersten wässrigen Faserstoffsuspension bevorzugt bevor ein Füllstoff (a-e) zugegeben wird. Sehr bevorzugt erfolgt das Zugeben des Polymer P bevor ein Füllstoff (a-e) und bevor ein organisches Polymer (a-d) mit Ausnahme von kationischer Stärke zugegeben wird. Besonders bevorzugt erfolgt das Zugeben des Polymer P bevor ein Füllstoff (a-e), bevor ein organisches Polymer (a-d) mit Ausnahme von kationischer Stärke und bevor ein anderes Papierhilfsmittel (a-f) der ersten wässrigen Faserstoffsuspension zugegeben wird.

Im Schritt (A) erfolgt die etwaige Zugabe eines Füllstoffs (a-e) bevorzugt zu der zweiten Faserstoffsuspension enthaltend Polymer P, die einen Trockengehalt von 0,1 Gew.-% bis zu 1,5 Gew.-% aufweist. Diese Zugabe entspricht der sogenannten Dünnstoffzugabe. Die zweite Faserstoffsuspension enthaltend Polymer P liegt hierbei mit diesem Trockengehalt bereits vor oder ist zuvor ausgehend einem Trockengehalt von über 0,15 Gew.-% bis zu 6,0 Gew.-% zu einem Trockengehalt von 0,1 Gew.-% bis zu 1,5 Gew.-% verdünnt worden.

Im Schritt (A) erfolgt die etwaige Zugabe eines Füllstoffs (a-e) bevorzugt zu der zweiten Faserstoffsuspension enthaltend Polymer P, wobei ein erster Teil der Gesamtmenge des zuzugebenden Füllstoffs (a-e) zu der Faserstoffsuspension enthaltend Polymer P, die einen Trockengehalt von über 0,15 Gew.-% bis zu 6,0 Gew.-% aufweist, zugegeben wird, und ein zweiter Teil der Gesamtmenge des zuzugebenden Füllstoffs (a-e) zu der Faserstoffsuspension enthaltend Polymer P zugegeben wird, nachdem diese auf einen Trockengehalt von 0,1 Gew.-% bis zu 1,5 Gew.-% verdünnt ist. Der erste Teil und der zweite Teil bilden die Gesamtmenge an zuzugebendem Füllstoff (a-e). Das Gewichtsverhältnis des ersten Teils zu dem zweiten Teil liegt dabei zwischen 5 und 0,2.

Ein möglicher weiterer Bestandteil einer wässrigen Faserstoffsuspension enthaltend Polymer P ist (a-f) ein anderes Papierhilfsmittel. Ein anderes Papierhilfsmittel (a-f) ist verschieden von den vorgenannten Komponenten (a-b), dem Polymer P als (a-c), (a-d) und (a-e). Ein anderes Papierhilfsmittel (a-f) ist beispielsweise ein Masseleimungsmittel, ein wasserlösliches Salz eines trivalenten Metallkations, ein Entschäumer, ein nichtpolymeres Nassfestmittel, ein Biozid, ein optischer Aufheller oder ein Papierfarbstoff. Beispiele für ein Masseleimungsmittel sind Alkylketendimere (AKD), Alkenylbernsteinsäureanhydride (ASA) und Harzleim. Beispiele für ein wasserlösliches Salz eines trivalenten Metallkations sind Aluminium(III)-Salze, insbesondere AlCl₃ wie z.B. AlCl₃·6 H₂O, Al₂(SO₄)₃ wie z.B. Al₂(SO₄)₃·18 H₂O, oder KAl(SO₄)₂·12 H₂O. Die anderen Papierhilfsmittel (a-f) können bevorzugt in den üblichen Mengen eingesetzt werden.

Bevorzugt wird ein anderes Papierhilfsmittel (a-f) der zweiten Faserstoffsuspension enthaltend Polymer P, die einen Trockengehalt von 0,1 Gew.-% bis zu 1,5 Gew.-% aufweist, zugegeben. Diese Zugabe entspricht der sogenannten Dünnstoffzugabe. Die zweite Faserstoffsuspension enthaltend Polymer P liegt hierbei mit diesem Trockengehalt bereits vor oder ist zuvor ausgehend einem Trockengehalt von über 0,15 Gew.-% bis zu 6,0 Gew.-% zu einem Trockengehalt von 0,1 Gew.-% bis zu 1,5 Gew.-% verdünnt worden.

Ein anderes Papierhilfsmittel (a-f) umfasst hierin auch zwei oder mehr unterschiedliche andere Papierhilfsmittel. Entsprechend teilt sich anderes Papierhilfsmittel (a-f) als möglicher weiterer Bestandteil einer zweiten wässrigen Faserstoffsuspension enthaltend Polymer P in ein erstes anderes Papierhilfsmittel (a-f-1), ein zweites anderes Papierhilfsmittel (a-f-2), ... etc. auf.

Einer wässrigen Faserstoffsuspension werden bei der Papierherstellung oft mehr als ein organisches Polymer (a-d) und mehr als ein Füllstoff (a-e) zugegeben. Im Falle eines organischen Polymers (a-d) dient dies zum Beispiel dazu, technische Eigenschaften des Papierherstellungsverfahrens selbst oder technische Eigenschaften des hergestellten Papiers zu beeinflussen. So werden Retentionsmittel, Entwässerungsmittel, Nassfestmittel oder andere Trockenverfestiger eingesetzt.

Beispiele für Retentionsmittel sind kationische, amphotere oder anionische organische Polymere (a-d). Beispiele sind ein anionisches Polyacrylamid, ein kationisches Polyacrylamid, eine kationische Stärke, ein kationisches Polyethylenimin oder ein kationisches Polyvinylamin. Ein Retentionsmittel ist beispielsweise ein Füllstoff (a-e), der ein anionisches Mikropartikel ist, insbesondere kolloidale Kieselsäure oder Bentonit. Auch Kombinationen der vorgenannten Beispiele sind möglich. Als eine Kombination ist insbesondere ein duales System zu nennen, das aus einem kationischen Polymer mit einem anionischen Mikropartikel oder einem anionischen Polymer mit einem kationischen Mikropartikel besteht. Bevorzugt als Retentionsmittel ist ein synthetisches organisches Polymer (a-d) oder ein duales System. Im Falle eines dualen Systems als Retentionsmittel liegt dann beispielsweise bereits ein kationisches erstes organisches Polymer (a-d-1) in Kombination mit einem ersten Füllstoff (a-e-1), zum Beispiel einem geeigneten Bentonit, vor, und ein zweiter Füllstoff (a-e-2) ist dann Calciumcarbonat.

Beispiele für einen anderen Trockenverfestiger sind ein synthetisches organisches Polymer (a-d) wie beispielsweise Polyvinylamin, Polyethylenimin, Polyacrylamid oder glyoxyliertes Polyacrylamid, ein natürliches organisches Polymer (a-d) wie unmodifizierte Stärke oder ein modifiziert-natürliches organisches Polymer (a-d) wie eine kationisch modifizierte Stärke oder eine oxidativ oder enzymatisch abgebaute Stärke. Die Zugabe eines anderen Trockenverfestigers erfolgt bevorzugt zu der ersten wässrigen Faserstoffsuspension oder der zweiten wässrigen Faserstoffsuspension enthaltend Polymer P, die beide einen Trockengehalt von über 1,5 Gew.-% bis zu 6,0 Gew.-% aufweisen. Eine Zugabe zu der ersten wässrigen Faserstoffsuspension oder der zweiten wässrigen Faserstoffsuspension enthaltend Polymer P, die jeweils einen Trockengehalt von 0,1 bis zu 1,5 Gew.-% aufweisen, ist möglich.

Die zweite wässrige Faserstoffsuspension enthaltend Polymer P ist bevorzugt frei von einem sogenannten Mikropartikel bzw. Mikroteilchen. Ein Mikropartikel ist organisch oder anorganisch. Ein organisches Mikropartikel ist ein organisches Polymer, das eine begrenzte Löslichkeit in Wasser besitzt und vernetzt sein kann. Bevorzugt ist das organische Mikropartikel unlöslich in Wasser, wobei es sehr bevorzugt eine Quellbarkeit in Wasser aufweist. Organische Mikropartikel haben ungequollen einen mittleren Teilchendurchmesser von ≤ 750 nm, bevorzugt von ≤ 500 nm, besonders im Bereich von 25 bis 300 nm Teilchengrösse. Die Polymerisation zu einem organischen Mikropartikel erfolgt üblicherweise mittels inverser Emulsionspolymerisation oder inverser Mikroemulsionspolymerisation und ist dem Fachmann allgemein bekannt. Derartige Polymerisationen werden beispielsweise in der US 2003/0192664 (Seite 6) beschrieben auf deren Lehre ausdrücklich Bezug genommen wird. Die Herstellung der Mikropartikel erfolgt in der Regel mittels (a) Zubereiten einer W/O Emulsion mit einer Ölphase als kontinuierlicher Phase und einer wässrigen diskontinuierlichen Phase, indem eine wässrige Lösung der Monomere in einem Kohlenwasserstoff in Gegenwart eines Tensids emulgiert wird und (b) Durchführen einer freien radikalischen Polymerisation. Bevorzugt verwandt werden anionische organische Mikropartikel, insbesondere Copolymere aus Acrylamid und einem oder mehreren anionischen Monomeren. Anorganische Mikropartikel weisen im Gegensatz zu anorganischen Füllstoffen, die eine spezifische Oberflächen nach BET von ≤ 20 m²/g haben, eine spezifische Oberfläche nach BET von ≥ 100 m²/g auf (BET-Messung nach DIN ISO 9277:2003-05). Als anorganische Mikropartikel kommen bevorzugt Bentonit, kolloidale Kieselsäure, Silikate und/oder Calciumcarbonat mit einem BET-Wet von ≥ 100 m²/g in Betracht. Unter Bentonit werden allgemein Schichtsilikate verstanden, die in Wasser quellbar sind. Es handelt sich hierbei vor allem um das Tonmineral Montmorrillonit sowie ähnliche Tonmineralien wie Nontronit, Hectorit, Saponit, Sauconit, Beidellit, Allevardit, Illit, Halloysit, Attapulgit und Sepiolit. Diese Schichtsilikate werden vorzugsweise vor ihrer Anwendung aktiviert, d.h. in eine in Wasser quellbare Form überführt, indem man die Schichtsilikate mit einer wässrigen Base wie wässrigen Lösungen von Natronlauge, Kalilauge, Soda oder Pottasche behandelt. Als kollodiale Kieselsäure können Produkte beispielsweise aus der Gruppe von Silica-Microgele und Silica-Sole eingesetzt werden. Diese haben eine spezifische Oberfläche von 200 - 1000 m²/g und eine durchschnittliche Teilchengrößenverteilung von 1 - 250 nm, normalerweise im Bereich 40 - 100 nm. Der Möglichkeit des Verzichts auf Mikropartikel kann gegebenenfalls ein Vorteil des erfindungsgemässen Verfahrens sein.

Im Schritt (B) wird die zweite wässrige Faserstoffsuspension enthaltend Polymer P auf die wasserdurchlässige Unterlage aufgetragen. Die wasserdurchlässige Unterlage hat eine Oberseite und eine Unterseite und feine Öffnungen, die Wasser durchlassen aber faserige Bestandteile im Wesentlichen nicht. Die zweite Faserstoffsuspension enthaltend Polymer P wird gleichmässig auf die wasserdurchlässige Unterlage aufgetragen. Die Oberseite der wasserdurchlässigen Unterlage ist eine im Moment des Auftragens im wesentlichen ebene Fläche, d.h. abgesehen von den feinen Öffnungen oder sonstigen materialbedingten Unebenheiten sowie einer gewissen etwaigen Radiusbiegung. Dies erlaubt die Erzeugung einer gleichmässig dünnen, möglichst homogenen nassen Faserstoffbahn bzw. eines nassen Papiergefüges bzw. eines nassen Papierblatts. Nach Auftragen der zweiten wässrigen Faserstoffsuspension enthaltend Polymer P laufen Teile des Wassers (a-a) durch die feinen Öffnungen ab, woraufhin es auf der Oberseite zu einer Blattbildung kommt und so das nasse Papiergefüge entsteht. Ein so hergestelltes nasses Papiergefüge ist flächig, d.h. es besitzt eine im Verhältnis zur Länge und Breite sehr kleine Höhe. Der Faserstoff der zweiten Faserstoffsuspension enthaltend Polymer P sowie mögliche andere Komponenten, die im letztlich hergestellten Papier oder Karton vorhanden sein sollen, zum Beispiel ein Füllstoff (a-e), werden hierbei idealerweise gänzlich oder zumindest im Wesentlichen in dem sich bildenden nassen Papiergefüge zurückgehalten. Mögliche weitere Komponenten der zweiten wässrigen Faserstoffsuspension enthaltend Polymer P, die zur Unterstützung des Rückhaltens der anderen Komponenten, zur Unterstützung des Entwässerns oder zur Unterstützung einer gleichmässigen Blattbildung zugesetzt sind, zum Beispiel ein organisches Polymer (a-d), entfalten bei diesem Vorgang ihre Wirkung. Meistens verbleiben auch diese möglichen weiteren Komponenten der Faserstoffsuspension gänzlich oder zumindest im Wesentlichen in der entstehenden Faserstoffbahn. Der Anteil des nassen Papiergefüges, das den Trockengehalt des nassen Papiergefüges bestimmt, enthält die zurückgehaltenen Bestandteile Faserstoff, mögliche andere Komponenten, die im letztlich hergestellten Papier vorhanden sein sollen, und die möglichen weiteren Komponenten. Abhängig von ihrem Rückhalteverhalten sind diese Bestandteile beispielsweise der genannte Faserstoff, organische Polymere, Füllstoffe und andere Papierhilfsmittel. Das nasse Papiergefüge ist am Ende des Schritts (B) fest genug, um es von der wasserdurchlässigen Unterlage abnehmen zu können.

Die wasserdurchlässige Unterlage im Schritt (B) ist bevorzugt ein Sieb. Das Sieb, das eine Sieboberseite und eine Siebunterseite hat, besitzt Siebmaschen als feine Öffnungen. Das Sieb enthält beispielsweise ein Metall- oder Kunststoffgewebe. Im Falle einer Papiermaschine ist das Sieb sehr bevorzugt ein endloses Sieb. Nachdem das entstandene nasse Papiergefüge von einem endlosen Sieb getrennt ist, läuft das endlose Sieb zurück zum Stoffauftrag, bei dem neue zweite Faserstoffsuspension enthaltend Polymer P auf das laufende endlose Sieb aufgetragen wird. Sehr bevorzugt ist das Sieb ein endloses Sieb, das um mehrere Walzen läuft. Bekannte Siebtypen für endlose Siebe sind das Langsieb, der Doppelsiebformer mit einem endlosen Untersieb und einem seinem zusätzlichen endlosen Obersieb, das Rundsieb und der Rundsiebformer. Bevorzugt ist ein Langsieb.

Der Trockengehalt des nassen Papiergefüges, das im Schritt (B) entsteht, beträgt bevorzugt 18,7 Gew.-% bis 24 Gew.-%, sehr bevorzugt 18,8 Gew.-% bis 23 Gew.-%, besonders bevorzugt 18,9 Gew.-% bis 22 Gew.-%, ganz besonders bevorzugt 19,0 Gew.-% bis 21 Gew.-% und speziell bevorzugt 19,0 Gew. bis 20,7 Gew.-%.

Im Schritt (C) erfolgt ein Entwässern des nassen Papiergefüges, das im Schritt (B) erhalten wird, zu einem Papier oder Karton. Bevorzugt erfolgt das Entwässern im Schritt (C) umfassend die Schritte
(C-1) Entwässern des nassen Papiergefüges durch Pressen, wodurch ein feuchtes Papierblatt entsteht,
(C-2) Entwässern des feuchten Papierblatts durch Wärmezufuhr, wodurch das Papier oder der Karton entsteht.

Das Pressen des nassen Papiergefüges im Schritt (C-1) führt zu einem weiteren Entwässern und entsprechender Erhöhung des Trockengehalt. Beim Entwässern durch Pressen wird mechanischer Druck auf das nasse Papiergefüge ausgeübt. Die Entfernung von Wasser durch mechanischen Druck ist energiesparender als ein Trocknen durch Zuführen von Wärme. Durch Auflegen des nassen Papiergefüges auf ein wasseraufnahmefähiges Blatt oder Band, z.B. ein filzartiges Gewebe, wird über die Aufnahme des abgepressten Wassers das Entwässern unterstützt. Eine Walze ist zur Druckausübung auf den Lagenverbund geeignet. Insbesondere das Hindurchführen des Lagenverbunds durch zwei Walzen, gegebenenfalls aufliegend auf dem wasseraufnahmefähigen Band, ist geeignet. Die Oberfläche der Walze besteht beispielsweise aus Stahl, Granit oder Hartgummi. Die Oberfläche einer Walze kann mit einem wasseraufnahmefähigen Material überzogen sein. Die wasseraufnahmefähigen Materialien weisen ein hohes Mass an Saugfähigkeit, Porosität, Festigkeit und Elasitzität auf. Die wasseraufnahmefähigen Materialien werden nach Kontakt mit dem nassen Papiergefüge ihrerseits wieder entwässert, z.B. durch ein Rakel. Am Ende des Schrittes (C-1) entsteht ein feuchtes Papierblatt. Das feuchte Papierblatt ist am Ende des Schrittes (C-1) fest genug, um ohne eine mechanische Unterstüt-zung dem nächsten Schritt (C-2) zugeführt werden zu können. Das feuchte Papierblatt hat bevorzugt einen Trockengehalt zwischen 35 Gew.-% und 65 Gew.-%, sehr bevorzugt zwischen 37 Gew.-% und 60 Gew.-%, ganz besonders bevorzugt zwischen 38 Gew.-% und 55 Gew.-%, speziell bevorzugt zwischen 40 Gew.-% und 50 Gew.-%.

Im Schritt (C-2) erfolgt ein weiteres Entwässern des feuchten Papierblatts aus Schritt (C-1) durch Wärmezufuhr, wodurch das Papier oder der Karton entsteht. Die Wärmezufuhr auf das feuchte Papierblatt erfolgt beispielsweise durch beheizte Platten, auf die das feuchte Papierblatt gelegt wird, durch beheizte Zylinder, über die das feuchte Papierblatt geführt wird, durch IR-Strahler, durch warme Luft, die über das feuchte Papierblatt geführt wird, oder durch eine Kombination zweier, dreier oder aller Massnahmen.

Das erhaltene Papier oder Karton weist die höchste Festigkeit im Vergleich mit einem nassen Papiergefüge oder dem feuchten Papierblatt auf. Einer Vermutung nach erfolgt ab einem Trockengehalt von 80 Gew.-% verstärkt ein Verbinden der Hydroxylgruppen von Zellulosefasern über Wasserstoffbrückenbindungen, das das vorherige mechanische Verfilzen der Fasern ergänzt. Ein Mass für die Festigkeit des erhaltenen Papiers oder Kartons ist beispielsweise die innere Festigkeit.

Der Trockengehalt des erhaltenen Papiers oder Kartons beträgt bevorzugt mindestens 88 Gew.-%. Der Trockengehalt des Papiers oder Kartons beträgt sehr bevorzugt zwischen 89 Gew.-% und 100 Gew.-%, besonders bevorzugt zwischen 90 Gew.-% und Gew.-98% und ganz besonders bevorzugt zwischen 91 Gew.-% und 96 Gew.-%.

Je nach flächenbezogener Masse, die auch als Flächengewicht oder Grammatur bezeichnet wird, ändert sich die Bezeichnung für den aus der zweiten Faserstoffsuspension enthaltend Polymer P entstehenden flächigen Formkörper. Ein getrockneter Formkörper mit einer flächenbezogenen Masse von 7 g/m² bis 225 g/m² wird hierin als Papier bezeichnet und mit einer flächenbezogenen Masse ab 225 g/m² als Karton. Die Grammatur des Papiers oder Kartons beträgt bevorzugt 20 bis 400 g/m², sehr bevorzugt 40 bis 280 g/m², besonders bevorzugt 60 bis 200 g/m², ganz besonders bevorzugt 80 bis 160 g/m², speziell bevorzugt 90 bis 140 g/m² und sehr speziell bevorzugt 100 bis 130 g/m².

Bevorzugt ist das entstehende Papier oder Karton ein Verpackungspapier, sehr bevorzugt ein Wellenrohpapier.

Die Bevorzugungen für das Verfahren zur Herstellung von Papier oder Karton gelten auch für die weiteren Gegenstände der Erfindung.

Ein weiterer Gegenstand der Erfindung ist ein Papier oder Karton, das erhältlich ist durch ein Verfahren enthaltend die Schritte
(A) Zugeben von einem wasserlöslichen Polymer P zu einer ersten wässrigen Faserstoffsuspension, die einen Trockengehalt zwischen 0,1 Gew.-% und 6 Gew.-% aufweist, wodurch eine zweite wässrige Faserstoffsuspension enthaltend Polymer P entsteht,
   wobei das Polymer P erhältlich ist durch
   - radikalisches Polymerisieren zu einem Polymer V von
      (i) 33 bis 83 mol% eines Monomers der Formel I 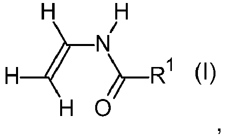 in der R¹ = H oder C₁-C₆-Alkyl bedeutet,
      (ii) 6 bis 56 mol% Diallyldimethylammoniumchlorid, Diallyldiethylammoniumchlorid oder einer Salzform eines monoethylenisch ungesättigten Monomers mit einem quaternierten Stickstoff als einziger ladungstragender Gruppe bei einem pH-Wert von 7,
      (iii) 11 bis 61 mol% einer monoethylenisch ungesättigten Carbonsäure, einer monoethylenisch ungesättigten Sulfonsäure oder einer monoethylenisch ungesättigten Phosphonsäure, oder deren Salzformen,
      (iv) 0 bis 50 mol% eines oder mehrerer ethylenisch ungesättigter Monomere, die von einem Monomer (i), (ii) und (iii) verschieden sind,
      wobei die Gesamtmenge aller Monomere (i), (ii), (iii) und (iv) 100 mol% beträgt, und
   - Hydrolysieren der N-C(=O)R¹-Gruppen der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I,
(B) Entwässern der zweiten wässrigen Faserstoffsuspension enthaltend Polymer P auf einer wasserdurchlässigen Unterlage zu einem nassen Papiergefüge, das einen Trockengehalt zwischen 18,5 Gew.% und 25 Gew.-% aufweist,
(C) Entwässern des nassen Papiergefüges, wodurch das Papier oder der Karton entsteht.

Das Papier oder Karton weist bevorzugt eine innere Festigkeit von 190 bis 450 J / m² auf, sehr bevorzugt von 195 bis 380 J / m², besonders bevorzugt von 200 bis 340 J / m², und ganz besonders von 205 bis 300 J / m², wobei die innere Festigkeit jener der Tappi -Vorschrift T833 pm-94 entspricht.

Ein weiterer Gegenstand der Erfindung ist ein wasserlösliches Polymer P, das erhältlich ist durch
- radikalisches Polymerisieren zu einem Polymer V von
   (i) 33 bis 83 mol% eines Monomers der Formel I 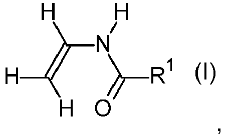 in der R¹ = H oder C₁-C₆-Alkyl bedeutet,
   (ii) 6 bis 56 mol% Diallyldimethylammoniumchlorid, Diallyldiethylammoniumchlorid oder einer Salzform eines monoethylenisch ungesättigten Monomers mit einem quaternierten Stickstoff als einziger ladungstragender Gruppe bei einem pH-Wert von 7,
   (iii) 11 bis 61 mol% einer monoethylenisch ungesättigten Carbonsäure, einer monoethylenisch ungesättigten Sulfonsäure oder einer monoethylenisch ungesättigten Phosphonsäure, oder deren Salzformen,
   (iv) 0 bis 50 mol% eines oder mehrerer ethylenisch ungesättigter Monomere, die von einem Monomer (i), (ii) und (iii) verschieden sind,
   wobei die Gesamtmenge aller Monomere (i), (ii), (iii) und (iv) 100 mol% beträgt, und
- Hydrolysieren der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I.

### Beispiele

Die Prozentangaben in den Beispielen sind Gewichtsprozent, sofern nicht anders angegeben ist.

### A) Additive

### A-1) Methoden zur Charakterisierung der Polymere

Der Festgehalt wird bestimmt, indem 0,5 bis 1,5 g der Polymerlösung in einem Blechdeckel mit 4 cm Durchmesser verteilt wird und anschließend in einem Umlufttrockenschrank bei 140°C 120 Minuten getrocknet wird. Das Verhältnis der Masse der Probe nach Trocknung unter obigen Bedingungen zur eingewogenen Probenmasse multipliziert mit 100 ergibt den Festgehalt der Polymerlösung in Gew.-%. Die Trocknung erfolgt bei Umgebungsdruck, gegebenenfalls 101,32 KPa, ohne dass eine Korrektur für eine Abweichung, die sich durch Wetter und Meereshöhe ergibt, vorgenommen wird.

Der Hydrolysegrad ist der Anteil in % der hydrolysierten N-CHO-Gruppen der bei der Polymerisation eingesetzten N-Vinylformamid-Monomeren an der Gesamtmenge des bei der Polymerisation eingesetzten N-Vinylformamids. Die Bestimmung des Hydrolysegrads der Homopolymere bzw. Copolymere, bei denen N-Vinylformamid bei der Polymerisation eingesetzt ist und die der Hydrolyse unterzogen sind, wird durch enzymatische Analyse der bei der Hydrolyse freigesetzten Ameisensäure bzw. Formiate bestimmt (Testset der Firma Boehringer Mannheim).

Der Polymergehalt gibt den Gehalt an Polymer ohne Gegenionen in der wässrigen Lösung in Gew.-% an, d.h. Gegenionen werden nicht berücksichtigt. Der Polymergehalt ist die Summe der Gewichtsanteile aller Struktureinheiten des Polymers in g, die in 100 g der wässrigen Lösung vorhanden sind. Seine Ermittlung erfolgt rechnerisch. Dazu werden potentiell ladungstragende Struktureinheiten in der geladenen Form einberechnet, d.h. z.B. Aminogruppen in der protonierten Form und Säuregruppen in der deprotonierten Form. Gegenionen der geladenen Struktureinheiten wie ein Natriumkation, Chlorid, Phosphat, Formiat, Acetat usw. werden nicht berücksichtigt. Die Berechnung kann in der Weise erfolgen, dass für einen Ansatz ausgehend von den Einsatzmengen an Monomeren, gegebenenfalls einem Hydrolysegrad gewisser Monomere und gegebenenfalls einem Anteil an Reaktanden, der polymeranalog durch Reaktion mit dem Polymer unter Ausbildung einer kovalenten Bindung umgesetzt wird, die molaren Mengen der am Ende der Reaktion vorhandenen Struktureinheiten des Polymers ermittelt und diese mit Hilfe der molaren Massen der Struktureinheiten in Gewichtsanteile umgerechnet werden. Hierzu wird von ein vollständiger, d.h. 100%iger Umsatz aller eingesetzten Monomere bzw. allgemein Reaktanden angenommen. Die Summe der Gewichtsanteile ergibt die Gesamtmenge des Polymers in diesem Ansatz. Der Polymergehalt ergibt sich aus dem Verhältnis der Gesamtmenge an Polymer zur Gesamtmasse des Ansatzes. Die Gesamtmasse des Ansatzes enthält neben der vorgenannten Gesamtmenge an Polymer folglich Reaktionsmedium, gegebenenfalls Kationen oder Anionen sowie alles zum Reaktionsansatz Zugegebene, das nicht als ins Polymer eingebaut angenommen wird. Abgezogen werden aus dem Reaktionsansatz entfernte Stoffe (z.B. gegebenenfalls abdestilliertes Wasser etc.).

Der Gesamtgehalt an primären Aminogruppen und / oder Amidingruppen kann analog der vorstehend für den Polymergehalt beschriebenen Vorgehensweise erfolgen. Ausgehend von den Einsatzmengen an Monomere, dem analytisch bestimmten Hydrolysegrad, dem mit ¹³C-NMR-Spektroskopie bestimmten Verhältnis von Amidingruppen zu primären Aminogruppen und gegebenenfalls dem Anteil, der polymeranalog durch Reaktion mit dem Polymer unter Ausbildung einer kovalenten Bindung umgesetzt wurde, wird die molaren Zusammensetzung der am Ende der Reaktion vorhandenen Struktureinheiten des Polymers ermittelt. Mit Hilfe der Molmasse der einzelnen Struktureinheiten kann daraus der molare Anteil an primären Aminogruppen und/oder Amidineinheiten in meq errechnet werden, der sich in 1 g Polymer befindet. Bei der Bestimmung mittels ¹³C-NMR-Spektroskopie kann die Fläche der Formiatgruppe HCOO- (173 [ppm]) ins Verhältnis mit der Fläche der Amidingruppe -N=CH-N- (152 ppm) gesetzt werden.

Die K-Werte werden nach H. Fikentscher, Cellulosechemie, Band 13, 48-64 und 71-74 unter den jeweils angegebenen Bedingungen gemessen. Die Angaben in Klammer geben die Konzentration der Polymerlösung basierend auf dem Polymergehalt sowie das Lösungsmittel an. Die Messungen wurden bei 25°C und einem pH-Wert von 7,5 durchgeführt.

Bei der Herstellung der Additive wurde, sofern nicht anders angegeben, ausschliesslich vollständig entsalztes Wasser verwandt.

### A-2) Polymerisationen und Hydrolysen

### Beispiel P-P1: Additiv 1

### (hydrolysiertes Terpolymer VFA/DADMAC/Na-Acrylat = 40 mol%/ 30 mol%/ 30mol%, K-Wert 95)

### a) Polymerisation Vorstufe V1

Als Zulauf 1 wurden eine Mischung aus 209,8 g wässriger 32 gew.-%iger Na-Acrylatlösung, die auf pH 6,4 eingestellt war, und 68,3 g N-Vinylformamid bereitgestellt,
Als Zulauf 2 wurden 1,5 g 2,2'-Azobis(2-methylpropionamidin)dihydrochlorid in 74,5 g Wasser bei Raumtemperatur gelöst.

Als Zulauf 3 wurden 1,6 g 2,2'-Azobis(2-methylpropionamidin)dihydrochlorid in 80,4 g Wasser bei Raumtemperatur gelöst.

Als Zulauf 4 wurden 200g Wasser und als Zulauf 5 340 g Wasser bereitgestellt.

In einer 2 L Glasapparatur mit Ankerrührer, absteigendem Kühler, Innenthermometer und Stickstoffeinleitungsrohr wurden 200 g Wasser und 2,2 g 75 gew.-%ige Phosphorsäure vorgelegt. Bei einer Drehzahl von 100 UpM wurden ca. 3,0 g einer 25 gew.-%igen Natronlauge zugegeben, sodass ein pH von 6,5 erreicht wurde. Anschließend wurden 177,3 g einer 65 gew-%igen, wässrigen DADMAC (= Diallyldimethylammoniumchlorid) Lösung untergemischt. Die Vorlage wurde auf 63°C erhitzt und der Druck in der Apparatur auf ca. 210 mbar reduziert, so dass die Reaktionsmischung bei 63°C gerade zu sieden begann. Dann wurden die Zuläufe 1 und 2 gleichzeitig gestartet und bei konstanten 63°C synchron in 4 h zudosiert. 1,5 h nach Start von Zulauf 1 wurde der Wasserzulauf 4 gestartet und in 2,5 h zudosiert. Nach Ende der der Zuläufe 1, 2 und 4 wurde der Zulauf 3 innerhalb von 2 h zugegeben. 30 min nach Start von Zulauf 3 (= 4,5 h nach Start von Zulauf 1) wurde der Druck auf 500 mbar eingestellt und die Innentemperatur auf 85°C erhöht. Nach Ende von Zulauf 3 wurde der Ansatz für eine weitere Stunde bei 85°C gehalten und anschließend der Zulauf 5 so rasch als möglich untergemischt. Der Ansatz wurde auf RT abgekühlt und das Vakuum durch Belüften mit Normalluft aufgehoben. Während der gesamten Polymerisationsdauer (7 h) wurde konstant Wasser abdestilliert, sodass insgesamt 108 g abdestilliert wurden.

Erhalten wurde eine gelbe, stark viskose Lösung mit einem Festgehalt von 20,5 Gew.-%. Der K-Wert des Copolymers betrug 95 (0,5 gew.-%ig in 5 gew.-%iger wässriger NaCl-Lösung)

### b) Hydrolyse zum Endprodukt Additiv 1

190,0 g der vorstehend erhaltenen Polymerlösung V1 wurden in einem 500 mL Vierhalskolben mit Blattrührer, Innenthermometer, Tropftrichter und Rückflusskühler bei einer Rührerdrehzahl von 80 UpM mit 0,8 g einer 40 gew.-%igen wässrigen Natriumbisulfitlösung versetzt und anschließend auf 80°C erhitzt. Dann wurden 28,0 g einer 25 gew.-%igen wässrigen Natronlauge zugegeben. Die Mischung wurde 7 Stunden bei 80°C gehalten. Das erhaltene Produkt wurde auf Raumtemperatur abgekühlt und durch die Zugabe von 15,9 g 37 gew.-%iger Salzsäure auf pH 6,8 eingestellt.

Erhalten wurde eine leicht gelbe, viskose Polymerlösung mit einem Festgehalt von 20,6 Gew.- % und einem Polymergehalt von 12.0% Gew.-%. Der Hydrolysegrad der Vinylformamideinheiten betrug 94 Mol%.

### Beispiel P-P2: Additiv 2

### (hydrolysiertes Terpolymer VFA/DADMAC/Na-Acrylat = 35 mol%/ 35mol%/ 30mol%, K-Wert 79)

### a) Polymerisation Vorstufe V2

Als Zulauf 1 wurden eine Mischung aus 209,8 g wässriger 32 gew.-%iger Na-Acrylatlösung, die auf pH 6,4 eingestellt war, und 59,8 g N-Vinylformamid bereitgestellt.

Als Zulauf 2 wurden 1,6 g 2,2'-Azobis(2-methylpropionamidin)dihydrochlorid in 78,4 g Wasser bei Raumtemperatur gelöst.

Als Zulauf 3 wurden 1,7g 2,2'-Azobis(2-methylpropionamidin)dihydrochlorid in 84,3 g Wasser bei Raumtemperatur gelöst.

Als Zulauf 4 wurden 200g Wasser und als Zulauf 5 340 g Wasser bereitgestellt
In einer 2 L Glasapparatur mit Ankerrührer, absteigendem Kühler, Innenthermometer und Stickstoffeinleitungsrohr wurden 200 g Wasser und 2,2 g 75 gew.-%ige Phosphorsäure vorgelegt. Bei einer Drehzahl von 100 UpM wurden ca. 3,0 g einer 25 gew.-%igen Natronlauge zugegeben, sodass ein pH von 6,5 erreicht wurde. Anschließend wurden 206,8 g einer 65 gew-%igen, wässrigen DADMAC Lösung untergemischt. Die Vorlage wurde auf 63°C erhitzt und der Druck in der Apparatur auf ca.210 mbar reduziert, sodass die Reaktionsmischung bei 63°C gerade zu sieden begann. Dann wurden die Zuläufe 1 und 2 gleichzeitig gestartet und bei konstanten 63°C synchron in 4 h zugegeben. 1,5 h nach Start von Zulauf 1 wurde der Wasserzulauf 4 gestartet und in 2,5 h zugegeben. Nach Ende der Zuläufe 1, 2 und 4 wurde der Zulauf 3 innerhalb von 2 h zugegeben. 30 min nach Start von Zulauf 3 (= 4,5 h nach Start von Zulauf 1) wurde der Druck auf 500 mbar eingestellt und die Innentemperatur auf 85°C erhöht. Nach Ende von Zulauf 3 wurde der Ansatz für eine weitere Stunde bei 85°C gehalten und anschließend der Zulauf 5 so rasch als möglich untergemischt. Der Ansatz wurde auf RT abgekühlt und das Vakuum durch Belüften mit Normalluft aufgehoben. Während der gesamten Polymerisationsdauer (7 h) wurde konstant Wasser abdestilliert, sodass insgesamt 96 g abdestilliert wurden.

Erhalten wurde eine gelbe, viskose Lösung mit einem Festgehalt von 20,6 Gew.-%. Der K-Wert des Copolymers betrug 79 (0,5gew.-%ig in 5gew.-%iger wässriger NaCl-Lösung).

### b) Hydrolyse zum Endprodukt

190,0 g der vorstehend erhaltenen Polymerlösung V2 wurden in einem 500 mL Vierhalskolben mit Blattrührer, Innenthermometer, Tropftrichter und Rückflusskühler bei einer Rührerdrehzahl von 80 UpM mit 0,6 g einer 40 gew.-%igen wässrigen Natriumbisulfitlösung versetzt und anschließend auf 80°C erhitzt. Dann wurden 25,0 g einer 25 gew.-%igen wässrigen Natronlauge zugegeben. Die Mischung wurde 8 Stunden bei 80°C gehalten. Das erhaltene Produkt wurde auf Raumtemperatur abgekühlt und durch die Zugabe von 13,1 g 37 gew.-%iger Salzsäure auf pH 6,7 eingestellt.

Erhalten wurde eine leicht gelbe, viskose Polymerlösung mit einem Festgehalt von 20,6% und einem Polymergehalt von 12,7%. Der Hydrolysegrad der Vinylformamideinheiten betrug 95 Mol%.

### Beispiel P-P3: Additiv 3

### (hydrolysiertes Terpolymer VFA/DADMAC/Na-Acrylat = 40 mol%/ 40 mol%/ 20mol%, K-Wert 71)

### a) Polymerisation Vorstufe V3

Als Zulauf 1 wurden eine Mischung aus 134,2 g wässriger 32 gew.-%iger Na-Acrylatlösung, die auf pH 6,4 eingestellt war, und 65,5 g N-Vinylformamid bereitgestellt.

Als Zulauf 2 wurden 1,6 g 2,2'-Azobis(2-methylpropionamidin)dihydrochlorid in 78,4 g Wasser bei Raumtemperatur gelöst.

Als Zulauf 3 wurden 1,4 g 2,2'-Azobis(2-methylpropionamidin)dihydrochlorid in 70,6 g Wasser bei Raumtemperatur gelöst.

Als Zulauf 4 wurden 200g Wasser und als Zulauf 5 540 g Wasser bereitgestellt
In einer 2 L Glasapparatur mit Ankerrührer, absteigendem Kühler, Innenthermometer und Stickstoffeinleitungsrohr wurden 200 g Wasser und 2,2 g 75 gew.-%ige Phosphorsäure vorgelegt. Bei einer Drehzahl von 100 UpM wurden ca. 3,0 g einer 25 gew.-%igen Natronlauge zugegeben, sodass ein pH von 6,5 erreicht wurde. Anschließend wurden 226,8 g einer 65 gew-%igen, wässrigen DADMAC Lösung untergemischt. Die Vorlage wird auf 63°C erhitzt und der Druck in der Apparatur auf ca. 210 mbar reduziert, so dass die Reaktionsmischung bei 63°C gerade zu sieden begann. Dann wurden die Zuläufe 1 und 2 gleichzeitig gestartet und bei konstanten 63°C synchron in 4 h zudosiert. 1,5 h nach Start von Zulauf 1 wurde der Wasserzulauf 4 gestartet und in 2,5 h zudosiert. Nach Ende der der Zulaufe 1, 2 und 4 wurde der Zulauf 3 innerhalb von 2 h zugegeben. 30 min nach Start von Zulauf 3 (= 4,5 h nach Start von Zulauf 1) wurde der Druck auf 500 mbar eingestellt und die Innentemperatur auf 85°C erhöht. Nach Ende von Zulauf 3 wurde der Ansatz für eine weitere Stunde bei 85°C gehalten und anschließend der Zulauf 5 so rasch als möglich untergemischt. Der Ansatz wurde auf RT abgekühlt und das Vakuum durch Belüften mit Normalluft aufgehoben. Während der gesamten Polymerisationsdauer (7 h) wurde konstant Wasser abdestilliert, sodass insgesamt 207 g abdestilliert wurden.

Erhalten wurde eine leicht gelbe, viskose Lösung mit einem Festgehalt von 20,8 Gew.-%. Der K-Wert des Copolymers betrug 71 (0,5 gew.-%ig in 5 gew.-%iger wässriger NaCl-Lösung)

### b) Hydrolyse zum Endprodukt

210,0 g der vorstehend erhaltenen Polymerlösung V3 wurden in einem 500 mL Vierhalskolben mit Blattrührer, Innenthermometer, Tropftrichter und Rückflusskühler bei einer Rührerdrehzahl von 80 UpM mit 0,8 g einer 40 gew.-%igen wässrigen Natriumbisulfitlösung versetzt und anschließend auf 80°C erhitzt. Dann wurden 26,8 g einer 25 gew.-%igen wässrigen Natronlauge zugegeben. Die Mischung wurde 5,5 h bei 80°C gehalten. Das erhaltene Produkt wurde auf Raumtemperatur abgekühlt und durch die Zugabe von 13,7g 37 gew.-%iger Salzsäure auf pH 7,9 eingestellt.

Erhalten wurde eine leicht gelbe, viskose Polymerlösung mit einem Festgehalt von 20,5% Gew.-% und einem Polymergehalt von 12,7 Gew.-%. Der Hydrolysegrad der Vinylformamideinheiten betrug 97 Mol%.

### Beispiel P-P4: Additiv 4

### (hydrolysiertes Terpolymer VFA/DADMAC/Na-Acrylat = 50 mol%/ 20 mol%/ 30mol%, K-Wert 97)

### a) Polymerisation Vorstufe V4

Als Zulauf 1 wurden eine Mischung aus 284,1 g wässriger 32 gew.-%iger Na-Acrylatlösung, die auf pH 6,4 eingestellt war, und 115,6 g N-Vinylformamid (99%) bereitgestellt.

Als Zulauf 2 wurden 0,9 g 2,2'-Azobis(2-methylpropionamidin)dihydrochlorid in 45,4 g Wasser bei Raumtemperatur gelöst.

Als Zulauf 3 wurden 1,7 g 2,2'-Azobis(2-methylpropionamidin)dihydrochlorid in 84,2 g Wasser bei Raumtemperatur gelöst.

Als Zulauf 4 wurden 200 g Wasser und als Zulauf 5 228 g Wasser bereitgestellt
In einer 2 L Glasapparatur mit Ankerrührer, absteigendem Kühler, Innenthermometer und Stickstoffeinleitungsrohr wurden 200 g Wasser und 3,0 g 75 gew.-%ige Phosphorsäure vorgelegt. Bei einer Drehzahl von 100 UpM wurden ca. 4,7 g einer 25 gew.-%igen Natronlauge zugegeben, sodass ein pH von 6,6 erreicht wurde. Anschließend wurden 160,0 g einer 65 gew-%igen wässrigen DADMAC Lösung untergemischt. Die Vorlage wurde auf 66°C erhitzt und der Druck in der Apparatur auf ca. 250 mbar reduziert, sodass die Reaktionsmischung bei 66°C gerade zu sieden begann. Dann wurden die Zuläufe 1 und 2 gleichzeitig gestartet und bei konstanten 66°C synchron in 4 h zu dosiert. 1,5 h nach Start von Zulauf 1 wurde der Wasserzulauf 4 gestartet und in 2,5 h zudosiert. Nach Ende der Zuläufe 1, 2 und 4 wurde der Zulauf 3 innerhalb von 2 h zugegeben. 1 h nach Start von Zulauf 3 (= 5 h nach Start von Zulauf 1) wurde der Druck auf 650 mbar eingestellt und die Innentemperatur auf 90°C erhöht. Nach Ende von Zulauf 3 wurde der Ansatz für eine weitere Stunde bei 85°C gehalten und anschließend der Zulauf 5 so rasch als möglich untergemischt. Der Ansatz wurde auf RT abgekühlt und das Vakuum durch Belüften mit Normalluft aufgehoben. Während der gesamten Polymerisationsdauer (7 h) wurde konstant Wasser abdestilliert, sodass insgesamt 78 g abdestilliert wurden.

Erhalten wurde eine leicht gelbe, stark viskose Lösung mit einem Festgehalt von 26,7 Gew.-%. Der K-Wert des Copolymers betrug 97 (0,5gew.-%ig in 5gew.-%iger wässriger NaCl-Lösung)

### b) Hydrolyse zum Endprodukt

180,0 g der vorstehend erhaltenen Polymerlösung V4 wurden in einem 500 mL Vierhalskolben mit Blattrührer, Innenthermometer, Tropftrichter und Rückflusskühler bei einer Rührerdrehzahl von 80 UpM mit 1,3 g einer 40 gew.-%igen wässrigen Natriumbisulfitlösung versetzt und anschließend auf 80°C erhitzt. Dann wurden 43,1 g einer 25 gew.-%igen wässrigen Natronlauge zugegeben. Die Mischung wurde 6 h bei 80°C gehalten. Das erhaltene Produkt wurde auf Raumtemperatur abgekühlt und durch die Zugabe von 21,2 37 gew.-%iger Salzsäure auf pH 7,8 eingestellt.

Erhalten wurde eine leicht gelbe, viskose Polymerlösung mit einem Festgehalt von 24,8 Gew.- % und einem Polymergehalt von 13,8 Gew.-%. Der Hydrolysegrad der Vinylformamideinheiten betrug 95 mol%.

### Beispiel P-P5: Additiv 5

### (hydrolysiertes Terpolymer VFA/DADMAC/Na-Acrylat = 60 mol%/ 10 mol%/ 30mol%, K-Wert 100)

### a) Polymerisation Vorstufe V5

Als Zulauf 1 wurden eine Mischung aus 313,6 g wässriger 32 gew.-%iger Na-Acrylatlösung, die auf pH 6,4 eingestellt war, und 153,2 g N-Vinylformamid bereitgestellt.

Als Zulauf 2 wurden 1,8 g 2,2'-Azobis(2-methylpropionamidin)dihydrochlorid in 86,7 g Wasser bei Raumtemperatur gelöst.

Als Zulauf 3 wurden 1,0 g 2,2'-Azobis(2-methylpropionamidin)dihydrochlorid in 47,6 g Wasser bei Raumtemperatur gelöst.

Als Zulauf 4 wurden 200g Wasser und als Zulauf 5 265 g Wasser bereitgestellt
In einer 2 L Glasapparatur mit Ankerrührer, absteigendem Kühler, Innenthermometer und Stickstoffeinleitungsrohr wurden 200 g Wasser und 3,0 g 75 gew.-%ige Phosphorsäure vorgelegt. Bei einer Drehzahl von 100 UpM wurden ca. 4,7 g einer 25 gew.-%igen Natronlauge zugegeben, sodass ein pH von 6,5 erreicht wurde. Anschließend wurden 88,3 g einer 65 gew.-%igen wässrigen DADMAC Lösung untergemischt. Die Vorlage wurde auf 63°C erhitzt und der Druck in der Apparatur auf ca. 210 mbar reduziert, sodass die Reaktionsmischung bei 63°C gerade zu sieden begann. Dann wurden die Zuläufe 1 und 2 gleichzeitig gestartet und bei konstanten 63°C synchron in 4 h zu dosiert. 1,5 h nach Start von Zulauf 1 wurde der Wasserzulauf 4 gestartet und in 2,5 h zudosiert. Nach Ende der Zuläufe 1, 2 und 4 wurde der Zulauf 3 innerhalb von 2 h zugegeben. 1 h nach Start von Zulauf 3 (= 5 h nach Start von Zulauf 1) wurde der Druck auf 380 mbar eingestellt und die Innentemperatur auf 75°C erhöht. Nach Ende von Zulauf 3 wurde der Ansatz für eine weitere Stunde bei 75°C gehalten und anschließend der Zulauf 5 so rasch als möglich untergemischt. Der Ansatz wurde auf RT abgekühlt und das Vakuum durch Belüften mit Normalluft aufgehoben. Während der gesamten Polymerisationsdauer (7 h) wurde konstant Wasser abdestilliert, sodass insgesamt 114 g abdestilliert wurden.

Erhalten wurde eine gelbe, stark viskose Lösung mit einem Festgehalt von 24,5 Gew.-%. Der K-Wert des Copolymers betrug 100 (0,5 gew.-%ig in 5 gew.-%iger wässriger NaCl-Lösung).

### b) Hydrolyse zum Endprodukt

170,0 g der vorstehend erhaltenen Polymerlösung V5 wurden in einem 500 mL Vierhalskolben mit Blattrührer, Innenthermometer, Tropftrichter und Rückflusskühler bei einer Rührerdrehzahl von 80 UpM mit 1,5 g einer 40 gew.-%igen wässrigen Natriumbisulfitlösung versetzt und anschließend auf 80°C erhitzt. Dann wurden 49,5 g einer 25 gew.-%igen wässrigen Natronlauge zugegeben. Die Mischung wurde 7 h bei 80°C gehalten. Das erhaltene Produkt wurde auf Raumtemperatur abgekühlt und durch die Zugabe von 22,2 g 37 gew.-%iger Salzsäure auf pH 8,1 eingestellt.

Erhalten wurde eine leicht gelbe, viskose Polymerlösung mit einem Festgehalt von 22,9 Gew.- % und einem Polymergehalt von 11,8 Gew.-%. Der Hydrolysegrad der Vinylformamideinheiten betrug 96 Mol%.

### Beispiel P-P6: Additiv 6

### (hydrolysiertes Copolymer VFA/DADMAC/Na-Acrylat/TAACI = 39,99 mol%/ 30,02 mol%/ 29,97 mol%/ 0.02 mol%, vereinfachte Beschreibung: vernetztes hydrolysiertes Terpolymer VFA/DADMAC/Na-Acrylat/ = 40 mol%/ 30 mol%/ 30 mol% und 0,02 mol% TAACI als Vernetzer, K-Wert 86)

### a) Polymerisation Vorstufe V6

Als Zulauf 1 wurden eine Mischung aus 209,8 g wässriger 32 gew.-%iger Na-Acrylatlösung, die auf pH 6,4 eingestellt war, 68,3 g N-Vinylformamid und 0,1 g N,N,N,N-Tetraallylammoniumchlorid bereitgestellt.

Als Zulauf 2 wurden 1,5 g 2,2'-Azobis(2-methylpropionamidin)dihydrochlorid in 74,5 g Wasser bei Raumtemperatur gelöst.

Als Zulauf 3 wurden 1,6 g 2,2'-Azobis(2-methylpropionamidin)dihydrochlorid in 80,4 g Wasser bei Raumtemperatur gelöst.

Als Zulauf 4 wurden 200g Wasser und als Zulauf 5 340 g Wasser bereitgestellt
In einer 2 L Glasapparatur mit Ankerrührer, absteigendem Kühler, Innenthermometer und Stickstoffeinleitungsrohr wurden 200 g Wasser und 2,2 g 75 gew.-%ige Phosphorsäure vorgelegt. Bei einer Drehzahl von 100 UpM wurden ca. 3,0 g einer 25 gew.-%igen Natronlauge zugegeben, sodass ein pH von 6,5 erreicht wurde. Anschließend wurden 177,3 g einer 65 gew-%igen wässrigen DADMAC Lösung untergemischt. Die Vorlage wurde auf 63°C erhitzt und der Druck in der Apparatur auf ca. 210 mbar reduziert, sodass die Reaktionsmischung bei 63°C gerade zu sieden begann. Dann wurden die Zuläufe 1 und 2 gleichzeitig gestartet und bei konstanten 63°C synchron in 4 h zu dosiert. 1,5 h nach Start von Zulauf 1 wurde der Wasserzulauf 4 gestartet und in 2,5 h zudosiert. Nach Ende der Zuläufe 1, 2 und 4 wurde der Zulauf 3 innerhalb von 2 h zugegeben. 30 min nach Start von Zulauf 3 (= 4,5 h nach Start von Zulauf 1) wurde der Druck auf 500 mbar eingestellt und die Innentemperatur auf 85°C erhöht. Nach Ende von Zulauf 3 wurde der Ansatz für eine weitere Stunde bei 85°C gehalten und anschließend der Zulauf 5 so rasch als möglich untergemischt. Der Ansatz wurde auf RT abgekühlt und das Vakuum durch Belüften mit Normalluft aufgehoben. Während der gesamten Polymerisationsdauer (7 h) wurde konstant Wasser abdestilliert, sodass insgesamt 109 g abdestilliert wurden.

Erhalten wurde eine gelbe, viskose Lösung mit einem Festgehalt von 20,4 Gew.-%. Der K-Wert des Copolymers betrug 86 (0,5 gew.-%ig in 5 gew.-%iger wässriger NaCl-Lösung)

### b) Hydrolyse zum Endprodukt

190,0 g der vorstehend erhaltenen Polymerlösung V6 wurden in einem 500 mL Vierhalskolben mit Blattrührer, Innenthermometer, Tropftrichter und Rückflusskühler bei einer Rührerdrehzahl von 80 UpM mit 0,8 g einer 40 gew.-%igen wässrigen Natriumbisulfitlösung versetzt und anschließend auf 80°C erhitzt. Dann wurden 25,3 g einer 25 gew.-%igen wässrigen Natronlauge zugegeben. Die Mischung wurde 7 h bei 80°C gehalten. Das erhaltene Produkt wurde auf Raumtemperatur abgekühlt und durch die Zugabe von 13,8 g 37 gew.-%iger Salzsäure auf pH 6,8 eingestellt.

Erhalten wurde eine leicht gelbe, viskose Polymerlösung mit einem Festgehalt von 20,1 Gew.- % und einem Polymergehalt von 12,2 Gew.-%. Der Hydrolysegrad der Vinylformamideinheiten betrug 93 Mol%.

### Beispiel P-P7: Additiv 7

### (hydrolysiertes Terpolymer VFA/DADMAC/Na-Methacrylat = 40 mol%/ 30 mol%/ 30 mol%, K-Wert 74)

### a) Polymerisation Vorstufe V7

Als Zulauf 1 wurden eine Mischung aus 257,1 g wässriger 30 gew.-%iger Na-Methacrylatlösung, die auf pH 6,4 eingestellt war, und 68,3 g N-Vinylformamid bereitgestellt.

Als Zulauf 2 wurden 1,6 g 2,2'-Azobis(2-methylpropionamidin)dihydrochlorid in 77,4 g Wasser bei Raumtemperatur gelöst.

Als Zulauf 3 wurden 1,7 g 2,2'-Azobis(2-methylpropionamidin)dihydrochlorid in 84,3 g Wasser bei Raumtemperatur gelöst.

Als Zulauf 4 wurden 340 g Wasser bereitgestellt.

In einer 2 L Glasapparatur mit Ankerrührer, absteigendem Kühler, Innenthermometer und Stickstoffeinleitungsrohr wurden 200 g Wasser und 2,2 g 75 gew.-%ige Phosphorsäure vorgelegt. Bei einer Drehzahl von 100 UpM wurden ca. 3,0 g einer 25 gew.-%igen Natronlauge zugegeben, sodass ein pH von 6,5 erreicht wurde. Anschließend wurden 177,3 g einer 65 gew.-%igen, wässrigen DADMAC Lösung untergemischt. Die Vorlage wurde auf 63°C erhitzt und der Druck in der Apparatur auf ca. 210 mbar reduziert, sodass die Reaktionsmischung bei 63°C gerade zu sieden begann. Dann wurden die Zuläufe 1 und 2 gleichzeitig gestartet und bei konstanten 63°C synchron in 4 h zu dosiert. Nach Ende der Zuläufe 1 und 2 wurde der Zulauf 3 innerhalb von 2 h zugegeben. 30 min nach Start von Zulauf 3 (= 4,5 h nach Start von Zulauf 1) wurde der Druck auf 500 mbar eingestellt und die Innentemperatur auf 85°C erhöht. Nach Ende von Zulauf 3 wurde der Ansatz für eine weitere Stunde bei 85°C gehalten und anschließend der Zulauf 4 so rasch als möglich untergemischt. Der Ansatz wurde auf RT abgekühlt und das Vakuum durch Belüften mit Normalluft aufgehoben. Während der gesamten Polymerisationsdauer (7 h) wurde konstant Wasser abdestilliert, sodass insgesamt 138 g abdestilliert wurden.

Erhalten wurde eine gelbe, stark viskose Lösung mit einem Festgehalt von 24,8 Gew.-%. Der K-Wert des Copolymers betrug 74 (0,5gew.-%ig in 5gew.-%iger wässriger NaCl-Lösung)

### b) Hydrolyse zum Endprodukt

180,0 g der vorstehend erhaltenen Polymerlösung V7 wurden in einem 500 mL Vierhalskolben mit Blattrührer, Innenthermometer, Tropftrichter und Rückflusskühler bei einer Rührerdrehzahl von 80 UpM mit 0,8 g einer 40 gew.-%igen wässrigen Natriumbisulfitlösung versetzt und anschließend auf 80°C erhitzt. Dann wurden 30,6 g einer 25 gew.-%igen wässrigen Natronlauge zugegeben. Die Mischung wurde 8 h bei 80°C gehalten. Das erhaltene Produkt wurde auf Raumtemperatur abgekühlt und durch die Zugabe von 17,0 g 37 gew.-%iger Salzsäure auf pH 6,8 eingestellt.

Erhalten wurde eine leicht gelbe, viskose Polymerlösung mit einem Festgehalt von 25,0 Gew.- % und einem Polymergehalt von 14.4 Gew.-%. Der Hydrolysegrad der Vinylformamideinheiten betrug 90 Mol%.

### Beispiel P-P8: Additiv 8

### (hydrolysiertes Terpolymer VFA/DADMAC/Na-Acrylat = 40 mol%/ 30 mol%/ 30mol%, K-Wert 97)

### a) Polymerisation Vorstufe V8

Als Zulauf 1 wurden eine Mischung aus 209,8 g wässrige 32 gew.-%ige Na-Acrylatlösung, die auf pH 6,4 eingestellt war, und 68,3 g N-Vinylformamid bereitgestellt.

Als Zulauf 2 wurden 1,5 g 2,2'-Azobis(2-methylpropionamidin)dihydrochlorid in 74,5 g Wasser bei Raumtemperatur gelöst.

Als Zulauf 3 wurden 1,6 g 2,2'-Azobis(2-methylpropionamidin)dihydrochlorid in 80,4 g Wasser bei Raumtemperatur gelöst.

Als Zulauf 4 wurden 200g Wasser und als Zulauf 5 390 g Wasser bereitgestellt.

In einer 2 L Glasapparatur mit Ankerrührer, absteigendem Kühler, Innenthermometer und Stickstoffeinleitungsrohr wurden 200 g Wasser und 2,2 g 75 gew.-%ige Phosphorsäure vorgelegt. Bei einer Drehzahl von 100 UpM wurden ca. 3,0g einer 25 gew.-%igen Natronlauge zugegeben, sodass ein pH von 6,5 erreicht wurde. Anschließend wurden 177,3 g einer 65 gew.-%igen wässrigen DADMAC Lösung untergemischt. Die Vorlage wurde auf 63°C erhitzt und der Druck in der Apparatur auf ca. 210 mbar reduziert, sodass die Reaktionsmischung bei 63°C gerade zu sieden begann. Dann wurden die Zuläufe 1 und 2 gleichzeitig gestartet und bei konstanten 63°C synchron in 4 h zu dosiert. 1,5 h nach Start von Zulauf 1 wurde der Wasserzulauf 4 gestartet und in 2,5 h zudosiert. Nach Ende der Zuläufe 1, 2 und 4 wurde der Zulauf 3 innerhalb von 2 h zugegeben. 30 min nach Start von Zulauf 3 (= 4,5 h nach Start von Zulauf 1) wurde der Druck auf 500 mbar eingestellt und die Innentemperatur auf 85°C erhöht. Nach Ende von Zulauf 3 wurde der Ansatz für eine weitere Stunde bei 85°C gehalten und anschließend der Zulauf 5 so rasch als möglich untergemischt. Der Ansatz wurde auf RT abgekühlt und das Vakuum durch Belüften mit Normalluft aufgehoben. Während der gesamten Polymerisationsdauer (7 h) wurde konstant Wasser abdestilliert, sodass insgesamt 150 g abdestilliert wurden.

Erhalten wurde eine gelbe, stark viskose Lösung mit einem Festgehalt von 20,5 Gew.-%. Der K-Wert des Copolymers betrug 97 (0,5 gew.-%ig in 5 gew.-%iger wässriger NaCl-Lösung)

### b) Hydrolyse zum Endprodukt

170,0 g der vorstehend erhaltenen Polymerlösung V8 wurden in einem 500 mL Vierhalskolben mit Blattrührer, Innenthermometer, Tropftrichter und Rückflusskühler bei einer Rührerdrehzahl von 80 UpM mit 0,7 g einer 40 gew.-%igen wässrigen Natriumbisulfitlösung versetzt und anschließend auf 80°C erhitzt. Dann wurden 21,8 g einer 25 gew.-%igen wässrigen Natronlauge zugegeben. Die Mischung wurde 8 h bei 80°C gehalten. Das erhaltene Produkt wurde auf Raumtemperatur abgekühlt und durch die Zugabe von 11,9 g 37 gew.-%iger Salzsäure auf pH 7,0 eingestellt.

Erhalten wurde eine leicht gelbe, viskose Polymerlösung mit einem Festgehalt von 20,7 Gew.- % und einem Polymergehalt von 12,5 Gew.-%. Der Hydrolysegrad der Vinylformamideinheiten betrug 88 mol%.

### Beispiel P-P9: Additiv 9

### (hydrolysiertes Terpolymer VFA/DADMAC/Na-Acrylat = 40 mol%/ 30 mol%/ 30mol%, K-Wert 97)

### a) Polymerisation Vorstufe V9

Als Zulauf 1 wurden eine Mischung aus 209,8 g wässriger 32 gew.-%iger Na-Acrylatlösung, die auf pH 6,4 eingestellt war, und 68,3 g N-Vinylformamid bereitgestellt.

Als Zulauf 2 wurden 1,5 g 2,2'-Azobis(2-methylpropionamidin)dihydrochlorid in 74,5 g Wasser bei Raumtemperatur gelöst.

Als Zulauf 3 wurden 1,6 g 2,2'-Azobis(2-methylpropionamidin)dihydrochlorid in 80,4 g Wasser bei Raumtemperatur gelöst.

Als Zulauf 4 wurden 200g Wasser und als Zulauf 5 390 g Wasser bereitgestellt.

In einer 2 L Glasapparatur mit Ankerrührer, absteigendem Kühler, Innenthermometer und Stickstoffeinleitungsrohr wurden 200 g Wasser und 2,2 g 75 gew.-%ige Phosphorsäure vorgelegt. Bei einer Drehzahl von 100 UpM wurden ca. 3,0g einer 25 gew.-%igen Natronlauge zugegeben, sodass ein pH von 6,5 erreicht wurde. Anschließend wurden 177,3 g einer 65 gew.-%igen wässrigen DADMAC Lösung untergemischt. Die Vorlage wurde auf 63°C erhitzt und der Druck in der Apparatur auf ca. 210 mbar reduziert, sodass die Reaktionsmischung bei 63°C gerade zu sieden begann. Dann wurden die Zuläufe 1 und 2 gleichzeitig gestartet und bei konstanten 63°C synchron in 4 h zu dosiert. 1,5 h nach Start von Zulauf 1 wurde der Wasserzulauf 4 gestartet und in 2,5 h zudosiert. Nach Ende der Zuläufe 1, 2 und 4 wurde der Zulauf 3 innerhalb von 2 h zugegeben. 30 min nach Start von Zulauf 3 (= 4,5 h nach Start von Zulauf 1) wurde der Druck auf 500 mbar eingestellt und die Innentemperatur auf 85°C erhöht. Nach Ende von Zulauf 3 wurde der Ansatz für eine weitere Stunde bei 85°C gehalten und anschließend der Zulauf 5 so rasch als möglich untergemischt. Der Ansatz wurde auf RT abgekühlt und das Vakuum durch Belüften mit Normalluft aufgehoben. Während der gesamten Polymerisationsdauer (7 h) wurde konstant Wasser abdestilliert, sodass insgesamt 150 g abdestilliert wurden.

Erhalten wurde eine gelbe, stark viskose Lösung mit einem Festgehalt von 20,5 Gew.-%. Der K-Wert des Copolymers betrug 95 (0,5 gew.-%ig in 5 gew.-%iger wässriger NaCl-Lösung)

### b) Hydrolyse zum Endprodukt

190,0 g der vorstehend erhaltenen Polymerlösung V9 wurden in einem 500 mL Vierhalskolben mit Blattrührer, Innenthermometer, Tropftrichter und Rückflusskühler bei einer Rührerdrehzahl von 80 UpM mit 0,8 g einer 40 gew.-%igen wässrigen Natriumbisulfitlösung versetzt und anschließend auf 80°C erhitzt. Dann wurden 20,7 g einer 25 gew.-%igen wässrigen Natronlauge zugegeben. Die Mischung wurde 8 h bei 80°C gehalten. Das erhaltene Produkt wurde auf Raumtemperatur abgekühlt und durch die Zugabe von 11,3 g 37 gew.-%iger Salzsäure auf pH 7,1 eingestellt.

Erhalten wurde eine leicht gelbe, viskose Polymerlösung mit einem Festgehalt von 20,3 Gew.- % und einem Polymergehalt von 12,6 Gew.-%. Der Hydrolysegrad der Vinylformamideinheiten betrug 85 mol%.

Beispiel P-P10: Additiv 10

### (hydrolysiertes Copolymer VFA/Na-Acrylat = 70 mol%/ 30mol%, K-Wert 90)

### a) Polymerisation Vorstufe V10

Als Zulauf 1 wurden eine Mischung aus 100,0 g Wasser, 224,6 g wässriger 32 gew.-%iger Na-Acrylatlösung, die auf pH 6,4 eingestellt war, und 128,0 g N-Vinylformamid bereitgestellt.

Als Zulauf 2 wurden 0,9 g 2,2'-Azobis(2-methylpropionamidin)dihydrochlorid in 125,8 g Wasser bei Raumtemperatur gelöst.

In einer 2 L Glasapparatur mit Ankerrührer, absteigender Kühler, Innenthermometer und Stickstoffeinleitungsrohr wurden 407 g Wasser und 1,9 g 85 gew.-%ige Phosphorsäure vorgelegt. Bei einer Drehzahl von 100 UpM wurden ca. 3,7g einer 25 gew.-%igen Natronlauge zugegeben, sodass ein pH von 6,6 erreicht wurde. Die Vorlage wurde auf 80°C erhitzt und der Druck in der Apparatur auf ca. 450 mbar reduziert, sodass die Reaktionsmischung bei 80°C gerade zu sieden begann. Dann wurden die Zuläufe 1 und 2 gleichzeitig gestartet. Bei konstanten 80°C wurde der Zulauf 1 in 1,5 h und der Zulauf 2 in 2,5 h zudosiert. Nach Beendigung der Zugabe von Zulauf 2 wurde das Reaktionsgemisch weitere 2,5 h bei 80 °C nachpolymerisiert. Während der gesamten Polymerisation und Nachpolymerisation wurden ca. 143 g Wasser abdestilliert. Anschließend wurde unter Normaldruck der Ansatz auf Raumtemperatur abgekühlt.

Erhalten wurde eine gelbe, viskose Lösung mit einem Festgehalt von 23,8 Gew.-%. Der K-Wert des Copolymers betrug 90 (0,5 gew.-%ig in 5 gew.-%iger wässriger NaCl-Lösung)

### b) Hydrolyse zum Endprodukt

847,2 g der vorstehend erhaltenen Polymerlösung V10 wurden in einem 2 L Vierhalskolben mit Blattrührer, Innenthermometer, Tropftrichter und Rückflusskühler bei einer Rührerdrehzahl von 80 UpM mit 9,3 g einer 40 gew.-%igen wässrigen Natriumbisulfitlösung versetzt und anschließend auf 80°C erhitzt. Dann wurden 313,7 g einer 25 gew.-%igen wässrigen Natronlauge zugegeben. Die Mischung wurde 7 h bei 80°C gehalten. Das erhaltene Produkt wurde auf Raumtemperatur abgekühlt und durch die Zugabe von 117,0 g 37 gew.-%iger Salzsäure auf pH 8,5 eingestellt.

Erhalten wurde eine leicht gelbe, viskose Polymerlösung mit einem Festgehalt von 23,0 Gew.- % und einem Polymergehalt von 9,9 Gew.-%. Der Hydrolysegrad der Vinylformamideinheiten betrug 98 Mol%.

### Beispiel P-P11: Additiv 11

### (hydrolysiertes Terpolymer VFA/DADMAC/Na-Acrylat = 30 mol%/ 30 mol%/ 40mol%, K-Wert 92)

### a) Polymerisation Vorstufe V11

Als Zulauf 1 wurden eine Mischung aus 273,8 g wässriger 32 gew.-%iger Na-Acrylatlösung, die auf pH 6,4 eingestellt war, und 50,1 g N-Vinylformamid bereitgestellt.

Als Zulauf 2 wurden 1,6 g 2,2'-Azobis(2-methylpropionamidin)dihydrochlorid in 65,0 g Wasser bei Raumtemperatur gelöst.

Als Zulauf 3 wurden 0,9 g 2,2'-Azobis(2-methylpropionamidin)dihydrochlorid in 35,0 g Wasser bei Raumtemperatur gelöst.

Als Zulauf 4 wurden 200g Wasser und als Zulauf 5 350 g Wasser bereitgestellt
In einer 2 L Glasapparatur mit Ankerrührer, absteigendem Kühler, Innenthermometer und Stickstoffeinleitungsrohr wurden 200 g Wasser und 2,2 g 75 gew.-%ige Phosphorsäure vorgelegt. Bei einer Drehzahl von 100 UpM wurden ca. 3,0 g einer 25 gew.-%igen Natronlauge zugegeben, sodass ein pH von 6,5 erreicht wurde. Anschließend wurden 173,5 g einer 65 gew.-%igen wässrigen DADMAC Lösung untergemischt. Die Vorlage wurde auf 63°C erhitzt und der Druck in der Apparatur auf ca. 210 mbar reduziert, sodass die Reaktionsmischung bei 63°C gerade zu sieden begann. Dann wurden die Zuläufe 1 und 2 gleichzeitig gestartet und bei konstanten 63°C synchron in 4 h zu dosiert. 1,5 h nach Start von Zulauf 1 wurde der Wasserzulauf 4 gestartet und in 2,5 h zudosiert. Nach Ende der Zuläufe 1, 2 und 4 wurde der Zulauf 3 innerhalb von 2 h zugegeben. 30 min nach Start von Zulauf 3 (= 4,5 h nach Start von Zulauf 1) wurde der Druck auf 500 mbar eingestellt und die Innentemperatur auf 85°C erhöht. Nach Ende von Zulauf 3 wurde der Ansatz für eine weitere Stunde bei 85°C gehalten und anschließend der Zulauf 5 so rasch als möglich untergemischt. Der Ansatz wurde auf RT abgekühlt und das Vakuum durch Belüften mit Normalluft aufgehoben. Während der gesamten Polymerisationsdauer (7 h) wurde konstant Wasser abdestilliert, sodass insgesamt 85 g abdestilliert wurden.

Erhalten wurde eine gelbe, viskose Lösung mit einem Festgehalt von 20,4 Gew.-%. Der K-Wert des Copolymers betrug 95 (0,5 gew.-%ig in 5 gew.-%iger wässriger NaCl-Lösung)

### b) Hydrolyse zum Endprodukt

200,0 g der vorstehend erhaltenen Polymerlösung V11 wurden in einem 500 mL Vierhalskolben mit Blattrührer, Innenthermometer, Tropftrichter und Rückflusskühler bei einer Rührerdrehzahl von 80 UpM mit 0,6 g einer 40 gew.-%igen wässrigen Natriumbisulfitlösung versetzt und anschließend auf 80°C erhitzt. Dann wurden 19,7 g einer 25 gew.-%igen wässrigen Natronlauge zugegeben. Die Mischung wurde 8 h bei 80°C gehalten. Das erhaltene Produkt wurde auf Raumtemperatur abgekühlt und durch die Zugabe von 11,8 g 37 gew.-%iger Salzsäure auf pH 6,3 eingestellt.

Erhalten wurde eine leicht gelbe, viskose Polymerlösung mit einem Festgehalt von 20,8 Gew.-% und einem Polymergehalt von 12,9 Gew.-%. Der Hydrolysegrad der Vinylformamideinheiten betrug 92 mol%.

### A-3) Übersicht zu den hergestellten Polymeren

Die Tabelle TabA1 zeigt die für die Polymerisation der nichthydrolysierten Vorstufen eingesetzten Monomere und den erhaltenen K-Wert des Polymers. Die Tabelle TabA2 zeigt die berechneten Gehalte an einpolymerisierten Funktionalitäten der hydrolysierten Copolymere. Die Berechnung basiert auf dem experimentell bestimmten Hydrolysegrad des zur Polymerisation eingesetzten N-Vinylformamids.

**Tabelle TabA1**

| Polymer | N-Vinylformamid [mol%] ^{a)} | DADMAC ^{d)} [mol%] ^{a)} | Natrium-acrylat [mol%] ^{a)} | Natrium-Methacrylat [mol%] ^{a)} | TAAC ^{c)} [Mol%] ^{a)} | K-Wert |
|---|---|---|---|---|---|---|
| V1 | 40 | 30 | 30 | - | - | 95 |
| V2 | 35 | 35 | 30 | - | - | 79 |
| V3 | 40 | 40 | 20 | - | - | 71 |
| V4 | 50 | 20 | 30 | - | - | 97 |
| V5 | 60 | 10 | 30 | - | - | 100 |
| V6 | 40 | 30 | 30 | - | 0,02 ^{d)} | 86 |
| V7 | 40 | 30 | - | 30 | - | 74 |
| V8 | 40 | 30 | 30 | - | - | 97 |
| V9 | 40 | 30 | 30 | - | - | 95 |
| V10 | 70 | - | 30 | - | - | 90 |
| V11 | 30 | 30 | 40 | - | - | 95 |

| | | | | | | |
|---|---|---|---|---|---|---|
| Fussnoten: a) eingesetzte Molmenge in Prozent bezogen auf alle eingesetzten Monomere b) DADMAC = Diallyldimethylammoniumchlorid c) TAAC = N,N,N,N-Tetraallylammoniumchlorid d) aufgrund des sehr kleinen Prozent-Gehaltes von 0,02 mol% kein Prozentabzug bei einem der drei anderen Monomeren | | | | | | |

**Tabelle TabA2**

| Polymer | Hydrolysegrad [%] ^{c)} | Nichthydrolysierte N-CHO des ursprünglichen N-Vinylformamid ^{e)} [mol%] ^{d)} | hydrolysierte N-CHO des ursprünglichen N-Vinylformamid ^{f)} [mol%] ^{d)} | primäres Amin oder Amidin ^{g)} [mol%] ^{d)} | Quaternierter Stickstoff aus DADMAC ^{h)} [mol%] ^{d)} | Carboxylatgruppen aus Acrylat oder Methacrylat ⁱ⁾ [mol%] ^{d)} | kationische Gruppen abzüglich anion-ischen Gruppen ^{j)} [mol%] ^{d)} |
|---|---|---|---|---|---|---|---|
| 1 ^{b)} | 94 | 2,4 | 37,6 | 37,6 | 30 | 30 | 37,6 |
| 2 ^{b)} | 95 | 1,7 | 33,3 | 33,3 | 35 | 30 | 38,3 |
| 3 ^{b)} | 97 | 1,2 | 38,8 | 38,8 | 40 | 20 | 58,8 |
| 4 ^{b)} | 95 | 2,5 | 47,5 | 47,5 | 20 | 30 | 37,5 |
| 5 ^{b)} | 96 | 2,4 | 57,6 | 57,6 | 10 | 30 | 37,6 |
| 6 ^{b)} | 93 | 2,8 | 37,2 | 37,2 | 30 ^{k)} | 30 | 37,2 ^{k)} |
| 7 ^{b)} | 90 | 4,0 | 36,0 | 36,0 | 30 | 30 ^{l)} | 36,0 |
| 8 ^{b)} | 88 | 4,8 | 35,2 | 35,2 | 30 | 30 | 35,2 |
| 9 ^{a)} | 85 | 6,0 | 34,0 | 34,0 | 30 | 30 | 34,0 |
| 10 ^{a)} | 98 | 1,4 | 68,6 | 68,6 | - | 30 | 38,6 |
| 11 ^{a)} | 92 | 2,4 | 27,6 | 27,6 | 30 | 40 | 17,6 |

| | | | | | | | |
|---|---|---|---|---|---|---|---|
| Fussnoten: a) vergleichend b) erfinderisch c) Prozentsatz der Anzahl der hydrolysierten N-CHO-Gruppen bezogen auf die Anzahl aller bei der Polymerisation eingesetzten N-Vinylformamide d) Molmenge in Prozent bezogen auf alle eingesetzten Monomere des nichthydrolysierten Polymers e) nichthydrolysierte N-CHO-Gruppen des bei der Polymerisation eingesetzten N-Vinylformamids berechnet basierend auf Einsatzmenge N-Vinylformamid bei Polymerisation abzüglich hydrolysierte N-CHO-Gruppen des bei der Polymerisation eingesetzten N-Vinylformamids f) hydrolysierte N-CHO-Gruppen des bei der Polymerisation eingesetzten N-Vinylformamids berechnet basierend auf Einsatzmenge N-Vinylformamid bei Polymerisation und bestimmtem Hydrolysegrad g) primäres Amin oder Amidin (falls primäres Amin mit benachbarter verbliebener N-CHO-Gruppe zyklisiert) h) DADMAC = Diallyldimethylammoniumchlorid i) Carboxylatgruppen berechnet auf Basis von Natriumacrylat bzw. Natriummethacrylat, das zur Polymeristation eingesetzt wurde j) primäres Amin, Amidin und quaternisierte Stickstoffe als kationische Gruppen k) zuzüglich geringer Menge von 0,02 mol% an quaternisiertem Stickstoff aus N,N,N,N-Tetraallylammoniumchlorid I) hier Natriummethylacrylat statt Natriumacrylat bei Polymerisation | | | | | | | |

### B) Papiere

### B-1) Physikalische Charakterisierungen

### Trockengehaltsbestimmung

Zur Bestimmung des Trockengehalts (TG) wird von einer feuchten Papierprobe auf einer kalibrierten oberschaligen Schnellwaage, mit der auf 0,01 g gewogen werden kann, die Masse der feuchten Probe (MF) bestimmt. Bevorzugt hat die feuchte Papierprobe eine Fläche von mindestens 10 cm x 10 cm. Anschliessend wird die feuchte Papierprobe in einen kalibrierten Trockenschrank, der eine eingestellte Temperatur auf ± 2°C Abweichung einhalten kann, gelegt und bei einer eingestellten Temperatur von 105°C bis zur Massenkonstanz getrocknet. Dies ist typischerweise nach 90 Minuten der Fall. Die noch warme getrocknete Papierprobe wird dann in einen Exsikkator, der ein geeignetes Trocknungsmittel wie Silicagel enthält, überführt. Nach Abkühlung auf Raumtemperatur wird die Masse der getrockneten Papierprobe (MT) auf vorgenannter Waage bestimmt. Der Trockengehalt der Papierprobe berechnet sich nach TG = 100 · MT / MF und wird in Gew.-% angegeben. Der Prozentwert wird oft mit einer Kommastelle angegeben. Wenn sich dieser Prozentwert mit der gerundeten ersten Kommastelle nicht mehr ändert, ist dies der Hinweis für das Erreichen von Massenkonstanz bei Trockengehalten von 1 bis 100 Gew.-%. Bei Trockengehalten von 0 bis unter 1 Gew.-% ist die gerundete zweite Kommastelle des Prozentwerts der entsprechende Hinweis. Die Trocknung erfolgt bei Umgebungsdruck, gegebenenfalls 101,32 KPa, ohne dass eine Korrektur für eine Abweichung, die sich durch Wetter und Meereshöhe ergibt, vorgenommen wird. Bei der Trocknung wird der normalerweise herrschende Luftdruck der Umgebung beibehalten, gegebenenfalls also 101,32 kPa. Eine Korrektur für einen etwas anderen Luftdruck bedingt durch Wetter und Meereshöhe wird nicht vorgenommen. Im Falle einer feuchten Probe, die noch keine Blattkonsistenz hat, z.B. eine Faserstoffsuspension bzw. ein Papierbrei, wird die feuchte Probe in einer entsprechenden Schale mit grosser Oberfläche getrocknet.

### Innere Festigkeit eines erhaltenen getrockneten Papierblatts

Ein erhaltenes getrocknetes Papierblatt wird nach einer Lagerzeit im Klimaraum bei konstant 23 °C und 50 % Luftfeuchtigkeit für 12 Stunden untersucht. Die innere Festigkeit wird nach einer Vorgehensweise durchgeführt, die der Tappi-Vorschrift T833 pm-94 entspricht. Dabei werden aus zwei Papierblättern im DIN A4 Format, die zuvor aus der getrockneten Papierbahn der Versuchsmaschine gewonnen werden, 10 Papierstreifen mit einer Breite von 2,5 cm und einer Länge von 12,7 cm geschnitten. Jede einzelne Papierprobe wird mit doppelseitigem Klebeband an einer separaten Grundplatte und einen Metallwinkel befestigt. Der Metallwinkel wird mit einem Pendel herausgeschlagen, wobei die zu untersuchende Papierprobe in einer Ebene parallel zur Papieroberfläche gespalten wird. Gemessen wird die Energie, welche für diesen Vorgang benötigt wird. Bei dem für die Messung verwendeten Gerät handelt es sich um eine Internal Bond Test Station der Fa. TMI (Testing Machines Inc. Islandia, New York USA). Bei dem doppelseitigen Klebeband handelt es sich um ein Produkt der Fa. 3M (Breite 25,4 mm Typ Scotch Nr. 140). Das Meßgerät liefert die zur Spaltung nötige Energie, bezogen auf eine standardisierte Fläche in J / m². Es wird der Mittelwert aus jeweils 10 Einzelmessungen gebildet.

### B-2) Herstellung des Papierrohstoffs

Als Rohstoff für die Papierherstellung dient ein Papierbrei, der durch Aufschlagen von Papierbahnen in einem Pulper erzeugt wird. Der Papierbrei wird durch die Auflösung in Trinkwasser und durch die mechanische Bearbeitung der Papierbahnen im Pulper bei ca. 3,5 Gew.-% Trockengehalt erhalten. Der Papierbrei hat danach typischerweise einen Feinheitsgrad um 50° Schopper Riegler. Bei den Papierbahnen handelt es sich um Verpackungsrohpapiere der Spezifikation "Testliner 2" mit einem Flächengewicht von 120 g / m², die von der Fa. Thurpapier aus Weinfelden (Schweiz) stammen.

### B-3) Behandlung des Papierrohstoffes mit Additiven

Die Behandlung des Papierrohstoffes mit Additiven erfolgt entweder im "Dickstoff" bei einem Trockengehalt um 3,5 Gew.-% oder im "Dünnstoff" bei einem Trockengehalt um 0,8 Gew.-%. Im Falle der "Dickstoffbehandlung" werden 500 g Papierbrei mit einem Trockengehalt um 3,5 Gew.-% in einem großen Glasbecher vorgelegt. Das Additiv wird dann unter Rühren als 2 gew.-%ige Lösung basierend auf Polymergehalt zugegeben. Es werden Stoffe mit jeweils 1,315 g 2 gew.-%iger Additivlösung basierend auf Polymergehalt bzw. mit 2,63 g 2 gew.-%iger Additivlösung basierend auf Polymergehalt behandelt. Dies entspricht jeweils einer Behandlung mit 0,15% bzw. 0,3% Polymergehalt bezogen auf trockenen Papierstoffbrei. Anschließend werden 100 g des behandelten Papierbreis in ein weiteres Glasgefäß umgefüllt und dann mit Trinkwasser auf eine Konzentration von 0,8 Gew.-% Trockengehalt verdünnt.

Im Falle der "Dünnstoffbehandlung" werden 114,3 g Papierbrei mit einem Trockengehalt um 3,5 Gew.-% in einem großen Glasbecher vorgelegt. Dann wird der Papierbrei mit Trinkwasser auf eine Konzentration von 0,8 Gew.-% Trockengehalt verdünnt. Das Additiv wird unter Rühren als 2 gew.-%ige Lösung basierend auf Polymergehalt zugegeben. Es werden Papierbreie mit jeweils 0,3 g Additivlösung basierend auf Polymergehalt bzw. mit 0,6 g Additivlösung basierend auf Polymergehalt behandelt. Dies entspricht jeweils einer Behandlung mit 0,15% bzw 0,3% Polymergehalt bezogen auf trockenen Papierstoff.

### B-4) Herstellung der Papiere

Angestrebt ist die Herstellung von Papierblättern mit einem Flächengewicht von 120 g / m² ausgehend von einem mit einem Additiv behandelten Papierbrei, der vor der Additivbehandlung einen Trockengehalt von 0,8 Gew.-% hat, bzw. einem Papierbrei, der einen Trockengehalt von 0,8 Gew.-% hat, aber nicht mit einem Additiv behandelt ist (= Referenz).

Die Herstellung der Papierblätter erfolgt auf einem dynamischen Blattbildner der Fa. TechPap (Frankreich). Dabei wird eine Papierstoffsuspension, hier der behandelte bzw. unbehandelte Papierbrei, auf ein Sieb gesprüht. Das Sieb ist dabei in eine senkrecht stehende, schnell rotierende Trommel eingespannt. Die Entwässerung und Blattbildung in diesem System wird neben der Blattstruktur vor allem durch die Fliehkräfte innerhalb der rotierenden Trommel bestimmt. Durch die Variation der Rotationsgeschwindigkeit der Trommel kann die auf die entstehende Blattstruktur wirkende Fliehkraft ebenfalls variiert werden. Das Resultat ist eine Variation der Entwässerung des nassen Papiergefüges, die zu einer Variation des Trockengehaltes im nassen Papiergefüge führt. Gemeint ist hier der Trockengehalt des nassen Papiergefüges unmittelbar nach der Abnahme von der wasserdurchlässigen Unterlage (Sieb), die in der Trommel des dynamischen Blattbildners eingespannt ist. Das nasse Papiergefüge kann hierin auch als nasses Papierblatt bezeichnet werden, wobei aber ausdrücklich nicht ein wiederangenässtes, vormals bereits getrocknetes Papierblatt gemeint ist.

Die Umdrehungszahl der Trommel wird in 5 Stufen zwischen 600 und 1100 Umdrehungen pro Minute variiert, wodurch Trockengehalte im Bereich zwischen 15 Gew.-% und 21 Gew.-% eingestellt werden können. Ein kleiner Teil des noch nassen Papiergefüges wird zur unmittelbaren Bestimmung des Trockengehaltes nach der Abnahme des nassen Papiergefüges vom Sieb des dynamischen Blattbildners verwandt. Für jede Einstellung werden jeweils nasse Papiergefüge mit zwei verschiedenen Trockengehalten zwischen 17 Gew.-% und 21 Gew.-% hergestellt.

Die nassen Papiergefüge bzw. nassen Papierblätter werden nach der Entnahme aus der Trommel des dynamischen Blattbildners von beiden Seiten mit Löschpapier abgedeckt und in einer statischen Presse bei 6 bar für 30 Sekunden gepresst. Es werden feuchte Papierblätter erhalten, deren Trockengehalt nach dem Pressen typischerweise zwischen 41 Gew.-% und 43 Gew.-% beträgt. Wird der untere Wert deutlich unterschritten, kann die Dicke des Löschpapiers oder die Anzahl der aufgelegten Blätter erhöht werden, um in den oben genannten Bereich zu gelangen.

Das erhaltene feuchte Papierblatt wird anschließend erneut von beiden Seiten mit frischen Löschpapieren abgedeckt und dann für 10 Minuten in eine Trockenwalze eingespannt. Die Oberflächentemperatur der Trockenwalze beträgt ca. 100°C. Nach der Trocknung werden die erhaltenen trockenen Papierblätter zur Konditionierung in einen Klimaraum gebracht.

### B-5) Hergestellte Papiere

Als Referenzbeispiele werden drei nasse Papiergefüge bzw. nassen Papierblätter mit Trockengehalten von jeweils 15,3 Gew.-%, 17,6 Gew.-% und 20,2 Gew.-% hergestellt. Die nassen Papiergefüge bzw. nassen Papierblätter werden anschließend gepresst und die so erhaltenen feuchten Papierblätter dann getrocknet.

Als Vergleichsbeispiele I werden nasse Papiergefüge bzw. nasse Papierblätter mit jeweils einem der Additive 1 bis 8 in jeweils zwei Dosiermengen (1,5 g und 3 g Polymergehalt bezogen auf 1 kg trockenen Papierbrei) und jeweils einer Dosierung der entsprechenden Dosiermenge im Dickstoff und im Dünnstoff hergestellt. Der Trockengehalt der hergestellten nassen Papiergefüge bzw. nassen Papierblätter liegt jeweils unterhalb von 18,5 Gew.-%. Die nassen Papiergefüge bzw. nassen Papierblätter werden anschließend gepresst und die so erhaltenen feuchten Papierblätter dann getrocknet.

Als Vergleichsbeispiele lla werden nasse Papiergefüge bzw. nasse Papierblätter mit jeweils einem der Additive 9 bis 11 mit jeweils zwei Dosiermengen (1,5 g und 3 g Polymergehalt bezogen auf 1 kg trockenen Papierbrei) und jeweils einer Dosierung der entsprechenden Dosiermenge im Dickstoff und im Dünnstoff hergestellt. Der Trockengehalt der hergestellten nassen Papiergefüge bzw. nassen Papierblätter liegt jeweils unterhalb von 18,5 Gew.-%. Die nassen Papiergefüge bzw. nassen Papierblätter werden anschließend gepresst und die so erhaltenen feuchten Papierblätter dann getrocknet.

Als Vergleichsbeispiele Ilb werden nasse Papiergefüge bzw. nasse Papierblätter mit jeweils einem der Additive 9 bis 11 mit jeweils zwei Dosiermengen (1,5 g und 3 g Polymergehalt bezogen auf 1 kg trockenen Papierbrei) und jeweils einer Dosierung der entsprechenden Dosiermenge im Dickstoff und im Dünnstoff hergestellt. Der Trockengehalt der hergestellten nassen Papiergefüge bzw. nassen Papierblätter liegt jeweils oberhalb von 18,5 Gew.-%. Die nassen Papiergefüge bzw. nassen Papierblätter werden anschließend gepresst und die so erhaltenen feuchten Papierblätter dann getrocknet.

Als erfinderische Beispiele werden nasse Papiergefüge bzw. nasse Papierblätter mit jeweils einem der Additive 1 bis 8 mit jeweils zwei Dosiermengen (1,5 g und 3 g Polymergehalt bezogen auf 1 kg trockenen Papierbrei) und jeweils einer Dosierung der entsprechenden Dosiermenge im Dickstoff und im Dünnstoff hergestellt. Der Trockengehalt der hergestellten nassen Papiergefüge bzw. nassen Papierblätter liegt jeweils oberhalb von 18,5 Gew.-%. Die nassen Papiergefüge bzw. nassen Papierblätter werden anschließend gepresst und die so erhaltenen feuchten Papierblätter dann getrocknet.

### B-6) Innere Festigkeiten der hergestellten trockenen Papierblätter

Die Tabellen TabB1 und TabB2 zeigen die inneren Festigkeiten der hergestellten Papiere bei Additivzugabe zum Dünnstoff und die Tabellen TabB3 und TabB4 jene bei Additivzugabe zum Dickstoff.

**Tabelle TabB1: 1,5 g Polymergehalt pro 1 kg Papierstoff bei Zugabe zum Dünnstoff**

| Beispiel Nr. | Additiv | Trockengehalt [Gew.-%] | Innere Festigkeit [J / m²] | Trockengehalt [Gew.-%] | Innere Festigkeit [J / m²] |
|---|---|---|---|---|---|
| 1 ^{a)} | - | 15,3 | 144 | | |
| 2 ^{a)} | - | 17,6 | 148 | | |
| 3 ^{a)} | - | | | 20,2 | 141 |
| B1-1 ^{a)} | 9 | 15,3 | 171 | | |
| B1-2 ^{a)} | 9 | | | 18,9 | 174 |
| B1-3 ^{a)} | 10 | 17,6 | 155 | | |
| B1-4 ^{a)} | 10 | | | 19,2 | 156 |
| B1-5 ^{a)} | 11 | 17,2 | 164 | | |
| B1-6 ^{a)} | 11 | | | 19,3 | 163 |
| B1-7 ^{a)} | 1 | 17,6 | 161 | | |
| B1-8 ^{b)} | 1 | | | 19,5 | 229 |
| B1-9 ^{a)} | 2 | 17,8 | 157 | | |
| B1-10 ^{b)} | 2 | | | 19,4 | 223 |
| B1-11 ^{a)} | 3 | 17,6 | 164 | | |
| B1-12 ^{b)} | 3 | | | 19,7 | 216 |
| B1-13 ^{a)} | 4 | 16,9 | 167 | | |
| B1-14 ^{b)} | 4 | | | 19,5 | 221 |
| B1-15 ^{a)} | 5 | 17,3 | 157 | | |
| B1-16 ^{b)} | 5 | | | 20 | 224 |
| B1-17 ^{a)} | 6 | 17,4 | 168 | | |
| B1-18 ^{b)} | 6 | | | 20,1 | 220 |
| B1-19 ^{a)} | 7 | 17,3 | 163 | | |
| B1-20 ^{b)} | 7 | | | 19,4 | 213 |
| B1-21 ^{a)} | 8 | 17,6 | 161 | | |
| B1-22 ^{b)} | 8 | | | 19,1 | 207 |

| | | | | | |
|---|---|---|---|---|---|
| Fussnoten: a) vergleichend b) erfinderisch | | | | | |

**Tabelle TabB2: 3,0 g Polymergehalt pro 1 kg Papierstoff bei Zugabe zum Dünnstoff**

| Beispiel Nr. | Additiv | Trockengehalt [Gew.-%] | Innere Festigkeit [J / m²] | Trockengehalt [Gew.-%] | Innere Festigkeit [J / m²] |
|---|---|---|---|---|---|
| 1 ^{a)} | - | 15,3 | 144 | | |
| 2 ^{a)} | - | 17,6 | 148 | | |
| 3 ^{a)} | - | | | 20,2 | 141 |
| B2-1 ^{a)} | 9 | 17,9 | 185 | | |
| B2-2 ^{a)} | 9 | | | 19,4 | 189 |
| B2-3 ^{a)} | 10 | 17,4 | 176 | | |
| B2-4 ^{a)} | 10 | | | 19 | 180 |
| B2-5 ^{a)} | 11 | 17,6 | 181 | | |
| B2-6 ^{a)} | 11 | | | 19,4 | 181 |
| B2-7 ^{a)} | 1 | 17,9 | 177 | | |
| B2-8 ^{b)} | 1 | | | 19,7 | 267 |
| B2-9 ^{a)} | 2 | 18,2 | 174 | | |
| B2-10 ^{b)} | 2 | | | 19,8 | 276 |
| B2-11 ^{a)} | 3 | 17,7 | 183 | | |
| B2-12 ^{b)} | 3 | | | 20,0 | 271 |
| B2-13 ^{a)} | 4 | 17,5 | 180 | | |
| B2-14 ^{b)} | 4 | | | 19,9 | 262 |
| B2-15 ^{a)} | 5 | 17,3 | 188 | | |
| B2-16 ^{b)} | 5 | | | 19,8 | 275 |
| B2-17 ^{a)} | 6 | 17,6 | 174 | | |
| B2-18 ^{b)} | 6 | | | 20,0 | 261 |
| B2-19 ^{a)} | 7 | 17,7 | 179 | | |
| B2-20 ^{b)} | 7 | | | 19,9 | 271 |
| B2-21 ^{a)} | 8 | 17,9 | 171 | | |
| B2-22 ^{b)} | 8 | | | 19,4 | 262 |

| | | | | | |
|---|---|---|---|---|---|
| Fussnoten: a) vergleichend b) erfinderisch | | | | | |

**Tabelle TabB3: 1,5 g Polymegehalt pro 1 kg Papierstoff bei Zugabe zum Dickstoff**

| Beispiel Nr. | Additiv | Trockengehalt [Gew.-%] | Innere Festigkeit [J / m²] | Trockengehalt [Gew.-%] | Innere Festigkeit [J / m²] |
|---|---|---|---|---|---|
| 1 ^{a)} | - | 15,3 | 144 | | |
| 2 ^{a)} | - | 17,6 | 148 | | |
| 3 ^{a)} | - | | | 20,2 | 141 |
| B3-1 ^{a)} | 9 | 18,1 | 166 | | |
| B3-2 ^{a)} | 9 | | | 19,2 | 159 |
| B3-3 ^{a)} | 10 | 17,3 | 169 | | |
| B3-4 ^{a)} | 10 | | | 19,3 | 162 |
| B3-5 ^{a)} | 11 | 16,9 | 159 | | |
| B3-6 ^{a)} | 11 | | | 19,1 | 155 |
| B3-7 ^{a)} | 1 | 17,3 | 156 | | |
| B3-8 ^{b)} | 1 | | | 19,3 | 231 |
| B3-9 ^{a)} | 2 | 17,4 | 164 | | |
| B3-10 ^{b)} | 2 | | | 19,2 | 226 |
| B3-11 ^{a)} | 3 | 17,1 | 154 | | |
| B3-12 ^{b)} | 3 | | | 20,4 | 218 |
| B3-13 ^{a)} | 4 | 17,2 | 156 | | |
| B3-14 ^{b)} | 4 | | | 19,7 | 237 |
| B3-15 ^{a)} | 5 | 17,0 | 163 | | |
| B3-16 ^{b)} | 5 | | | 19,6 | 223 |
| B3-17 ^{a)} | 6 | 17,9 | 155 | | |
| B3-18 ^{b)} | 6 | | | 19,7 | 218 |
| B3-19 ^{a)} | 7 | 16,8 | 155 | | |
| B3-20 ^{b)} | 7 | | | 19,7 | 225 |
| B3-21 ^{a)} | 8 | 17,2 | 157 | | |
| B3-22 ^{b)} | 8 | | | 18,9 | 221 |

| | | | | | |
|---|---|---|---|---|---|
| Fussnoten: a) vergleichend b) erfinderisch | | | | | |

**Tabelle TabB4: 3,0 g Polmerehalt pro 1 kg Papierstoff bei Zuabe zum Dickstoff**

| Beispiel Nr. | Additiv | Trockengehalt [Gew.-%] | Innere Festigkeit [J / m²] | Trockengehalt [Gew.-%] | Innere Festigkeit [J / m²] |
|---|---|---|---|---|---|
| 1 ^{a)} | - | 15,3 | 144 | | |
| 2 ^{a)} | - | 17,6 | 148 | | |
| 3 ^{a)} | - | | | 20,2 | 141 |
| B4-1 ^{a)} | 9 | 17,8 | 178 | | |
| B4-2 ^{a)} | 9 | | | 19,5 | 172 |
| B4-3 ^{a)} | 10 | 17,8 | 179 | | |
| B4-4 ^{a)} | 10 | | | 19,9 | 185 |
| B4-5 ^{a)} | 11 | 17,3 | 175 | | |
| B4-6 ^{a)} | 11 | | | 18,9 | 176 |
| B4-7 ^{a)} | 1 | 16,9 | 175 | | |
| B4-8 ^{b)} | 1 | | | 19,1 | 284 |
| B4-9 ^{a)} | 2 | 18,1 | 177 | | |
| B4-10 ^{b)} | 2 | | | 20,1 | 274 |
| B4-11 ^{a)} | 3 | 17,4 | 169 | | |
| B4-12 ^{b)} | 3 | | | 20,6 | 282 |
| B4-13 ^{a)} | 4 | 17,9 | 169 | | |
| B4-14 ^{b)} | 4 | | | 20,2 | 295 |
| B4-15 ^{a)} | 5 | 17,5 | 179 | | |
| B4-16 ^{b)} | 5 | | | 20,3 | 279 |
| B4-17 ^{a)} | 6 | 18,0 | 176 | | |
| B4-18 ^{b)} | 6 | | | 19,9 | 283 |
| B4-19 ^{a)} | 7 | 17,4 | 176 | | |
| B4-20 ^{b)} | 7 | | | 19,7 | 265 |
| B4-21 ^{a)} | 8 | 17,5 | 173 | | |
| B4-22 ^{b)} | 8 | | | 19,3 | 276 |

| | | | | | |
|---|---|---|---|---|---|
| Fussnoten: a) vergleichend b) erfinderisch | | | | | |

Die Tabellen TabB1 bis TabB4 zeigen für die hergestellten trockenen Papierblätter, dass
(i_{B}) ein Trockengehalt des nassen Papiergefüges bzw. des nassen Papierblatts zwischen 15,3 Gew.-% und 20,2 Gew.-% keinen Unterschied der inneren Festigkeit des trockenen Papierblatts bei den Referenzbeispielen ohne ein Additiv 1 bis 11 bewirkt,
(ii_{B}) ein Trockengehalt des nassen Papiergefüges bzw. des nassen Papierblatts zwischen 15,3 Gew.-% und 19,9 Gew.-% keinen Unterschied der inneren Festigkeit des trockenen Papierblatts bei den Vergleichsbeispielen IIa und IIb mit einem Additiv 9 bis 11 bewirkt,
(iii_{B}) ein Trockengehalt des nassen Papiergefüges bzw. des nassen Papierblatts oberhalb von 18,5 Gew.-% eine signifikante Steigerung der inneren Festigkeit des trockenen Papierblatts bei den erfinderischen Beispielen mit einem Additiv 1 bis 8 bewirkt, wobei diese Steigerung sich auf die inneren Festigkeiten der trockenen Papierblätter bei den Vergleichsbeispielen I mit einem Additiv 1 bis 8 bezieht, deren Unterschied in einem Trockengehalt des nassen Papiergefüges oder nassen Papierblatts unterhalb von 18,5 Gew.-% liegt,
(iv_{B}) die Zugabe von einem Additiv 1 bis 8 in einen Papierbrei mit einem Trockengehalt von 3,5 Gew.-% und nachfolgender Verdünnung auf 0,8 Gew.-% tendenziell höhere innere Festigkeiten ergibt im Vergleich mit einer Zugabe desselben Additivs in den Papierbrei mit einem Trockengehalt von 0,8 Gew.-%, insbesondere bei einer Zugabe von 3,0 g Additiv anstelle von 1,5 g Additiv.

Die Tabellen TabA1 und TabA2 zeigen für die Additive 1 bis 11:
(i_{A}) ein Gehalt von einpolymerisierten 10 mol% DADMAC ist ein Unterschied des erfinderischen Additivs 5 gegenüber dem vergleichenden Additiv 10, bei dem anstelle von DADMAC mehr N-Vinylformamid in der Polymerisation seiner Vorstufe V10 eingesetzt ist,
(ii_{A}) ein Gehalt von einpolymerisierten 35 mol% N-Vinylformamid ist für die Vorstufe V2 des erfinderischen Additivs 2 ein Unterschied gegenüber dem vergleichenden Additiv 11, bei dessen Vorstufe V11 5 mol% N-Vinylformamid weniger und anstelle dessen 5 mol% DADAMAC mehr einpolymerisiert ist,
(iii_{A}) ein Hydrolysegrad von 88% aller in seiner Vorstufe V8 einpolymerisierten N-Vinylformamidmonomeren ist ein Unterschied des erfinderischen Additivs 8 gegenüber dem vergleichenden Additiv 9, das einen Hydrolysegrad von 85% aller in seiner Vorstufe V9 einpolymerisierten N-Vinylformamidmonomeren aufweist.

## Patentansprüche

1. Verfahren zur Herstellung von Papier oder Karton enthaltend die Schritte
(A) Zugeben von einem wasserlöslichen Polymer P zu einer ersten wässrigen FaserStoffsuspension, die einen Trockengehalt zwischen 0,1 Gew.-% und 6 Gew.-% aufweist, wodurch eine zweite wässrige Faserstoffsuspension enthaltend Polymer P entsteht,
wobei das Polymer P erhältlich ist durch
- radikalisches Polymerisieren zu einem Polymer V von
(i) 33 bis 83 mol% eines Monomers der Formel I 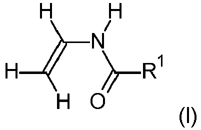 in der R¹= H oder C₁-C₆-Alkyl bedeutet,
(ii) 6 bis 56 mol% Diallyldimethylammoniumchlorid, Diallyldiethylammoniumchlorid oder einer Salzform eines monoethylenisch ungesättigten Monomers mit einem quaternierten Stickstoff als einziger ladungstragender Gruppe bei einem pH-Wert von 7,
(iii) 11 bis 61 mol% einer monoethylenisch ungesättigten Carbonsäure, einer monoethylenisch ungesättigten Sulfonsäure oder einer monoethylenisch ungesättigten Phosphonsäure, oder deren Salzformen,
(iv) 0 bis 50 mol% eines oder mehrerer ethylenisch ungesättigter Monomere, die von einem Monomer (i), (ii) und (iii) verschieden sind,
wobei die Gesamtmenge aller Monomere (i), (ii), (iii) und (iv) 100 mol% beträgt, und
- Hydrolysieren der N-C(=O)R¹-Gruppen der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I,
(B) Entwässern der zweiten wässrigen Faserstoffsuspension enthaltend Polymer P auf einer wasserdurchlässigen Unterlage zu einem nassen Papiergefüge, das einen Trockengehalt zwischen 18,5 Gew.-% und 25 Gew.-% aufweist,
(C) Entwässern des nassen Papiergefüges, wodurch das Papier oder der Karton entsteht.

2. Ein Verfahren gemäss Anspruch 1, wobei die wasserdurchlässige Unterlage ein Sieb ist.

3. Ein Verfahren gemäss Anspruch 1 oder 2,
wobei die Menge an Monomer (i) 33 bis 65 mol% beträgt, und/oder
wobei die Menge an Monomer (ii) 6 bis 45 mol% beträgt, und/oder
wobei die Menge an Monomer (iii) 11 bis 40 mol% beträgt, und/oder
wobei die Menge an Monomer (iv) 0 bis 30 mol% beträgt.

4. Ein Verfahren gemäss einem der Ansprüche 1 bis 3, wobei beim Monomer (i) R¹ = H ist.

5. Ein Verfahren gemäss einem der Ansprüche 1 bis 4, wobei das Monomer (ii) Diallyldimethylammoniumchlorid, Diallyldiethylammoniumchlorid, eine Salzform eines N-Alkyl-N'-vinylimidazoliums, eine Salzform eines N-alkylierten Vinylpyridiniums, eine Salzform eines Acrylamidoalkyltrialkylammoniums oder eine Salzform eines Methacrylamidoalkyltrialkylammoniums ist, und bevorzugt Diallyldimethylammoniumchlorid ist.

6. Ein Verfahren gemäss einem der Ansprüche 1 bis 5, wobei das Monomer (iii) eine monoethylenisch ungesättigte C₃ bis C₈ Mono- oder Dicarbonsäure, Acrylamido-2-methyl-propansulfonsäure oder deren Salzformen ist, bevorzugt Acrylsäure, Methacrylsäure, Acrylamido-2-methyl-propansulfonsäure oder deren Salzformen ist, und besonders bevorzugt Acrylsäure oder Methacrylsäure oder deren Natriumsalz oder Kaliumsalz ist.

7. Ein Verfahren gemäss einem der Ansprüche 1 bis 6, wobei das Monomer (iv) Acrylnitril, Vinylacetat, N-Vinylpyrrolidon oder N-Vinylimidazol ist.

8. Ein Verfahren gemäss einem der Ansprüche 1 bis 7, wobei das Polymer P amphoterkationisch ist.

9. Ein Verfahren gemäss einem der Ansprüche 1 bis 8, wobei im Schritt (C) das Entwässern die Schritte umfasst
(C-1) Entwässern des nassen Papiergefüges durch Pressen, wodurch ein feuchtes Papierblatt entsteht,
(C-2) Entwässern des feuchten Papierblatts durch Wärmezufuhr, wodurch das Papier oder der Karton entsteht.

10. Ein Verfahren gemäss einem der Ansprüche 1 bis 9, wobei die Menge an zugegebenem Polymer P 0,01 bis 6,0 Gew.-% bezogen auf den Trockengehalt der ersten wässrigen Faserstoffsuspension beträgt.

11. Ein Verfahren gemäss einem der Ansprüche 1 bis 10, wobei im Schritt (A) das Polymer P zu einer ersten Faserstoffsuspension, deren Trockengehalt grösser als 1,5 Gew.-% und bis zu 6,0 Gew.-% ist, zugegeben wird, und die zweite Faserstoffsuspension enthaltend Polymer P auf einen Trockengehalt zwischen 0,1 Gew.-% und bis zu 1,5 Gew.-% verdünnt wird.

12. Ein Verfahren gemäss einem der Ansprüche 1 bis 11, wobei im Schritt (A) der ersten Faserstoffsuspension oder der zweiten Faserstoffsuspension enthaltend Polymer P ein weiteres organisches Polymer, das von Polymer P verschieden ist, zugesetzt wird.

13. Ein Verfahren gemäss einem der Ansprüche 1 bis 12, wobei im Schritt (A) der ersten Faserstoffsuspension oder der zweiten Faserstoffsuspension enthaltend Polymer P ein Füllstoff zugesetzt wird.

14. Ein Papier oder Karton erhältlich nach einem Verfahren gemäss einem der Ansprüche 1 bis 13.

15. Ein wasserlösliches Polymer P, das erhältlich ist durch
- radikalisches Polymerisieren zu einem Polymer V von
(i) 33 bis 83 mol% eines Monomers der Formel I 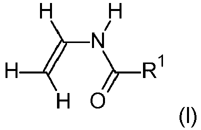 in der R¹ = H oder C₁-C₆-Alkyl bedeutet,
(ii) 6 bis 56 mol% Diallyldimethylammoniumchlorid, Diallyldiethylammoniumchlorid oder einer Salzform eines monoethylenisch ungesättigten Monomers mit einem quaternierten Stickstoff als einziger ladungstragender Gruppe bei einem pH-Wert von 7,
(iii) 11 bis 61 mol% einer monoethylenisch ungesättigten Carbonsäure, einer monoethylenisch ungesättigten Sulfonsäure oder einer monoethylenisch ungesättigten Phosphonsäure, oder deren Salzformen,
(iv) 0 bis 50 mol% eines oder mehrerer ethylenisch ungesättigter Monomere, die von einem Monomer (i), (ii) und (iii) verschieden sind, wobei die Gesamtmenge aller Monomere (i), (ii), (iii) und (iv) 100 mol% beträgt, und
- Hydrolysieren der in das Polymer V einpolymerisierten Einheiten der Monomere der Formel (I) unter Bildung von primären Amino- oder Amidingruppen zum Polymer P, wobei mindestens 87% der in das Polymer V einpolymerisierten Einheiten der Monomere der Formel (I) hydrolysiert werden bezogen auf die Anzahl aller in das Polymer V einpolymerisierten Einheiten der Monomere der Formel I.

## Claims

1. Method of manufacturing paper or cardboard comprising the steps of
(A) Addition of a water-soluble polymer P to a first aqueous pulp suspension having a dry content of between 0.1% and 6% by weight, resulting in a second aqueous pulp suspension containing polymer P,
where the polymer P is obtainable by
- radical polymerization to form a polymer V of
(i) 33 to 83 mol% of a monomer of Formula I 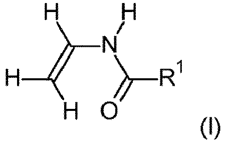 in which R¹ = H or C₁-C₆-Alkyl,
(ii) 6 to 56 mol% diallyldimethylammonium chloride, diallyldiethylammonium chloride or a salt form of a monoethylenically unsaturated monomer with a quaternized nitrogen as the sole charge-carrying group at a pH of 7,
(iii) 11 to 61 mol% of a monoethylenically unsaturated carboxylic acid, a monoethylenically unsaturated sulfonic acid or a monoethylenically unsaturated phosphonic acid, or salt forms thereof,
(iv) 0 to 50 mol% of one or more ethylenically unsaturated monomers, other than a monomer (i), (ii) and (iii), the total amount of all monomers (i), (ii), (iii) and (iv) being 100 mol%, and
- Hydrolyzing the N-C(=0)R¹ groups of the units of the monomers of the formula (I) polymerized into the polymer V to form primary amino or amidine groups to give the polymer P, at least 87% of the units of the monomers of the formula (I) polymerized into the polymer V being hydrolyzed, based on the number of all units of the monomers of the formula I polymerized into the polymer V,
(B) Dewatering the second aqueous pulp suspension containing polymer P on a water-permeable support to form a wet paper structure which has a dry content of between 18.5% and 25% by weight,
(C) Dewatering of the wet paper structure, resulting in the paper or cardboard.

2. A method according to claim 1, wherein the water-permeable base is a screen.

3. A method according to claim 1 or 2,
wherein the amount of monomer (i) is 33 to 65 mol%, and/or wherein
the amount of monomer (ii) is 6 to 45 mol%, and/or wherein the
amount of monomer (iii) is 11 to 40 mol%, and/or wherein
the amount of monomer (iv) is 0 to 30 mol%.

4. A method according to any one of claims 1 to 3, wherein in the monomer (i) R¹= H.

5. A method according to any one of claims 1 to 4, wherein the monomer (ii) is diallyldimethylammonium chloride, diallyldiethylammonium chloride, a salt form of an N-alkyl-N¹-vinylimidazolium, a salt form of an N-alkylated vinylpyridinium, a salt form of an acrylamidoalkyltrialkylammonium or a salt form of a methacrylamidoalkyltrialkylammonium, and preferably is diallyldimethylammonium chloride.

6. A method according to any one of claims 1 to 5, wherein the monomer (iii) is a monoethylenically unsaturated C₃ to C₈ mono- or dicarboxylic acid, acrylamido-2-methylpropanesulfonic acid or salt forms thereof, preferably acrylic acid, methacrylic acid, acrylamido-2-methyl-propanesulfonic acid or salt forms thereof, and particularly preferably acrylic acid or methacrylic acid or the sodium salt or potassium salt thereof.

7. A method according to any one of claims 1 to 6, wherein the monomer (iv) is acrylonitrile, vinyl acetate, N-vinylpyrrolidone or N-vinylimidazole.

8. A method according to any one of claims 1 to 7, wherein the polymer P is amphotercationic.

9. A method according to any one of claims 1 to 8, wherein in step (C) the dewatering comprises the steps of
(C-1) Dewatering of the wet paper structure by pressing, resulting in a moist paper sheet,
(C-2) Dewatering of the moist paper sheet by applying heat, resulting in the paper or cardboard.

10. A method according to any one of claims 1 to 9, wherein the amount of polymer P added is 0.01 to 6.0% by weight based on the dry content of the first aqueous pulp suspension.

11. A method according to any one of claims 1 to 10, wherein in step (A) the polymer P is added to a first pulp suspension whose dry content is greater than 1.5% by weight and up to 6.0% by weight, and the second pulp suspension containing polymer P is diluted to a dry content of between 0.1% by weight and up to 1.5% by weight.

12. A method according to any one of claims 1 to 11, wherein in step (A) another organic polymer other than polymer P is added to the first pulp suspension or the second pulp suspension containing polymer P.

13. A method according to any one of claims 1 to 12, wherein in step (A) a filler is added to the first pulp suspension or the second pulp suspension containing polymer P.

14. A paper or board obtainable by a method according to any one of claims 1 to 13.

15. A water-soluble polymer P, which is available through
- radical polymerization to form a polymer V of
(i) 33 to 83 mol% of a monomer of Formula I 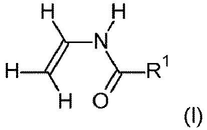 in which R¹ = H or C₁-C₆-Alkyl,
(ii) 6 to 56 mol% diallyldimethylammonium chloride, diallyldiethylammonium chloride or a salt form of a monoethylenically unsaturated monomer with a quaternized nitrogen as the only charge-carrying group at a pH of 7,
(iii) 11 to 61 mol% of a monoethylenically unsaturated carboxylic acid, a monoethylenically unsaturated sulfonic acid or a monoethylenically unsaturated phosphonic acid, or salt forms thereof,
(iv) from 0 to 50 mol% of one or more ethylenically unsaturated monomers other than a monomer (i), (ii) and (iii), the total amount of all monomers (i), (ii), (iii) and (iv) being 100 mol%, and
- Hydrolyzing the units of the monomers of the formula (I) polymerized into the polymer V to form primary amino or amidine groups to give the polymer P, at least 87% of the units of the monomers of the formula (I) polymerized into the polymer V being hydrolyzed, based on the number of all units of the monomers of the formula I polymerized into the polymer V.

## Revendications

1. Procédé de fabrication de papier ou de carton comprenant les étapes de
(A) addition d'un polymère P soluble dans l'eau à une première suspension aqueuse de matière fibreuse ayant une teneur en matière sèche comprise entre 0,1 % en poids et 6 % en poids, pour former une seconde suspension aqueuse de matière fibreuse contenant le polymère P,
dans lequel le polymère P peut être obtenu par
- polymérisation radicalaire en un polymère V de
(i) 33 à 83 % en moles d'un monomère de la formule I 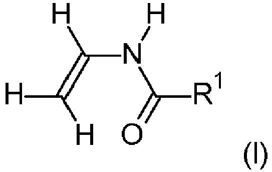 dans lequel R¹ = H ou C₁-C₆-alkyle signifie,
(ii) 6 à 56 % en moles de chlorure de diallyldiméthylammonium, chlorure de diallyldiéthylammonium ou une forme saline d'un monomère à insaturation monoéthylénique ayant un azote quaternisé comme seul groupe porteur de charge à un pH de 7,
(iii) 11 à 61 % en moles d'un acide carboxylique à insaturation monoéthylénique, d'un acide sulfonique à insaturation monoéthylénique ou d'un acide phosphonique à insaturation monoéthylénique, ou de leurs formes salines,
(iv) 0 à 50 % en moles d'un ou plusieurs monomères à insaturation éthylénique, autres qu'un monomère (i), (ii) et (iii), dans lequel la quantité totale de tous les monomères (i), (ii), (iii) et (iv) est de 100 % en moles, et
- hydrolyse des groupes N-C(=O)R¹ des unités polymérisées dans le polymère V des monomères de formule (I) avec formation de groupes amino ou amidine primaires pour former le polymère P, dans lequel au moins 87 % des unités polymérisées dans le polymère V des monomères de la formule (I) sont hydrolysés par rapport au nombre de toutes les unités polymérisées dans le polymère V des monomères de la formule I,
(B) déshydratation de la seconde suspension aqueuse de matière fibreuse contenant le polymère P sur un support perméable à l'eau pour obtenir une structure de papier humide qui présente une teneur en matière sèche comprise entre 18,5 % en poids et 25 % en poids,
(C) déshydratation de la structure humide du papier, ce qui permet d'obtenir le papier ou le carton.

2. Procédé selon la revendication 1, dans lequel le support perméable à l'eau est un tamis.

3. Procédé selon la revendication 1 ou 2,
dans lequel la quantité de monomère (i) est de 33 à 65 % en moles, et/ou
dans lequel la quantité de monomère (ii) est de 6 à 45 % en moles, et/ou
dans lequel la quantité de monomère (iii) est de 11 à 40 % en moles, et/ou
dans lequel la quantité de monomère (iv) est de 0 à 30 % en moles.

4. Procédé selon l'une quelconque des revendications 1 à 3, dans lequel, pour le monomère (i), R1 = H.

5. Procédé selon l'une quelconque des revendications 1 à 4, dans lequel le monomère (ii) est le chlorure de diallyldiméthylammonium, le chlorure de diallyldiéthylammonium, une forme saline d'un N-alkyl-N'-vinylimidazolium, une forme saline d'un vinylpyridinium N-alkylé, une forme saline d'un acrylamidoalkyltrialkylammonium ou une forme saline d'un méthacrylamidoalkyltrialkylammonium, et de préférence le chlorure de diallyldiméthylammonium.

6. Procédé selon l'une quelconque des revendications 1 à 5, dans lequel le monomère (iii) est un acide mono- ou dicarboxylique en C₃ à C₈ monoéthyléniquement insaturé, l'acide acrylamido-2-méthyl-propanesulfonique ou ses formes salines, de préférence l'acide acrylique, l'acide méthacrylique, l'acide acrylamido-2-méthyl-propanesulfonique ou ses formes salines, et de manière particulièrement préférée l'acide acrylique ou l'acide méthacrylique ou son sel de sodium ou son sel de potassium.

7. Procédé selon l'une quelconque des revendications 1 à 6, dans lequel le monomère (iv) est l'acrylonitrile, l'acétate de vinyle, la N-vinylpyrrolidone ou le N-vinylimidazole.

8. Procédé selon l'une quelconque des revendications 1 à 7, dans lequel le polymère P est amphotéricationnel.

9. Procédé selon l'une quelconque des revendications 1 à 8, dans lequel, à l'étape (C), la déshydratation comprend les étapes de
(C-1) déshydratation de la structure humide du papier par pressage, ce qui permet d'obtenir une feuille de papier humide,
(C-2) déshydratation de la feuille de papier humide par apport de chaleur, ce qui permet d'obtenir le papier ou le carton.

10. Procédé selon l'une quelconque des revendications 1 à 9, dans lequel la quantité de polymère P ajoutée est de 0,01 à 6,0 % en poids par rapport à la teneur en matière sèche de la première suspension aqueuse de fibres.

11. Procédé selon l'une quelconque des revendications 1 à 10, dans lequel, dans l'étape (A), le polymère P est ajouté à une première suspension de fibres dont la teneur en matière sèche est supérieure à 1,5 % en poids et peut atteindre 6,0 % en poids, et la seconde suspension de fibres contenant le polymère P est diluée à une teneur en matière sèche comprise entre 0,1 % en poids et jusqu'à 1,5 % en poids.

12. Procédé selon l'une quelconque des revendications 1 à 11, dans lequel, à l'étape (A), un autre polymère organique, différent du polymère P, est ajouté à la première suspension de fibres ou à la seconde suspension de fibres contenant le polymère P.

13. Procédé selon l'une quelconque des revendications 1 à 12, dans lequel, à l'étape (A), une charge est ajoutée à la première suspension de fibres ou à la seconde suspension de fibres contenant le polymère P.

14. Papier ou carton pouvant être obtenu par un procédé selon l'une quelconque des revendications 1 à 13.

15. Polymère P soluble dans l'eau, qui peut être obtenu par
- polymérisation radicalaire en un polymère V de
(i) 33 à 83 % en moles d'un monomère de la formule I dans lequel R¹ = H ou alkyle 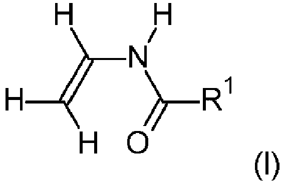 en C₁-C₆,
(ii) 6 à 56 % en moles de chlorure de diallyldiméthylammonium, de chlorure de diallyldiéthylammonium ou une forme de sel d'un monomère à insaturation monoéthylénique ayant un azote quaternisé comme seul groupe porteur de charge à un pH de 7,
(iii) 11 à 61 % en moles d'un acide carboxylique à insaturation monoéthylénique, d'un acide sulfonique à insaturation monoéthylénique ou d'un acide phosphonique à insaturation monoéthylénique, ou de leurs formes salines,
(iv) 0 à 50 % en moles d'un ou plusieurs monomères à insaturation éthylénique dérivés d'un monomère (i), (ii) et (iii) sont différents, la quantité totale de tous les monomères (i), (ii), (iii) et (iv) étant de 100 % en moles, et
- l'hydrolyse des unités polymérisées dans le polymère V des monomères de formule (I) avec formation de groupes amino ou amidine primaires pour former le polymère P, dans lequel au moins 87 % des unités polymérisées dans le polymère V des monomères de la formule (I) sont hydrolysés par rapport au nombre de toutes les unités polymérisées dans le polymère V des monomères de la formule I.
